# EUROPEAN PATENT SPECIFICATION

(11) **EP 0 398 620 B1**
(45) Date of publication and mention of the grant of the patent: **17.04.1996**
(21) Application number: 90305187.8
(22) Date of filing: 15.05.1990
(51) Int. Cl.: C09B 47/04, C08K 5/3415, C08K 5/42

(54) **Poly(oxyalkylene) modified phthalocyanine colorants**
Poly(oxyalkylen)-modifizierte Phthalocyaninfarbstoffe
Colorants de phtalocyanine modifiés par des poly(oxyalkylènes)

(30) Priority: 19.05.1989 US 354184; 26.06.1989 US 371477; 18.09.1989 US 408357
(43) Date of publication of application: 22.11.1990
(73) Proprietor: MILLIKEN RESEARCH CORPORATION, Spartanburg South Carolina 29304 (US)
(72) Inventor: Kluger, Edward William, Pauline, South Carolina 29374 (US); Rekers, John William, Spartanburg, South Carolina 29301 (US); Moody, David Jesse, Spartanburg, South Carolina 29301 (US); Weaver, Max Allen, Kingsport, Tennessee 37664 (US)
(74) Representative: Pacitti, Pierpaolo A.M.E.

(56) References cited:
- EP-A- 0 173 476
- GB-A- 1 477 396
- US-A- 3 287 470
- US-A- 4 518 435
- US-A- 4 758 243
- JP 63/264674 (English translation)
- JP 166880 (English translation)

## Description

This invention concerns new colorant compositions, their manufacture and their uses, and particularly concerns such compositions for the tinting or deeper coloring of natural and synthetic polymeric or resinous materials or substrates, especially polyurethanes and other thermosetting resins and polyolefins, wherein the chemical structures of the colorants are readily tailored to meet, in exceptional manner, the physical and chemical requirements of the specific industrial application.

Some of the desired physical and chemical characteristics of such colorants in addition to having at least substantial tinctorial power, include one or more of excellent clarity and light fastness, high heat stability, crystal structure and shade immutability, availability as liquids or at least good resin compatibility at processing temperatures for easy blending with the substrate, easy clean-up from processing, homogeneity of dispersal in the substrate, non-nucleating propensity of the colorant, and resistance to migration, settling, streaking, plating, subliming, blooming and the like of the colorant from the substrate.

Other desirable colorant properties and also other problems often encountered with the use of pigment material are discussed in U.S. Patent 4,284,729 the disclosure of which is incorporated herein by reference. In that patent which is principally concerned with coloring thermosetting or cross linkable resins, it is disclosed that conventional organic dyes can be modified with poly(oxyalkylene) constituents which carry reactive groups for entering the colorant into the polymer chain, e.g., by condensation. This technique is indicated as providing a mechanism whereby highly efficient (high tinctorial power) conventional organic dyes can readily be incorporated, chemically, into the resin molecule such that the dyes become essentially non migratory. Similarly, in U.S. Patent 4,640,690, it is taught to color thermoplastic resins with compounds which contain conventional types of organic dyes such as azo, anthraquinone, triarylmethane and methine, linked directly to a poly(oxyalkylene) moiety through a nitrogen, oxygen or sulfur atom or a carboxyl group.

It is noted that in these patents the methods for associating the poly(oxyalkylene) moieties with the chromophore are specific to the reactants. For example, in the preparation of azo containing colorants an aromatic amine is reacted with an alkylene oxide under basic conditions. Similarly, where the poly(oxyalkylene) is attached directly to an anthraquinone nucleus the method comprises reacting a hydroxy substituted anthraquinone with an amino group on a poly(oxyalkylene). Neither of these nor similar methods are useful in the present invention.

It has been found, moreover, that the use of such conventional organic dye moieties in thermosetting substrates limits the utility of the product in, e.g., high temperature applications for which the substrate material may actually have been designed. This results from the inherent instability of the conventional organic dye moiety at the higher use or processing temperatures of the product substrate.

Also noted here are the copper phthalocyanine (CuPc) compounds of U.S. 4,634,555 which are solids in contrast to the great majority of the compounds of the present invention. The liquid colorants of the present invention are quite easily blended uniformly with a variety of thermoplastic or thermosetting resins. In contrast, the solid prior art CuPc compositions need to be converted into fine particles and then blended in conventional equipment which necessarily is time consuming and operator intensive, and incurs homogeneity problems, substantial power requirements, and great difficulty in handling and equipment clean-up.

GB-A-1477396 (Ciba-Geigy) discloses certain new watersoluble dyes or optical brighteners which are of utility in dyeing or brightening organic materials, in particular textiles (see page 17, line 45 to page 18, line 10). The dyes disclosed contain a (poly)alkylene glycol group such as a polyoxyethylene or polyoxypropylene group. However the only teaching of metal-containing phthalocyanine dyes concerns compounds in which the polyoxyalkylene group is simply terminated by a hydrogen atom, so that the terminal group is -R-OH. There is no suggestion that the terminal groups found to be useful in the present invention would be at all suitable for modification of dye substances.

JP 63/264674 (Tokyo Ink) discloses an additive compound for admixture into pigments to prevent aggregation of the pigments when in aqueous solution is disclosed. The additive compound comprises up to four (poly)oxyalkylene chains. Again the (poly)oxyalkylene chains disclosed all simply terminate with a hydrogen atom, ie. in a group -R-OH. There is no disclosure of such groups terminating in other moieties such as, for example, alkyl or aryl groups. In amended Claim 1 the non-hydrogen termination group of at least one (poly)oxyalkylene chain is specifically recited. JP 166880 (Canon) is concerned with a stable ink jet recording system where the pigment is stabilised by addition of a separate compound containing (poly)oxyethylene groups. There is no disclosure of the pigment itself being so modified. In addition, all of the (poly)oxyethylene groups terminate in a hydrogen moiety, ie. in a group -R-OH.

In US-A-3287470 (Pugin) metallo-phthalocyanine dyes are modifed by addition of four chains comprising two or three oxyethylene and/or oxypropylene groups. Each chain is terminated by an alkyl group. in the present invention each group Y contains more than 3 -RO- groups per colorant molecule. This clearly distinguishes over the compounds specifically exemplified in US-A-3287470 which have, at maximum, a total of 12 such groups. There is no teaching in US-A-3287470 which would lead the skilled man to appreciate the advantage of longer (poly)oxyalkylene groupings to reduce the steric hindrance problems associated with the reaction between multiple HN(R₂) groups and -SO₂X groups on the same dye chromophore.

Objects, therefore, of the present invention are to provide colorants, the physical and chemical properties of which are readily modifiable to adapt them for blending or incorporation into various polymeric substrates, especially in thermosetting resin materials, wherein the colorants exhibit one or more of the aforementioned characteristics of substantial tinctorial power, light fastness, excellent clarity, high heat stability, crystal structure and shade immutability, availability as liquids for easy blending with the substrate; to give essentially complete homogeneity of colorant, easy clean-up from processing, non-nucleating propensity, and resistance to migration, settling, streaking, plating, subliming and blooming of the colorant from the substrate; to provide compositions comprising polymeric substrates, especially polyurethane foams, tinted or deeper colored with the present colorants; and to provide a highly efficient and non-complex process for the manufacture of the present colorants.

These and other objects hereinafter becoming evident have been attained in accordance with the present invention in which the colorant has a formula selected from, 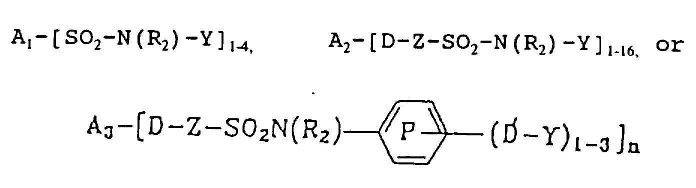 wherein R₂ is selected from H or unsubstituted or substituted alkyl, cycloalkyl, aryl or Y; A₁, A₂, and A₃ are each a nonionic metallophthalocyanine chromophore which can be substituted or 2unsubstituted; Z is an arylene moiety; each D or D' is selected from a covalent bond or a linking group consisting of or containing at least one of -O-, -S-, -N(R₃)-, or -N(SO₂R₄)- as the linking moiety, wherein R₄ is unsubstituted or substituted alkyl, cycloaliphatic or aryl, and R₃ is R₄ or hydrogen; or D in combination with Z can also be a covalent bond; ring P can be unsubstituted or 2substituted in addition to the -(D'-Y) moieties; Y is a poly(oxyalkylene) moiety having an average molecular weight of from about 150 to about 10,000 and comprised of at least about 50 mole percent of monomeric units or mixture thereof of the formula (-RO-) wherein each R is substituted or unsubstituted straight or branched alkylene of 2-4 carbons or mixtures thereof, and containing more than three -RO- units, at least one group Y terminating in a group selected from alkyl, aryl, acyl, alkoxyalkyl, acyloxyalkyl and 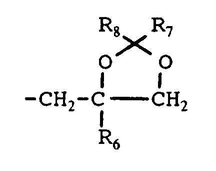 wherein each of groups R₆, R₇ and R₈ may independently be a hydrogen atom or an alkyl or aryl group and wherein each aliphatic hydrocarbon portion or moiety of the groups, moieties or substituents recited above contains from 1-20 carbons, and wherein n is 1-16, except that when -D-Z- is a covalent bond n is 1 to 4.

In certain preferred embodiments:
(a) A₁ is a nonionic metallophthalocyanine chromophore which can be substituted with 1-8 substitutents selected from halogen, alkyl, alkoxy, alkylthio, or aryloxy; Y is a poly(oxyalkylene) moiety comprised of more than three numeric units or mixture thereof of the formula (-RO-) wherein, each R is straight or branched alkylene of 2-4 carbons or mixtures thereof, up to about 20 mole percent of said monomeric units may be connected by one or more linking groups selected from alkyleneoxy, aryleneoxy, alkylenedioxy, alkylenetrioxy, -N(R₃)-, or -N(R₂)CON(R₂)-, wherein each R₃ is selected from R₂ or -SO₂-A₁, and wherein Y can be terminated by or contain as branch substituents, 1-3 groups or moieties selected from alkyl, cycloalkyl, acyl, or aryl; wherein any of the above recited hydrocarbon groups, moieties or substituents may themselves be substituted, for example, with up to four substituents selected from alkyl, halogen, mercapto, alkylthio, arylthio, aryl, cycloalkyl, alkoxycarbonyl, hydroxy, alkoxy, alkylenedioxy, -N(R₂)CO(R₂)(R₂), -N(R₂) (R₂), -N(R₂)SO₂-A₁,-N(R₂)acyl or acyloxy substituents which are known in the art; and wherein each aliphatic hydrocarbon portion or moiety of the groups, moieties or substituents recited above contains from 1-12, preferably 1-4 carbons;
(b) A₂ is a nonionic metallophthalocyanine chromophore which can be substituted with 1-12 substitutents selected from halogen, alkyl, alkoxy, alkylthio, or aryloxy, or one to four -SO₂N(R₂)-Y; Y is a poly(oxyalkylene) moiety comprised of more than three monomeric units or mixture thereof of the formula (-RO-) wherein, each R is straight or branched alkylene of 2-4 carbons or mixtures thereof, up to about 20 mole percent of said monomeric units may be connected by one or more linking groups selected from alkyleneoxy, aryleneoxy, alkylenediaxy, alkylenetrioxy, -N(R₅)- , or -N(R₂)CON(R₂)-, wherein each R₅ is selected from R₂ or -SO₂-A₂, and wherein Y can be terminated by or contain as branch substituents, 1-3 groups or moieties selected from alkyl, cycloalkyl, acyl, or aryl; wherein any of the above recited hydrocarbon groups, moieties or substituents may themselves be substituted, for example, may contain up to four substituents selected from alkyl, halogen, alkoxycarbonyl, hydroxy, alkoxy, alkylenedioxy, aryloxy, alkoxyalkyl, aryloxyalkyl, mercapto, alkylthio, arylthio, -N(R₂)CO(R₂)(R₂), -N(R₂)(R₂), -N(R₂)SO₂-A₂, -N(R₂)-acyl, -CON(R₂)(R₂), acyloxy or the like substituents which are known in the art; and wherein each aliphatic hydrocarbon portion or moiety of the groups, moieties or substituents recited above contains from 1-20, preferably 1-12 carbons;
(c) A₃ is a nonionic metallophthalocyanine chromophore which can be substituted with 1-12 substitutents selected from halogen, alkyl, alkoxy, alkylthio, or aryloxy; Y is a poly(oxyalkylene) moiety comprised of more than three monomeric units or mixture thereof of the formula (-RO-) wherein, each R is straight or branched alkylene of 2-4 carbons or mixtures thereof, up to about 20 mole percent of said monomeric units may be connected by one or more linking groups selected from alkyleneoxy, aryleneoxy, alkylenedioxy, alkylenetrioxy, -N(R₅)-, or -N(R₂)CON(R₂)-, wherein each R₅ is selected from R₂ or SO₂-A₃, and wherein Y can be terminated by or contain as branch substituents, 1-3 groups or moieties selected from alkyl, cycloalkyl, acyl, or aryl; wherein any of the above recited hydrocarbon groups, moieties or substituents may themselves be substituted, for example, may contain up to four substituents selected from alkyl, aryl, aryloxy, alkoxyalkyl, aryloxyalkyl, halogen, alkoxycarbonyl, hydroxy, alkoxy, alkylenedioxy, -CON(R₂)(R₂), -N(R₂)CON(R₂)(R₂)-, -N(R₂)(R₂), -N(R₂)SO₂-A₃, -N(R₂)acyl, acyloxy or the like substituents which are known in the art; and wherein each aliphatic hydrocarbon portion or moiety of the groups, moieties or substituents recited above contains from 1-12 carbons;
(d) Y has an average molecular weight of from about 200 to about 1500;
(e) each of the chromophores A₁, A₂, or A₃ is unsubstituted;
(f) Y is terminated with a group selected from alkyl, aryl, acyl, alkoxyalkyl, acyloxyalkyl, or a group of the formula 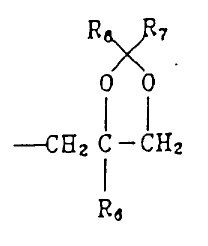 wherein each of R₆, R₇ and R₈ is selected from hydrogen, alkyl, or aryl;
(g) the total mole percentage of all -(RO)- unit linking groups relative to all said units in Y is from zero to about 20 percent;
(h) R₂ is hydrogen or Y;
(i) R is -CH₂CH₂-, -CH(CH₃)CH₂-, -CH(C₂H₅)CH₂- or mixtures thereof;
(j) the chromophore is an unsubstituted phthalocyanine complexed with of Cu, Ni, or Al;
(k) the polymeric or resinous material composition contains from about 0.001 to about 10.0 weight percent of one or a mixture of any of the colorants as defined above;
(l) the material is thermoplastic;
(m) the material is polyurethane;
(n) -D-Z- is selected from -O-arylene-, -S-arylene, -SO₂-arylene-, -N(R₃)-arylene-, -N(SO₂R₄)-arylene-, or -O-alkylene-O-arylene- or a covalent bond;
(o) the process for preparing the colorant comprising reacting at a temperature of from about 0°C to about 100°C, a metallophthalocyanine of the formula A₁-(SO₂X)_{1-4,} with at least a stoichiometric quantity of an amine of the formula HN(R₂)Y wherein X is selected from Cl, F, Br, I, or alkoxy.
(p) the process for preparing the colorant comprising reacting at a temperature of from about 0°C to about 100°C, metallophthalocyanine of the formula; A₂-(D-Z-SO₂X)₁₋₁₆ with at least a stoichiometric quantity of an amine of the formula; HN(R₂)Y wherein X is selected from Cl, F, Br, I, or alkoxy; and
(q) the process for preparing the colorant comprising reacting at a temperature of from about 0°C to about 100°C, a metallophthalocyanine of the formula A₃-(D-Z-SO₂X)₁₋₁₆ with at least a stoichiometric quantity of an amine of the formula 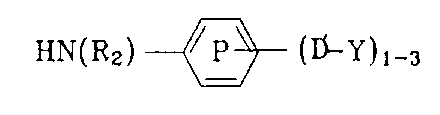 wherein X is selected from Cl, F, Br, I, or alkoxy. Preferred reaction media for each of (o), (p), and (q) include water, alcohols or ethers containing acid acceptors such as alkali metal carbonates, hydroxide or tertiary amines. Other more specific and preferred process embodiments will hereinafter become evident.

With reference to (o) above, the phthalocyanine chromophore can be provided with one to four -SO₂X groups, each of which can be reacted with a reactive amine group HN(R₂)- which can be on the same or different ones of the poly(oxyalkylene) moieties Y. In this regard it is noted that where the Y moiety is large, steric hinderance is less likely to interfere with the reaction of multiple HN(R₂)-groups spaced thereon with multiple SO₂X groups on the same phthalocyanine chromophore.

With reference to (p) and (q) above, the phthalocyanine chromophore can be provided with one to sixteen -D-Z-SO₂X groups, each of which can be reacted with the reactive amine group HN(R₂)- which can be chemically associated with the same or different ones of poly(oxyalkylene) moieties Y. In this regard it is noted that where the Y moiety is large, steric hinderance is less likely to interfere with the reaction of multiple HN(R₂)-groups spaced thereon with multiple -SO₂X groups on the same phthalocyanine chromophore. In the above processes of (o), (p), and (q), preferred reaction media include water, ketones, alcohols or ethers containing acid acceptors such as alkali metal carbonates, hydroxides or tertiary amines. The arylene moiety Z includes mono- and multi-cyclic aromatic hydrocarbon moieties such as unsubstituted or substituted benzene, naphthalene, anthracene, and biphenyl; of various heterocyclic moieties, unsubstituted or substituted, such as that of thiophene, benzothiazole, benzoxazole,thiadiazole, or quinoline, and various combinations of such carbocyclic and heterocyclic moieties. Specific ones of such Z moieties are given in the tables below. The linking group D preferably is selected from O, S, -O-alkylene-cycloalkylenealkylene-Q-, -O-alkylene-Q-, -O-cycloalkylene-Q-, or -O-alkylene-arylene-alkylene-O- wherein Q is selected from -O-, -S-, -SO₂, N(R₃)-, or N(SO₂R₄)-.

Thermoplastic resins which may be used according to the present invention include a wide range of synthetic resins and synthetic resin compositions which are known in the art as being essentially thermoplastic in nature. The term "thermoplastic" is used herein in its conventional sense to mean a resin "having the property of softening or fusing when heated and of hardening again when cooled" (see Webster's Seventh Collegiate Dictionary, G & C Merriam Co., 1965). Thermoplastic resins are to be clearly distinguished both in terms of their essential physical and chemical characteristics from thermosetting resins. The term "thermosetting" used herein is also used in its conventional sense to means a resin "having the property of becoming permanently rigid when heated or cured.

Examples of thermoplastic resin systems which may be employed include a wide range of polyolefin polymers, e.g., polyethylene, linear low density polyethylene, polyproplene, polybutylene and copolymers made from ethylene, propylene and/or butylene. Other thermoplastic polymers which may be employed according to the present invention include polyvinyl chloride, polyvinylidene chloride, cellulosic resins such as cellulose acetate, cellulose acetate butyrate and cellulose acetate propionate, acrylic resins such as polymethyl methacrylate, styrene acrylonitrile, polystyrene, polycarbonate and acrylonitrile butadiene-styrene (therein ABS), polyamides such as nylon 6 and nylon 66 and polyesters such as polyethylene terephthalate, especially glycol modified polyethylene terephthalate and polybutylene terephthalate.

As mentioned above, the colorants may be employed in the thermoplastic resins in a minor amount sufficient to provide the desired degree of coloration in the resin. The actual amount used will, in addition to the desired depth of shade, depend upon the tinctorial strength of the chromophore used and the overall molecular weight of the colorant, e.g., chromophore plus poly(oxyalkylene) chain length. Typically the amount of colorant employed may be from about 0.0001 percent to about 10 percent, preferably from about 0.001 Percent to about 3 percent, and most preferably from about 0.1 to about 1.0 percent by weight based upon the overall weight of the resin composition.

Other conventional additives may also be present in the resin compositions of the present invention. For instance, such additives may include plasticizers, antioxidants, stabilizers, lubricants, flame retardants, nucleating agents and other additives which will be readily identified by those skilled in the art. In general, the colorants have been observed to have little or no adverse interactions with these conventional additives.

Because the colorants if used properly ordinarily do not detract from the clarity of the resin, it has been found that additives which improve the clarity of such resins may be particularly desirable for use in combination with colorants as described herein to provide resin products that are both colored and which also have excellent clarity. One particular class of additives which have been found to be useful in this regard are the benzylidene sorbitols including substituted benzylidene sorbitols such as those described in U.S. Pat. No. 4,018,118 to Hamada, et al. (E.C. Chemical); U.S. Pat. No. 4,371,645 to Mahaffey (Milliken Research Corporation); and Japanese Pat. No. SHO [1977] 53-117044 to Kobsyashi, et al. (New Japan Chemical).

The particular shade of the colorant will depend primarily upon the particular chromophore group selected. A large variety of colors and shades may be obtained by blending two or more colorants. Blending the colorants of the present invention can be readily accomplished as the colorants are polymeric materials which may have substantially identical solubility characteristics, which are dictated by the nature of the polymeric chain. Therefore, the colorants are in general soluble in one another, and are also in general completely compatible with each other.

According to the process of the invention, the colorant may be incorporated into the thermoplastic resin using conventional techniques such as those employed to incorporate other additives in such resins. For instance, the colorant may be incorporated into the resin by simply adding it to the resin while the resin is in a plasticized or molten state, typically prior to formation of the polymer into its final shape, e.g., by molding, extrusion or blow-molding. For instance when the thermoplastic resin to be colored is a polyolefin resin the process may be carried out by adding a colorant comprised of a poly(oxyalkylene) substituted chromophore group directly to the molten polymer, by tumbling it onto a pre-extruded pelletized resin, or by mixing it into the resin powder prior to extrusion. The polymer may then be molded or extruded in the usual manner, i.e., in the same way as for polyolefin resins which are not colored. Details about these procedures may be found in the relevant literature.

Alternatively, a concentrate of the colorant in an appropriate resin or vehicle may first be prepared. Such concentrate may contain an appropriately high percentage of colorant. The concentrates may be in the form of liquids, solids, e.g., powders or pellets, as may be desired. These concentrates may then be incorporated into the thermoplastic resin as is well understood in the art.

The colorants used in the process and in the composition of the present invention are polymeric colorants which may according to one embodiment be in the liquid phase. Thus, if in the liquid phase, they may be added to the thermoplastic polymer melt in solvent-free form rather than in the form of solutions or dispersions in a suitable solvent or dispersing medium. Obviously, liquids may have certain processing advantages over solids, and moreover liquids may, if desired, be added directly to the molten polymer and therefore contain no extraneous solvent or dispersing agents. This process may, therefore, provide unusual and advantageous properties in the final thermoplastic resin product. Alternatively, however, the colorants may be premixed with minor amounts of a solvent or dispersing agent which is compatible with the resin, thus providing certain processing advantages.

According to the process of the invention, the liquid colorant may be incorporated into the thermosetting resins by simply adding it to the reaction mixture or to one of the components of the reaction mixture before or during the poly addition reaction. For instance, when the thermosetting resin to be colored is a polyurethane resin the process may be carried out by adding the coloring agent in the form of a liquid to the polyol or even in some instances to the polyisocyanate component of the reaction mixture with before or during polyurethane formation. The subsequent reaction may be carried out in the usual manner, i.e., in the same way as for polyurethane resins which are not colored. Details about this procedure may be found in the relevant literature.

The present coloring agents of one embodiment of the present invention are polymeric, liquid, reactive coloring agents. Thus, they may be added to the reaction mixture or to one of the components thereof in solvent-free form rather than in the form of solutions or dispersions in suitable solvent or dispersing medium. Obviously liquids have significant processing advantages over solids, and moreover liquids of the present invention may, if desired, be added directly to the reaction mixture and therefore contain no extraneous nonreactive solvent or dispersing agent. This process may, therefore, provide unusual and advantageous properties in the final thermoset resin product. Alternatively, however, the coloring agent may be premixed with minor amounts of one or more of the precursors of the polymeric product, thus providing certain processing advantages.

The thermosetting resins to which the process of the present invention may be applied may be made by the reaction of a nucleophile with an electrophile. Examples of such resins include alkyds, allylics, the amines, e.g., melamine and urea, epoxies, phenolics, polyesters, silicones and urethanes. The thermosetting resin colored according to the present invention can be used in a variety of different end uses, e.g., as moldings, sealants, elastomers, films, fibers, lacquers, coating and foamed materials. It has been found in particular that the present colorants may quite advantageously be employed for the production of foams, such as polyurethane foams which may be soft, semi-rigid or rigid foams, or the so-called polyurethane integral skin and microcellular foams. Such foams are useful for producing shaped products by injection molding, extrusion or calendaring and may be obtained by adding the liquid coloring agent to the polyol or diol component of the reaction mixture, or to one of the other components, although addition to the polyol component is preferred. The polyols may be polyesters which contain hydroxyl groups, in particular reaction products of dihydric alcohols and dibasic carboxylic acids, or polyethers which contain hydroxyl groups, in particular products of the addition of ethylene oxide, propylene oxide, styrene oxide or epichlorohydrin to water, alcohols or amines, preferably dialcohols. The colorant may also be admixed with chain extending diols, e.g., ethylene glycol, diethylene glycol and butane diol. In general, it is desirable not to use more than about 20 percent by weight of colorant based on the weight of polyol. In most cases very strong colorations are produced with a small proportion of the colorant, for example, from about 0.1 to about 2 percent, preferably 0.5 to 1 percent by weight colorant based on the weight of polyol.

Because the present colorants are, in themselves, polymeric compounds, they may be soluble, for instance, in most polyols which would be used in polyurethane manufacture, in most epoxy formulations, in polyester formulations and themselves in admixtures. This property may be particularly valuable in that this solubility may permit rapid mixing and homogeneous distribution throughout the resin, thus eliminating shading differences and streaks when properly mixed, the colorant may have no tendency to settle as would be the case with pigment dispersions, and it is possible to prepare a blend of two or more colorants which provides a wide range of color availability. The present liquid reactive coloring agents may also be of considerable value in reaction injection molding (RIM) applications. The RIM process is a method of producing molded polyurethanes and other polymers wherein the two reactive streams are mixed while being poured into a mold. Upon reaction, the polymer is "blown" by chemicals to produce a foam structure. This process may be hindered by the presence of solid particles, such as conventional pigments. The present invention may not cause this hindrance because there are no particles in the system and the colorant becomes part of the polymer through reaction with one of the components.

General methods for preparing the colorants wherein each A is an unsubstituted or substituted phthalocyanine moiety include the following three routes:

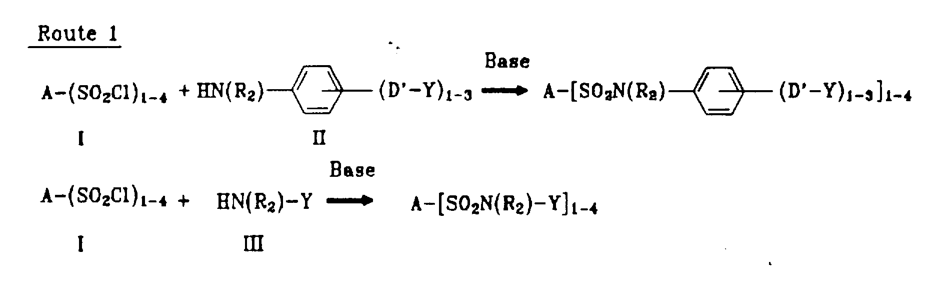

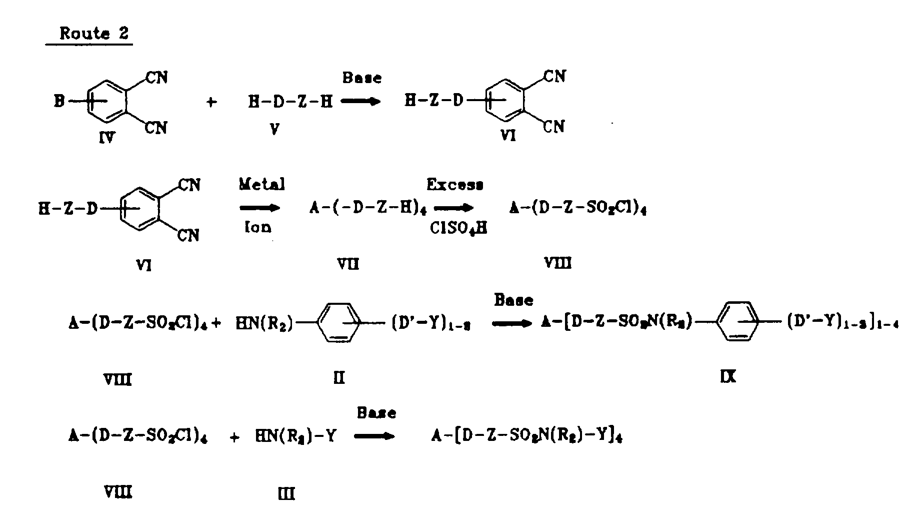

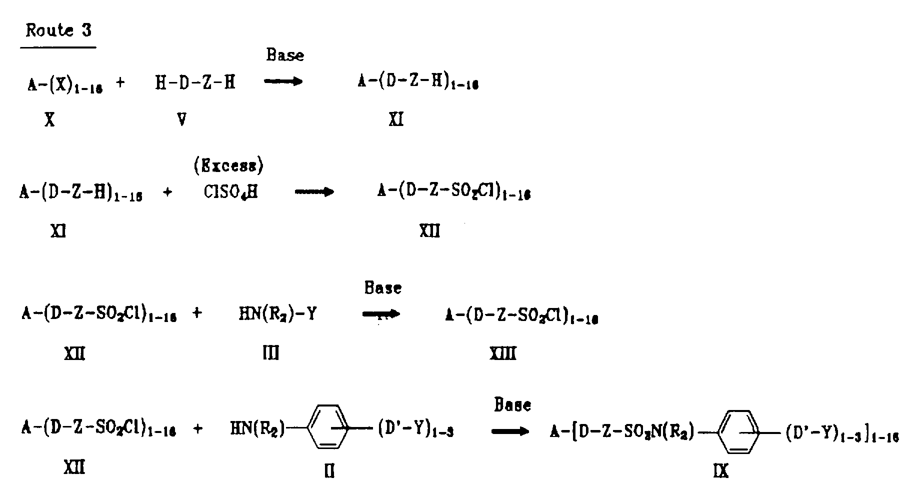

Route 1 involves the condensation of metallophthalocyanine sulfonyl chloride (I) with at least a stoichiometric quantity of poly(oxyalkylene) containing amines (II) or (III) in the presence of an inorganic base at a temperature of from about 0°C to about 100°C to give the desired phthalocyanine containing polyalkyleneoxy moiety Y. Reaction media include water, alcohols or ethers containing acid acceptors such as alkali metal carbonates, hydroxides or tertiary amines.

Route 2 involves the reaction of a phthalonitrile moiety containing a leaving group B(IV), such as nitro or halogen, with a nucleophile (V)[A.W.Snow & J.R.Griffth, Marcomolecules, 17(1614-1624)]. This reaction is preferably carried out in polar high-boiling solvents such as N,N-dimethylformamide and N-mexhyl-2-pyrrolidinone. Intermediates (VI) are converted into metallophthalocyanines (VII) by known techniques using metals ions. Intermediates (VII) are then chlorosulfonated using excess chlorosulfonic acid at about 0-30°C to introduce chlorosulfonyl groups into the Z ring of (VII). If chlorosulfonation is desired also on the phthalocyanine ring itself, higher temperatures may be employed. Compounds (VIII) are then reacted with amines (II) or (III) to give the desired phthalocyanine containing polyalkyleneoxy moiety Y.

Route 3 involves the reaction of a metallophthalocyanine containing 1-16 halogens (x) with nucleophile (V) to give (XI), a metallophthalocyanine moiety which contains 1 to 16 groups of the formula -D-Z-H [BASF, BP 1,537,375]. This nucleophilic displacement reaction is preferably carried out in at a high temperature in a polar high-boiling solvent such as N,N-dimethylformamide, N,N-dimethylacetamide, or N-methyl-2-pyrrolidinone. Chlorosulfonation at low temperature gives compounds (XII), which may contain a multiplicity of -D-Z-SO₂Cl groups. Compounds (X11) are then reacted with amines (II) or (III) to give the sulfonamide derivatives (IX) and (XIII), of the invention.

Obviously, many variations of the above reactions are possible. For example, in Route 2, intermediate (VI) may be mixed with unsubstituted or substituted phthalonitriles containing a wide variety of substituents such as halogen, lower alkyl, lower alkoxy, alkylthio, arylthio, etc. and the mixture treated with metal ions to give metallophthalocyanines containing a wide variety of substituents. These intermediates may be chlorosulfonated and the corresponding sulfonyl chlorides reacted with amines (II) or (III) to give highly substituted metallophthalocyanines containing the polyalkyleneoxy moiety Y.

The preferred aromatic amines (II) finding special utility in the manufacture of the preferred colorants of the present invention are prepared according to Routes 1-6.

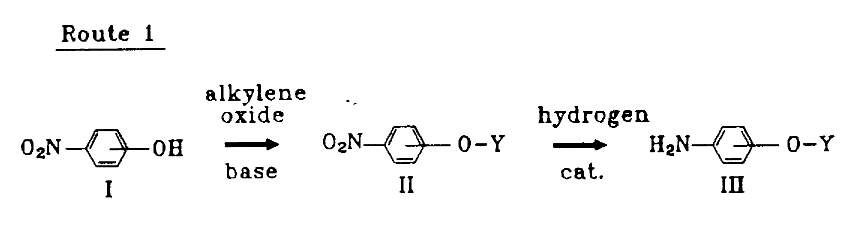

Route 1 involves the hydroxyalkylation of a nitrophenol (I) with an alkylene oxide in the presence of a base catalyst. Suitable alkylene oxides include, for example, ethylene oxide, propylene oxide, butylene oxide, and mixtures of two or more of such compounds.

The hydroxyalkylation reaction may be accomplished by the reaction of alkylene oxide at about 80-150°C. The alkylene oxide is added in the presence of an inert gas such as nitrogen until the desired amount of alkylene oxide has been absorbed. This reaction is carried out with or without solvents. If solvents are desired, toluene, xylenes, nitrobenzene, dioxane are just a few solvents that may be used.

Useful base catalysts include potassium hydroxide, lithium hydroxide, calcium hydroxide, and barium hydroxide. The amount of basic catalyst can vary but is usually in the range of from about 0.2 to about 2 percent by weight of the phenol. In addition, certain tertiary organic amines are useful catalysts, such as dimethylaminocyclohexane, triethylamine, and benzyldimethylamine. The poly(oxyalkylated) nitro intermediates (II) are converted into aromatic amines (III) by catalytic hydrogenation. Any suitable reduction catalyst may be used, for example, Raney nickel, nickel oxides, finely divided metals such as iron, cobalt, platinum, ruthenium, osmium, and rhodium. Furthermore, metal catalysts supported on pumice, asbestos, Kieselguhr, alumina, silica gel or charcoal work equally as well. The amount of catalyst can vary from about 0.025 to 15 percent by weight based on the nitro intermediate (II) used.

Reduction temperatures of from about 20°C to about 90°C are operable although temperatures of 40°C to 90°C are preferred since they usually provide faster reaction times and higher yields of the aromatic amines (III). For the reduction of the nitro intermediates (II), pressures ranging from about 3447 - 12411 kPa (about 500 to about 1800 psi) of hydrogen may be used.

The reduction reaction is usually carried out in the presence of a suitable solvent such as: lower alcohols, i.e., methyl alcohol, ethyl alcohol, and isopropyl alcohol; ethers such as dioxane; hydrocarbons such as benzene, toluene, xylenes, cyclohexanes, and petroleum ether; and mixtures of lower alcohols and water, i.e., about equal parts by weight of ethyl alcohol and water. The amount of solvent which is preferred ranges from about 30 to about 80 percent by weight of the reaction mixture weight.

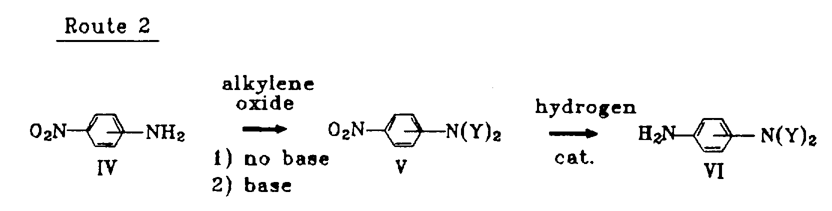

Route 2 involves the hydroxyalkylation of a nitroaniline (IV) with an alkylene oxide in a two-step procedure. The first step can be carried out in tbe presence or absence of an acid catalyst. Suitable alkylene oxides include, for example, ethylene oxide, propylene oxide, butylene oxide, cyclohexane oxide, glycidol, and mixtures of two or more of such compounds.

In the first step, hydroxyalkylation may be accomplished by the reaction of the alkylene oxide at about 80-150°C. The alkylene oxide is added in the presence of an inert gas such as nitrogen until two or more equivalents of the desired amount of alkylene oxide have been absorbed. This reaction is carried out with or without solvents. If solvents are desired, toluene, xylenes, nitrobenzene, dioxane or the like may be used. Alternatively, an acid catalyst can be employed to effect the hydroxyalkylation such as formic acid or acetic acid. Generally, acid-catalyzed hydroxyalkylation is performed at a lower temperature to avoid the formation of by-products.

Temperatures from about 40°C to about 120°C can be employed depending on the basicity of the nitroaniline (IV) to be hydroxyalkylated. The amount of acid may vary widely, i.e., from about 0.5 to 10 percent weight of nitroaniline may be employed.

In the second step, the nitropoly(oxyalkylene) intermediate (V) is prepared by the use of base catalysts such as potassium hydroxide, lithium hydroxide, calcium hydroxide, and barium hydroxide. The amount of basic catalyst can vary but is usually in the range of from about 0.2 to about 2 percent by weight of the nitro reactant. The reaction temperature can vary widely but temperatures in the range from 100°C to about 150°C are preferred.

The corresponding aromatic amines (VI) are then prepared by conversion of the poly(oxyalkylene) nitro intermediates (V) by catalytic reduction as described in Route 1 above. 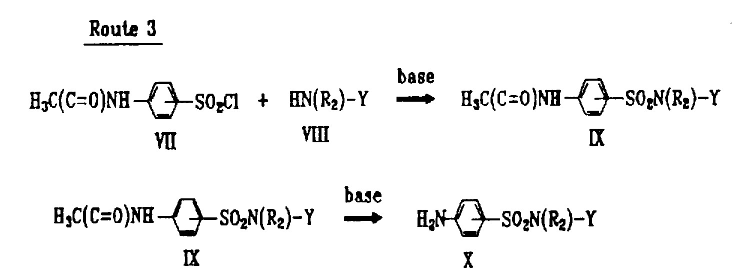 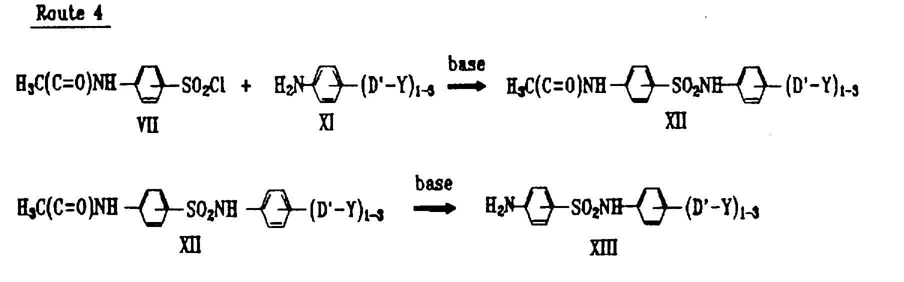 Route 3 involves the condensation of an acetamidobenzene sulfonyl chloride intermediate (VII) with at least a stoichiometric quantity of an aliphatic poly(oxyalkylene) amine (VIII) in the presence of inorganic base at a temperature of from about 0°C to about 100°C to form an acetamidopoly(oxyalkylene) intermediate (IX). Further heating at 80°C to 100°C hydrolyzes the corresponding acetamidopoly(oxyalkylene) intermediate (IX) intothe aromatic poly(oxyalkylene) amine (X).

Commercially available amines (VIII) are the JEFFAMINE series described in Texaco Chemical Company, New Product Development brochures as the M, D, ED, DU, BUD, T, MNPA, and the EDR series, the disclosures of which are incorporated herein by reference and copies of which are transmitted herewith.

Similarly, Route 4 involves the condensation of an acetamidobenzenesulfonyl chloride intermediate (VII) with at least a stoichiometric quantity of an aromatic poly(oxyalkylene) amine (XI) in the presence of inorganic base at a temperature of from about 0°C to about 100°C to form an acetamidopoly(oxyalkylene) intermediate (XII). Further heating at 80°C to 100°C under strongly basic conditions hydrolyzes the corresponding acetamidopoly(oxyalkylene) intermediate (XII) into the aromatic poly(oxyalkylene) amine (XIII). 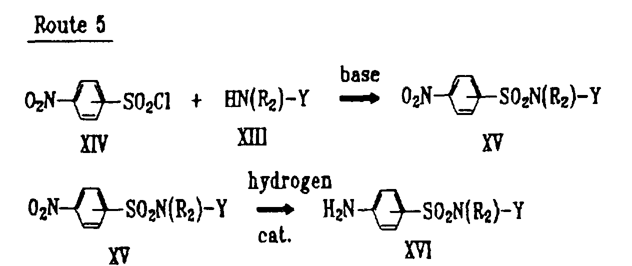 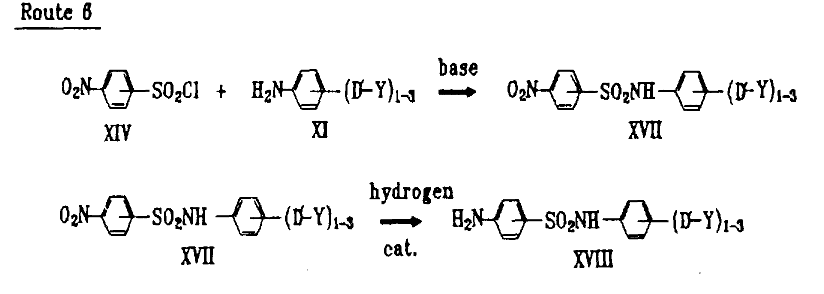 Route 5 involves the condensation of a nitrobenzenesulfonyl chloride intermediate (XIV) with at least a stoichiometric quantity of an aliphatic poly(oxyalkylene) amine (VIII) in the presence of inorganic base at a temperature of from about 0°C to about 100°C to form a nitropoly(oxyalkylene) intermediate (XV).

The corresponding aromatic amine (XVI) is then prepared by conversion of the poly(oxyalkylene) nitro intermediate (XV) by catalytic reduction as described in Route 1 above.

Route 6 involves the condensation of a nitrobenzenesulfonyl chloride intermediate (XIV) with at least a stoichiometric quantity of an aromatic poly(oxyalkylene) amine (XI) in the presence of inorganic base at a temperature of from about 0°C to about 100°C to form a nitropoly(oxyalkylene) intermediate (XVII).

The corresponding aromatic amine (XVIII) is then prepared by conversion of the poly(oxyalkylene) nitro intermediate (XVII) by catalytic reduction as described in Route 1 above.

Typical aromatic amines (II) finding special utility in the present invention are included in the following formulae: 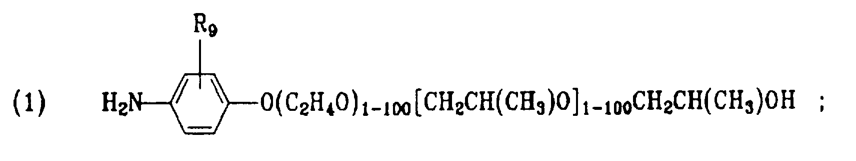 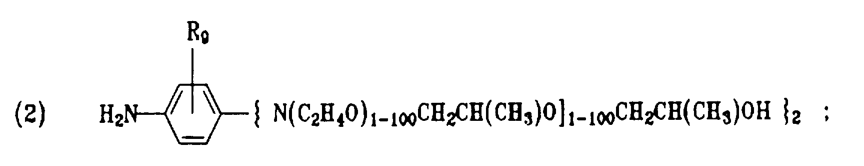 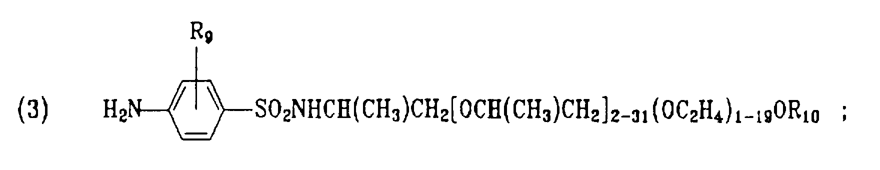 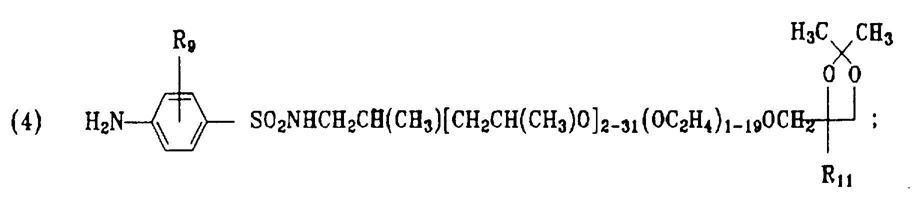 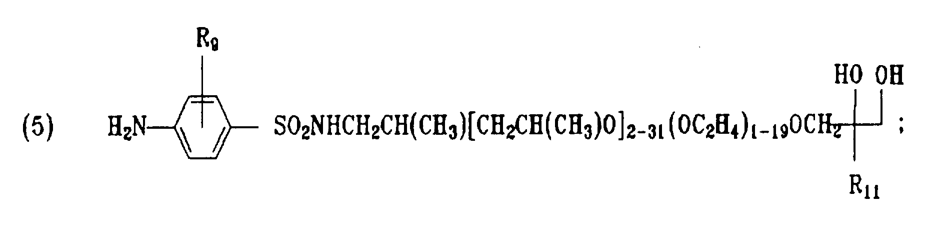 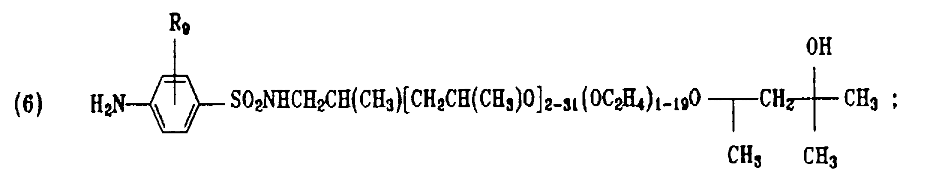 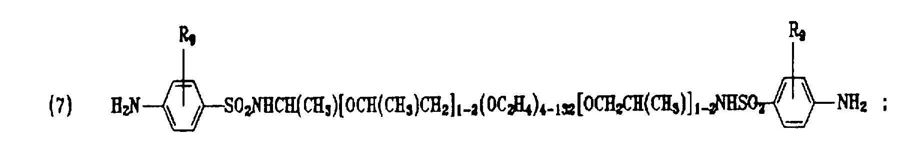 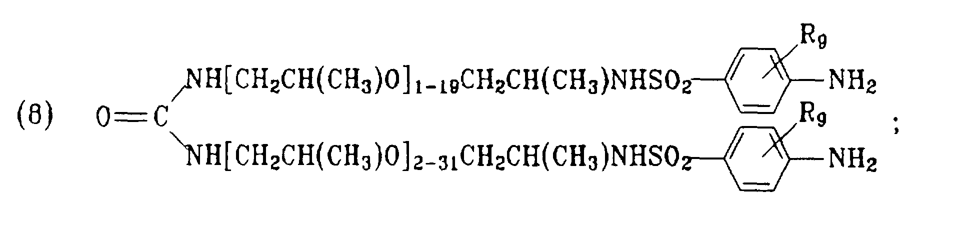 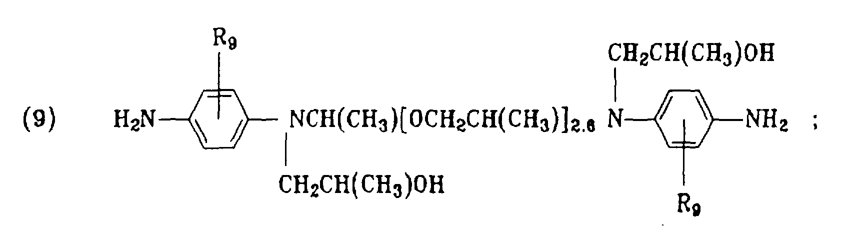 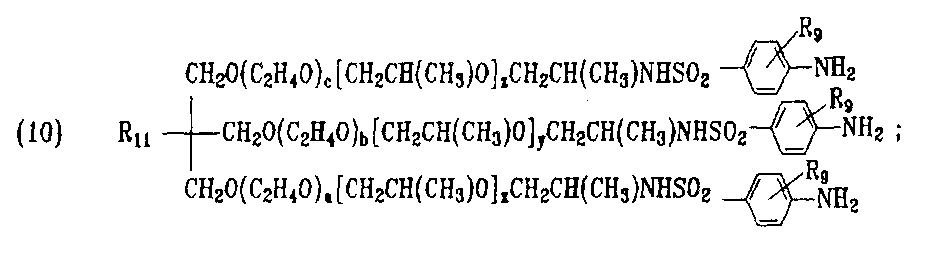 wherein of formula 10 a+b+c = 1-80 and x+y+z = 5-81;
R₉ is hydrogen or 1-3 groups selected from -CH₃, -C₂H₅, -n-C₃H₇, -iso-C₃H₇, -n-C₄H₉, -OCH₃, or -OC₂H₅;
R₁₀ is alkyl of 1-6 carbons; and
R₁₁ is hydrogen or R₁₀.

Commercially available and preferred amines (III) from which the present preferred colorants are prepared are the JEFFAMINE series described in Texaco Chemical Company, New Product Development brochures as the M, D, ED, DU, BUD, T, MNPA: and the EDR series. Typical such amines have the formulae:

(11) R₁₂-O(C₂H₄O)₁₋₁₉[CH₂CH(CH₃)O]₂₋₃₁CH₂CH(CH₃)NH₂ ;

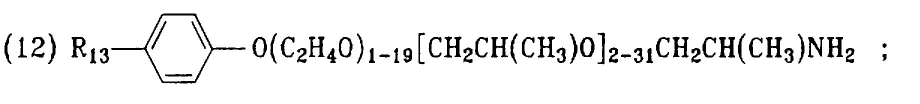

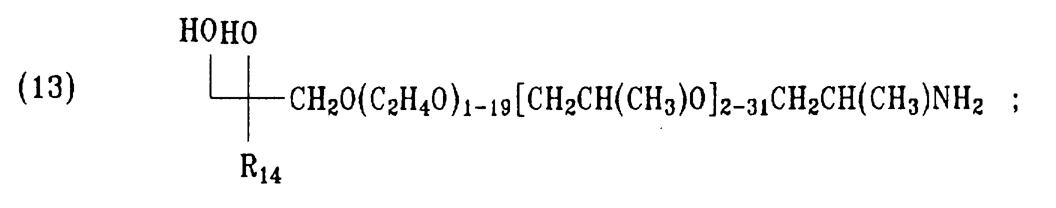

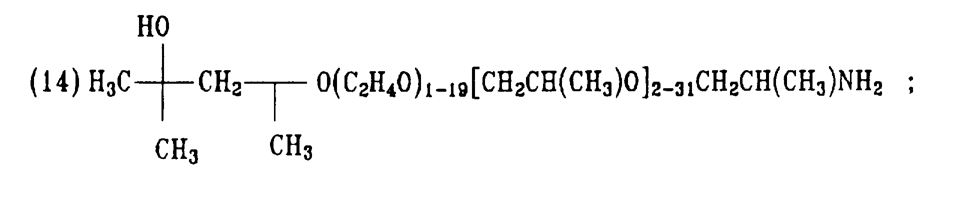

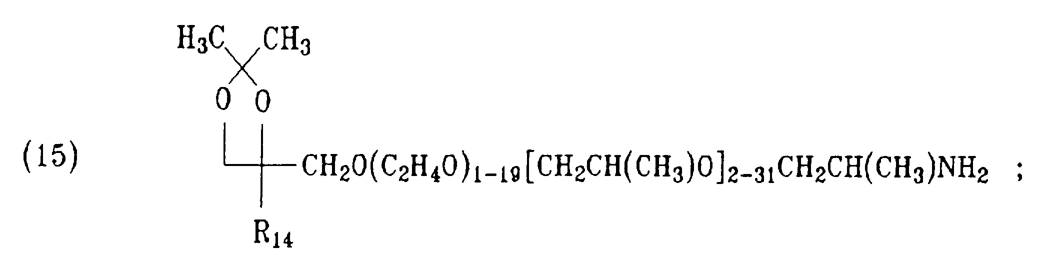

(16) H₂NCH(CH₃)CH₂[OCH(CH₃)CH₂]ₐ(OCH₂CH₂)_{b}[OCH₂CH(CH₃)]_{c}NH₂ ;

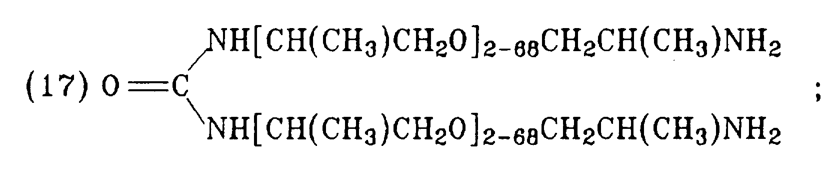

(18) HOCH(CH₃)CH₂NHCH(CH₃)CH₂[OCH₂CH(CH₃)]_{2.6}NHCH₂CH(CH₃)OH ;

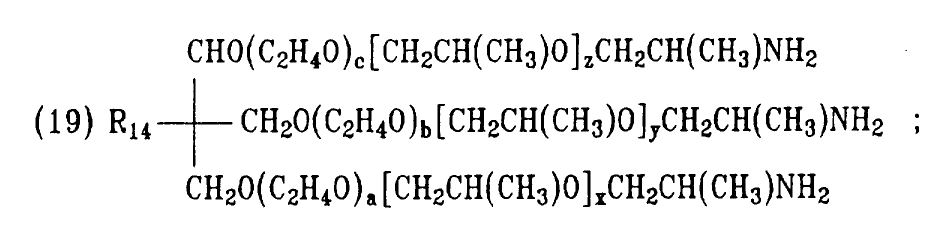

wherein: in formula (11), R₁₂ is alkyl of 1-6 carbons; in formula (12), R₁₃ is alkyl or alkoxy of 1-6 carbons; in formula (13), (15) and (19), R₁₄ is hydrogen, -CH₃, or -C₂H₅; and in formula (19), a+b+c = 1-80, and x+y+z = 5-85.

The following examples illustrate preparation of the present colorants, the parts and percentages, unless otherwise stated being by weight. The abbreviations EO, PO, BO refer to -OC₂H₄-, -OCH(CH₃)CH₂-, and -OCH(C₂H₅)CH₂-, respectively.

### COMPARATIVE EXAMPLE #1

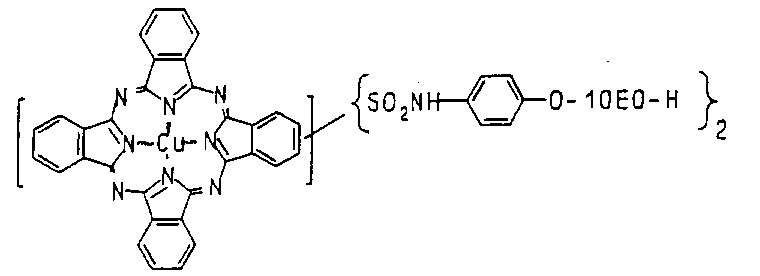

A mixture is prepared by adding 142.7 grams (0.26 mole) of an aromatic primary amine with an amine equivalent weight of 1.82 meq/g) to 31.4 grams of sodium carbonate(0.30 mole) in 250 grams of water. The mixture is stirred mechanically and cooled to 10-15°C, and 259 grams (0.105 mole) of a 33% active aqueous wet cake of freshly prepared copper phthalocyaninesulfonyl chloride derivative (containing an average of about 2 chlorosulfonyl groups per molecule) are added to the mixture over one and a half hours.After the addition is complete, the mixture is warmed to 50°C for an additional two hours to insure complete reaction. Afterwards, the mixture is cooled and the product is extracted into methylene chloride. The methylene chloride solution is separated from the salt water solution, washed several times with water to neutral pH, and dried over anhydrous magnesium sulfate. The dried methylene chloride solution is filtered and stripped under reduced pressure at 90°C to give a blue liquid with an absorbance maximum at 668 nm.

### 4-Aminophenoxypoly(oxyethylene)

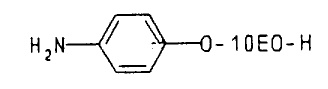

In a 2000 milliter autoclave are charged 579 grams (1 mole) of 4-nitrophenoxypoly(oxyalkylene) intermediate, 1200 milliters of ethyl alcohol and 93 grams of wet Raney nickel catalyst. The autoclave is then purged three times with hydrogen gas and heated to 85-90°C at a pressure of about 1300 psi. After about two hours the hydrogen uptake ceases. A sample is removed and vacuum stripped of solvent. The IR spectrum of this sample shows no nitro bands and the presence of an amine band indicating that the reaction is complete. The autoclave is cooled and vented. The liquid product is isolated by filtering the reaction mixture and stripping away the solvent under reduced pressure.

### 4-Nitrophenoxypoly(oxyalkylene)

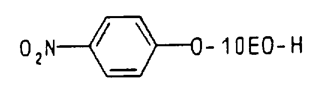

One hundred thirty grams (1 mole) of p-nitrophenol, 3 grams of potassium hydroxide catalyst, and 350 milliters of methylisobutyl ketone are charged into a two-liter pressure reactor. The mixture is stripped at 93°C for 15 minutes, then purged with nitrogen to 5 psi. The mixture is heated to 120°C and 44 grams (1 mole) ethylene oxide are added. After 90 minutes at 120°C, 396 grams (9 moles) ethylene oxide are then added to the reactor. After 5 hours hold time, the contents of the reactor are stripped of all volatiles under reduced pressure at 110°C for 45 minutes to give a liquid intermediate.

### COMPARATIVE EXAMPLE #2

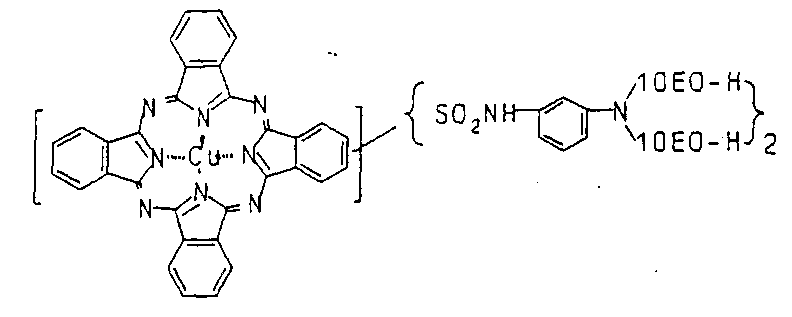

A mixture is prepared by adding 188 grams (0.19 moles) of an aromatic primary amine with an amine equivalent weight of 1.01 meq/g) to 24.0 grams (0.23 moles) sodium carbonate in 400 ml of THF. The mixture is cooled to 10-15°C and 100 grams (0.061mole) of a 50% active aqueous wet cake of freshly prepared copper phthalocyanine-sulfonyl chloride derivative (containing an average of about 2 chlorosulfonyl groups per molecule) are added to the mixture over one and a half hours. After the addition is complete, the mixture in warmed to 50°C for an additional two hours to insure complete reaction. Afterwards, the mixture is cooled and the product is extracted into methylen chloride. The corresponding methylene chloride/THF solution is separated from the salt water solution. The THF solution is allowed to evaporate in a fume hood, 300 ml of methylene chloride are added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to obtain a blue liquid with an absorbance maximum at 667 nm.

### 3-Aminoanilinopoly(oxyalkylene)

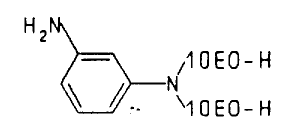

In a 2000 milliter autoclave are charged 1018 grams (1 mole) of 3-nitroanilino-poly(ozyalkylene) intermediate, 600 milliters of ethyl alcohol and 130 grams of wet Raney nickel catalyst. The autoclave is then purged three times with hydrogen gas and heated to 85-90°C at a pressure of about 8963 kPa (1300 psi). After about two hours the hydrogen uptake ceases. A sample is removed and vacuum stripped of solvent. The IR spectrum of this sample shows no nitro bands and the presence of an amine band indicating that the reaction is complete. The autoclave is cooled and vented. The liquid product is isolated by filtering the reaction mixture and stripping away the solvent under reduced pressure.

### 3-Nitroanilinopoly(oxyalkylene)

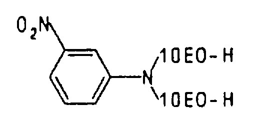

Two hundred twenty six grams (1 mole) N,N-(di-2-hydroxyethyl) -m-nitroaniline and 500 milliters of toluene are charged into a two-liter pressure reactor. The mixture is stripped at 93°C for 15 minutes, then purged with nitrogen to 5 psi. The mixture is heated to 120°C and 2 grams of potassium hydroxide catalyst are added and the reacton mixture stripped for 15 minutes. Seven hundred and ninety-two grams (18 moles) propylene oxide are added to the reactor and the mixture then heated at 121°C for 3 hours. Afterwards, the contents of the reactor are stripped of all volatiles under reduced pressure at 118°C for 45 minutes to give a liquid intermediate.

### Dihydroxyethyl-m-nitroaniline

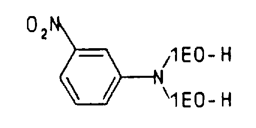

Four hundred eighty three grams (3.5 moles) of m-nitroaniline, 173 grams of acetic acid, and 578 grams of water are charged into a one-gallon pressure reactor. The mixture is purged with nitrogen to 34.5 kPa (5 psi) and heated to 35°C. Three hundred eight grams (7 moles) of ethylene oxide are added over several hours and the reaction mixture in heated overnight at 35°C. The dihydroxyethylnitroaniline intermediate is isolated by quenching the mixture in ice water. The resulting solid is reslurried several times with water and then finally with dilute base until neutral. The resulting solid product is vacuum dried at 40°C.

### EXAMPLE 1

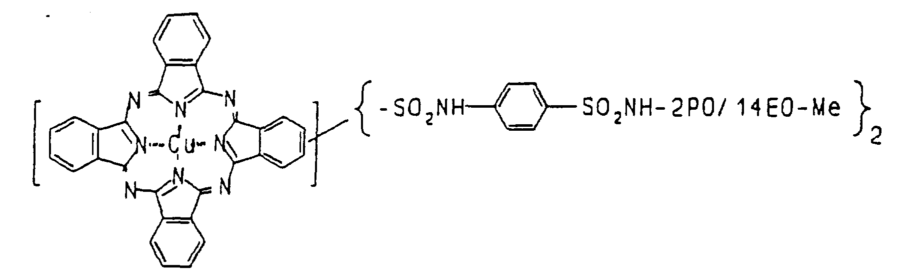

A mixture is prepared by adding 174 grams (0.19 mole) of an aromatic primary amine with an amine equivalent weight of 1.09 meq/g) to 24.0 grams (0.23 mole) sodium carbonate in 400 ml of THF. The mixture is cooled to 10-15°C and 100 grams (0.061 mole) of a 50% active aqueous wet cake of freshly prepared copper phthalocyanine-sulfonyl chloride derivative (containing an average of about 2 chlorosulfonyl groups per molecule) are added to the mixture over one and a half hours. After the addition is complete, the mixture is warmed to 50°C for an additional two hours to insure complete reaction. Afterwards, the mixture is cooled and the product is extracted into methylene chloride. The corresponding methylene chloride/THF solution is separated from the salt water solution. The THF solution is allowed to evaporate in a fume hood, 300 ml of methylene chloride are added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to a blue liquid with an absorbance maximum at 664 nm.

### 4-Anilinosulfonamidopoly(oxyalkylene)

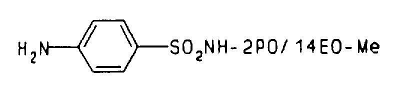

A mixture is prepared by adding 715 grams (1 mole) of a primary amine with an amine equivalent weight of 1.40 meq/g) to 122 grams (1.2 moles) sodium carbonate in 250 ml of THF. The mixture is cooled to 10-15°C and 233 grams (1 mole) of 4-acetamidobenzene sulfonyl chloride are added to the mixture over one half hour. After the addition is complete, the mixture is warmed to 30°C for an additional two hours to insure complete reaction. Forty grams (1 mole) of sodium hydroxide are added to the mixture and the mixture is heated to reflux one hour. Afterwards, the mixture was cooled and the product is extracted into methylene chloride. The corresponding methylene chloride solution is separated from the salt water solution. The methylene chloride solution is separated from the salt water solution, further washed several times with water to neutral pH, and dried over anhydrous magnesium sulfate. The dried solution is filtered and stripped under reduced pressure at 90°C to a liquid intermediate.

### EXAMPLE 2

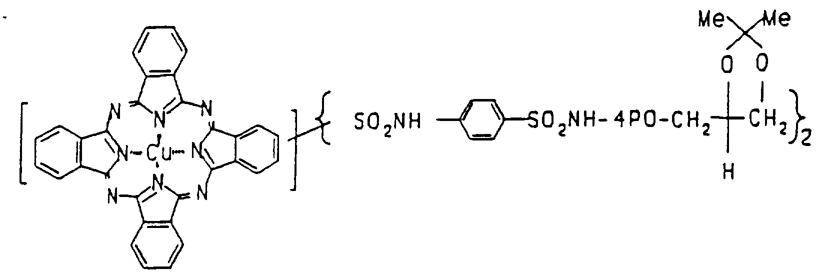

A mixture is prepared by adding 98.4 grams (0.19 mole) of an aromatic primary amine with an amine equivalent weight of 1.93 meq/g to 24.0 grams (0.23 mole) sodium carbonate in 400 ml of THF. The mixture is cooled to 10-15°C and 100 grams (0.061 mole) of a 50% active aqueous wet cake of freshly prepared copper phthalocyaninesulfonyl chloride derivative (containing an average of about 2 chlorosulfonyl groups per molecule) are added to the mixture over one and a half hours. After the addition is complete, the mixture is warmed to 50°C for an additional two hours to insure complete reaction. Afterwards, the mixture is cooled and the product is extracted into methylene chloride. The corresponding methylene chloride/THF solution is separated from the salt water solution. The THF solution is allowed to evaporate in a fume hood, 300 ml of methylene chloride are added followed by 300 ml of water. The methylene chloride solution is separated from the salt water solution, further washed several times with water to neutral pH, and dried over anhydrous magnesium sulfate The dried solution is filtered and stripped under reduced pressure at 90°C to a blue liquid with an absorbance maximum at 664 nm.

### COMPARATIVE EXAMPLE 3

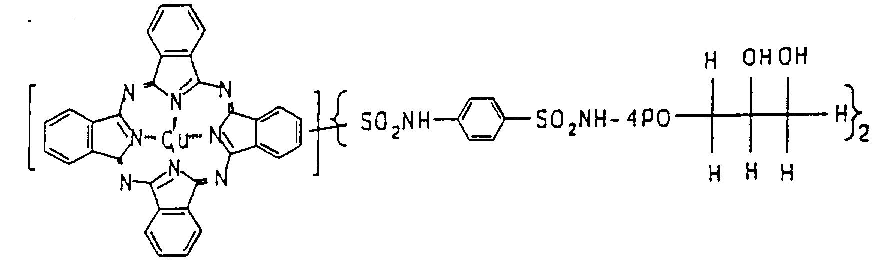

Fifty grams (0.0302 mole) of the acetal prepared in Example 11 are added along with 100 ml of water to a three necked 250 ml flask equipped with overhead stirrer, heating mantle, and Dean-Stark trap. The mixture is heated to 80°C and 2 grams of 70% sulfuric acid are added. This reaction mixture is maintained at 80°C until no more acetone can be detected overhead in the trap. The mixture is then cooled and the product is extracted into methylene chloride. The methylene chloride solution is separated, washed several times with water to neutral pH, and dried over anhydrous magnesium sulfate. The dried methylene chloride solution is filtered and stripped under reduced pressure at 90°C to give a blue product containing a hydroxyl band in the IR spectrum.

### COMPARATIVE EXAMPLE 4

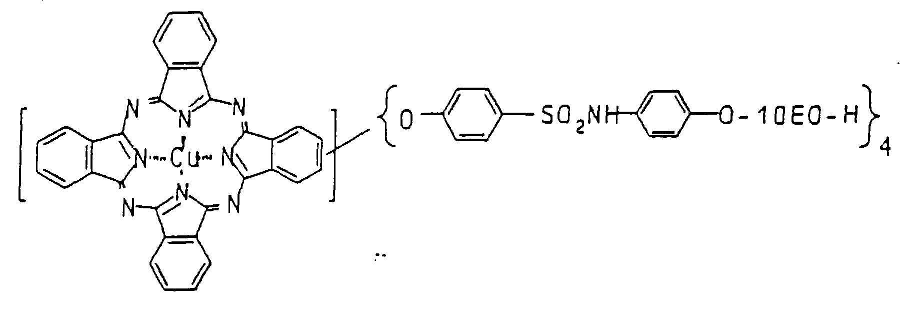

A mixture is prepared by adding 60.3 grams (0.11 mole) of an aromatic primary amine with an amine equivalent weight of 1.82 meq/g) to 25.7 grams sodium carbonate in 500 ml of water. The mixture is cooled to 10-15°C and 0.0242 mole of an aqueous wet cake of freshly prepared tetraphenoxy copper phthalocyanine sulfonyl chloride derivative (containing an average of about four chlorosulfonyl groups per molecule) is added to the mixture. After the addition is complete, the mixture was warmed to 50°C for an additional two hours to insure complete reaction. Three hundred ml of methylene chloride are added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue liquid.

### Chlorosulfonation of copper tetraphenoxypthalocyanine

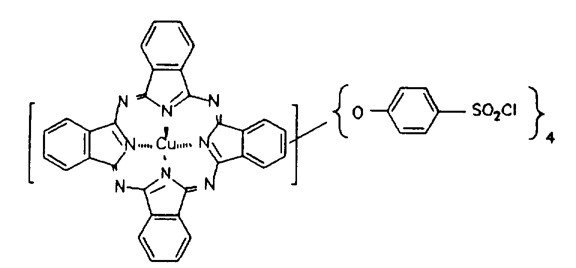

Thirty one grams (0.03 mole) of copper tetraphenoxyphthalocyanine are dissolved at less than 0°C in 263 grams of chlorosulfuric acid. The cooling bath is removed and the solution is allowed to warm to room temperature over two hours. The solution is further heated to 30°C for about two hours after which the heat is removed and the solution is allowed to stir overnight at room temperature. The solution is then poured very gradually into a stirred mixture of water and ice. The dull blue supsenion is filtered and washed with ice water several times.

### Preparation of copper tetraphenoxyphthalocyanine

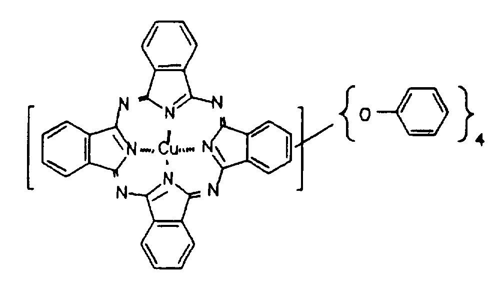

A mixture is prepared by adding of 147 grams (0.67 mole) of 4-phenoxyphthalonitrile, 16.6 grams (0.16 mole) of cuprous chloride to 2670 ml of Cellosolve. The mixture is heated at reflux. One hundred and two grams (0.67 mole) of DBU(1,8-diazabicyclo[5.4.0]-undec-7-ene are added to the reaction mixture. This mixture is then heated at reflux for about six hours. During this time the reaction proceeds and the mixture turns blue and a solid precipitates. The precipitate is collected by filtration, washed with 3 percent hydrochloric acid solution, water, then ethanol. The copper tetraphenoxy-pththalocyanine is obtained with a maximum absorbance at 680nm.

### Phenoxyphthalonitrile

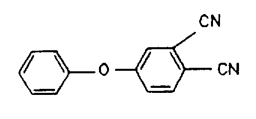

A mixture is prepared by adding 104 grams (1.1 moles) of phenol, 173 grams (1 mole) of 4-nitrophthalonitrile, and 207 grams of potassium carbonate in 1667 ml of dimethylformamide. The mixture is heated to 70°C and mechanically stirred. Samples are taken of this reaction mixture periodically and analyzed by GLC. After five hours, the reaction is complete. The 4-phenoxyphthalonitrile is isolated by quenching the crude reaction mixture in ice water. The product is further purified by washing the crude precipitate with dilute sodium carbonate and then water. Finally the 4-phenoxyphthalonitrile is vacuum dried at 60°C.

### EXAMPLE 3

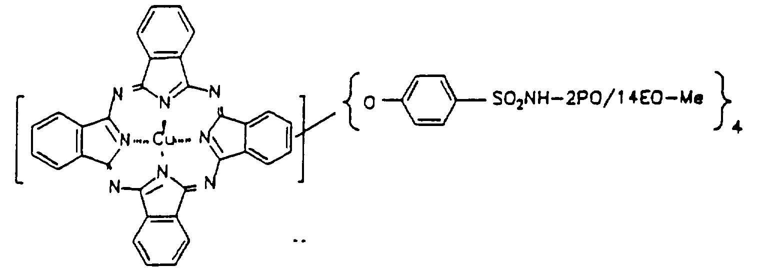

A mixture is prepared by adding 80.7 grams (0.11 mole) of a primary amine with an amine equivalent weight of 1.35 meq/g) to 25.7 grams sodium carbonate in 500 ml of water. The mixture is cooled to 10-15°C and 0.0242 mole of an aqueous wet cake of freshly prepared tetraphenoxy copper phthalocyaninesulfonyl chloride derivative from Comparative Example 4 (containing an average of about four chlorosulfonyl groups per molecule) is added to the mixture. After the addition is complete, the mixture is warmed to 50°C for an additional two hours to insure complete reaction. Three hundred ml of methylene chloride is added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue liquid with maximum absorbance at 617 nm.

### EXAMPLE 4

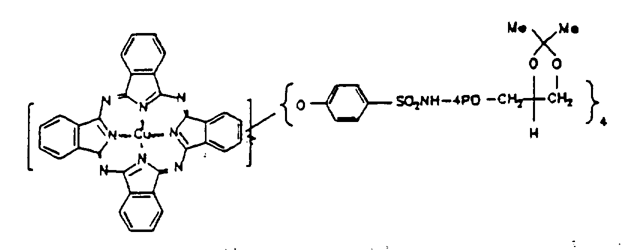

A mixture is prepared by adding 241.4 grams (0.275 mole) of a primary amine with an amine equivalent weight of 2.70 meq/g) to 64.7 grams sodium carbonate in 400 ml of THF. The mixture is cooled to 10-15°C and 0.061 mole of an aqueous wet cake of freshly prepared tetraphenoxy copper phthalocyaninesulfonyl chloride derivative from Comparative Example 4 (containing an average of about four chlorosulfonyl groups per molecule) is added to the mixture. After the addition was complete, the mixture is warmed to 50°C for an additional two hours to insure complete reaction. Three hundred ml of methylene chloride is added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue liquid with maximum absorbance at 617 nm.

### COMPARATIVE EXAMPLE 5

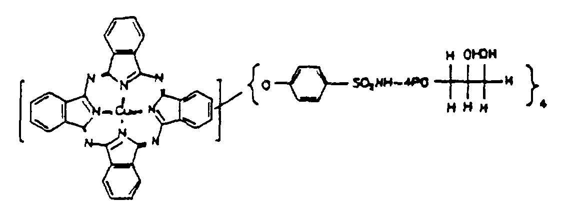

One hundred and fifty grams (0.061 mole) of the acetal prepared in Example 4 are added along with 100 ml of water to a three necked 250 ml flask equipped with overhead stirrer, heating mantle, and Dean Stark trap. The mixture is heated to 80°C and 4 grams of 70% sulfuric acid are added. This reaction mixture is maintained at 80°C until no more acetone could be detected overhead in the trap. The mixture is then cooled and the product is extracted into methylene chloride. The methylene chloride solution is separated, washed several times with water to neutral pH, and dried over anhydrous magnesium sulfate. The dried methylene chloride solution is filtered and stripped under reduced pressure at 90°C to give a blue product containing a hydroxyl band in the IR spectrum.

### EXAMPLE 5

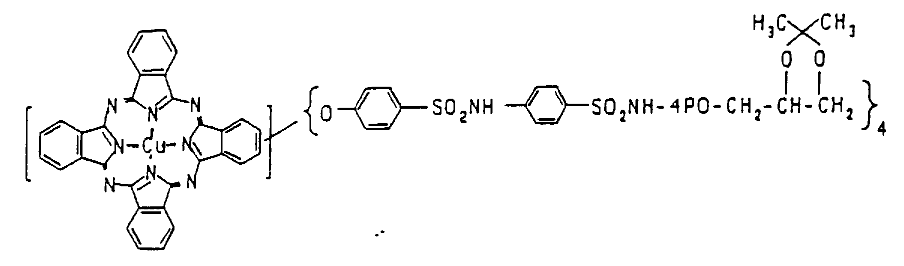

A mixture is prepared by adding 142.5 grams (0.275 mole) of an aromatic primary amine with an amine equivalent weight of 1.93 meq/g to 64.7 grams sodium carbonate in 400 ml of THF. The mixture is cooled to 10-15°C and 0.061 mole of an aqueous wet cake of freshly prepared tetraphenoxy copper phthalocyanine. sulfonyl chloride derivative from Example #6 (containing an average of about four chlorosulfonyl groups per molecule) is added to the mixture. After the additions is complete, the mixture is warmed to 50°C for an additional two--hours to insure complete reaction. Three hundred milliters of methylene chloride are added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue liquid.

### COMPARITIVE EXAMPLE 6

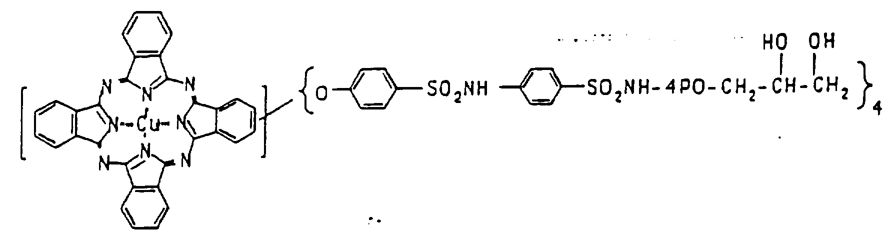

One hundred and eighty grams (0.061 mole) of the acetal prepared in Example 5 are added along with 100 ml of water to a three-necked 250 ml flask equipped with overhead stirrer, heating mantle, and Dean-Stark trap. The mixture is heated to 80°C and 4 grams of 70% sulfuric acid are added. This reaction mixture is maintained at 80°C until no more acetone can be detected overhead in the trap. The mixture is then cooled and the product is extracted into methylene chloride. The methylene chloride solution is separated, washed several times with water to neutral pH, and dried over anhydrous magnesium sulfate. The dried methylene chloride solution is filtered and stripped under reduced pressure at 90°C to give a blue product containing a hydroxyl band in the IR spectrum.

### COMPARITIVE EXAMPLE 7

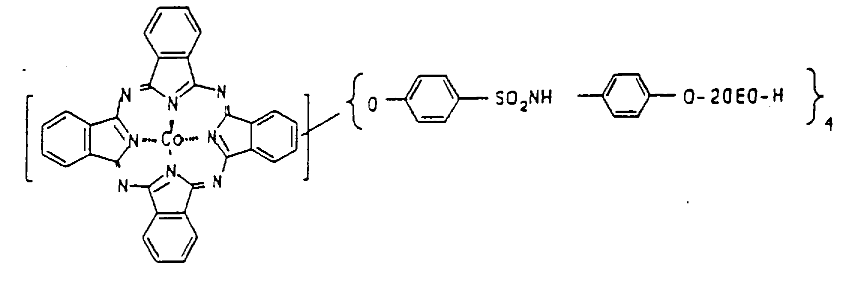

A mixture is prepared by adding 177.8 grams (0.18 mole) of an aromatic primary amine with an amine equivalent weight of 1.01 meq/g) to 42.4 grams sodium carbonate in 400 ml of THF. The mixture is cooled to 10-15°C and 0.040 mole of an aqueous wet cake of freshly prepared tetraphenoxy cobalt phthalocyanine sulfonyl chloride derivative (containing an average of about four chlorosulfonyl groups per molecule) is added to the mixture. After the addition is complete, the mixture is waned to 50°C for an additional two hours to insure complete reaction. Three hundred milliters of methylene chloride are added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue colorant.

### Sulfonation of cobalt tetraphenoxyphthalocyanine

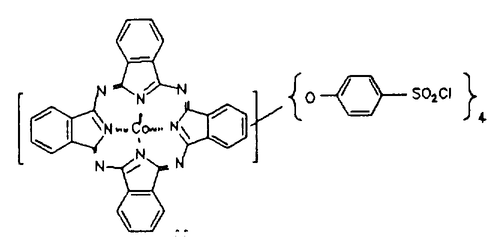

Thirty-one grams (0.03 mole) of cobalt tetraphenoxyphthalocyanine are dissolved at less than 0°C in 260 grams of chlorosulfuric acid. The cooling bath is removed and the solution is allowed to warm to room temperature over two hours. The solution is further heated to 30°C for about two hours after which the heat is removed and the solution is allowed to stir overnight at room temperature. The solution is then poured very gradually into a stirred mixture of water and ice. The dull blue supsenion is filtered and washed with ice water several times.

### Preparation of cobalt tetraphenoxyphthalocyanine

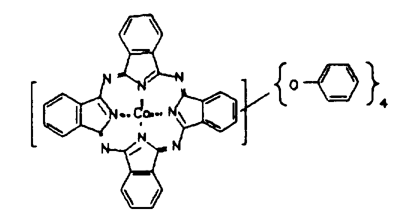

A mixture is prepared by adding of 147 grams (0.667 mole) of 4-phenoxyphthalonitrile, and 20.0 grams (0.162 mole) of cobalt(II) chloride to 2632 ml of butyl Cellosolve. The mixture is heated at reflux. One hundred grams (0.667 mole) of DBU (1,8-diazabicyclo[5.4.0]-undec-7-ene) are added to the reaction mixture. This mixture is then heated at reflux for about six hours. During this time the reaction proceeds and the mixture turns blue and a solid precipitates. The precipitate is collected by filtration, washed with 3 percent hydrochloric acid solution, water, then ethanol.

### EXAMPLE 6

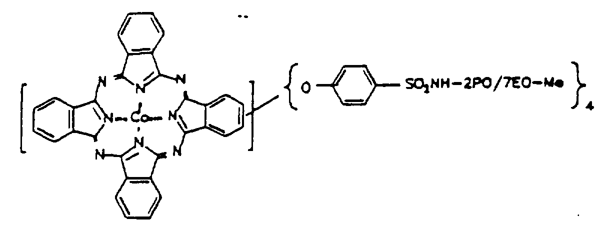

A mixture was prepared by adding 133.2 grams (0.18 mole) of a primary amine with an amine equivalent weight of 1.35 meq/g) to 42.4 grams sodium carbonate in 400 ml of THF. The mixture was cooled to 10-15°C and 0.040 mole of an aqueous wet cake of freshly prepared tetraphenoxy cobalt phthalocyanine sulfonyl chloride derivative from comparitive Example 7 (containing an average about four chlorosulfonyl groups per molecule) was added to the mixture. After the addition was complete, the mixture was warmed to 50°C for an additional two hours to insure complete reaction. Three hundred ml of methylene chloride was added followed by 300 ml of water. The methylene chloride solution was separated from the salt water solution, further washed several times with water to neutral pH, and dried over anhydrous magnesium sulfate. The dried solution was filtered and stripped under reduced pressure at 90°C to give a blue colorant.

### EXAMPLE 7

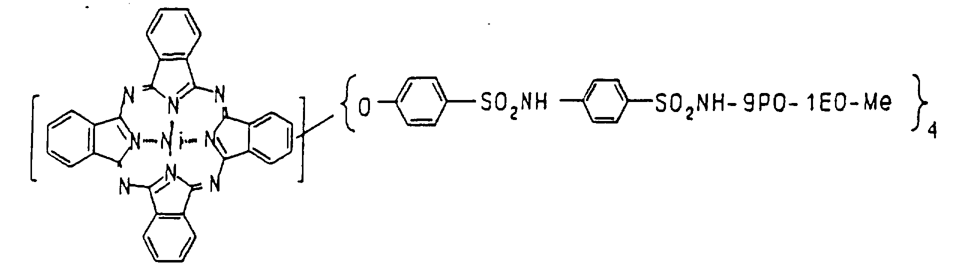

A mixture is prepared by adding 122.7 grams (0.16 mole) of an aromatic primary amine with an amine equivalent weight of 1.30 meq/g) to 36.2 grams sodium carbonate in 200 ml of THF. The mixture is cooled to 10-15°C and 0.0242 mole of an aqueous wet cake of freshly prepared tetraphenoxy nickel phthalocyanine sulfonyl chloride derivative (containing an average of about four chlorosulfonyl groups per molecule) is added to the mixture. After the addition is complete, the mixture is warmed to 50°C for an additional two hours to insure complete reaction. Three hundred milliters of methylene chloride are added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue liquid.

### Chlorosulfonation of nickel tetraphenoxyphthalocyanine

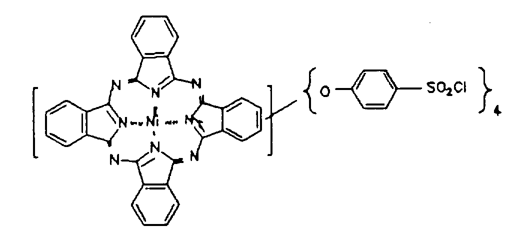

Thirty-one grams (0.0344 mole) of nickel tetraphenoxyphthalocyanine are dissolved at less than 0°C in 264 grams of chlorosulfuric acid. The cooling bath is removed and the solution is allowed to warm to room temperature over two hours. The solution is further heated to 30°C for about two hours after which the heat is removed and the solution is allowed to stir overnight at room temperature. The solution is then poured very gradually into a stirred mixture of water and ice. The dull blue supsenion is filtered and washed with ice water several times.

### Preparation of nickel tetraphenoxyphthalocyanine

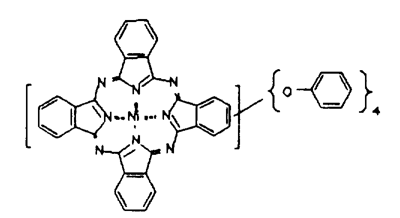

A mixture is prepared by adding of 44 grams (0.20 mole) of 4-phenoxyphthalonitrile, 12.4 grams (0.05 mole) of nickel(II) acetate tetrahydrate to 925 ml of Cellosolve. The mixture is heated at reflux collecting water in a Dean-Stark trap. The trap is emptied of azeotrope several times to insure that water was removed and make-up Cellosolve solvent is added to keep the volume constant in the reaction vessel. Thirty-one grams (0.20 mole) of DBU (l,8-diazabicyclo[5.4.0]-undec-7-ene) are added to the reaction mixture. This mixture is then heated at reflux for about six hours. During this time the reaction proceeds and the mixture turns blue and a solid precipitates. The precipitate is collected by filtration, washed with 3 percent hydrochloric acid solution, water, then ethanol. A yield of 22.3 grams of nickel tetraphenoxypththalocyanine is obtained with maximum absorbance at 672 nm.

### EXAMPLE 8

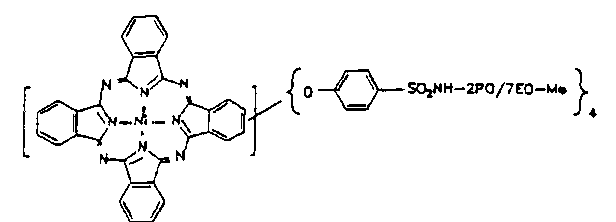

A mixture is prepared by adding l07.3 grams (0.16 mole) of a primary amine with an amine equivalent weight of 1.43 meq/g) to 36.2 grams sodium carbonate in 200 ml of THF. The mixture is cooled to 10-15°C and 0.0242 mole of an aqueous wet cake of freshly prepared tetraphenoxy nickel phthalocyanine sulfonyl chloride derivative from Example 7 (containing an average of about four chlorosulfonyl groups per molecule) is added to the mixture. After the addition is complete, the mixture in warmed to 50°C for an additional two hours to insure complete reaction. Three hundred ml of methylene chloride is added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue liquid with maximum absorbance at 618 nm.

### COMPARITIVE EXAMPLE 8

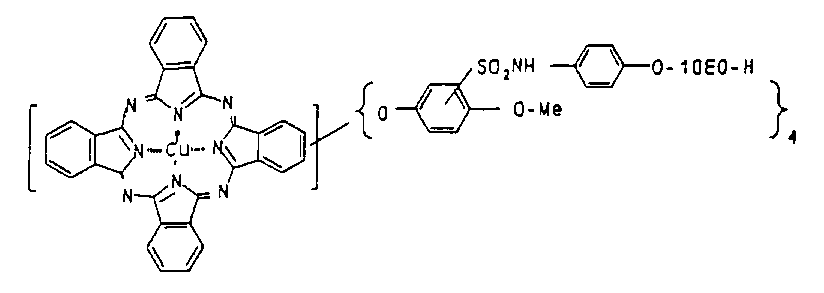

A mixture is prepared by adding 74.0 grams (0.135 mole) of an aromatic primary amine with an amine equivalent weight of 1.82 meq/g to 31.8 grams sodium carbonate in 400 ml of water. The mixture is cooled to 10-15°C and 0.030 mole of an aqueous wet cake of freshly prepared tetra-p-methoxyphenoxy copper phthalocyanine sulfonyl chloride derivative (containing an average of about four chlorosulfonyl groups per molecule) is added to the mixture. After the addition is complete, the mixture is warmed to 50°C for an additional two hours to insure complete reaction. Three hundred milliters of methylene chloride are added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue liquid.

### Chlorosulfonation of copper tetra-p-methoxyphenoxyphthalocyanine

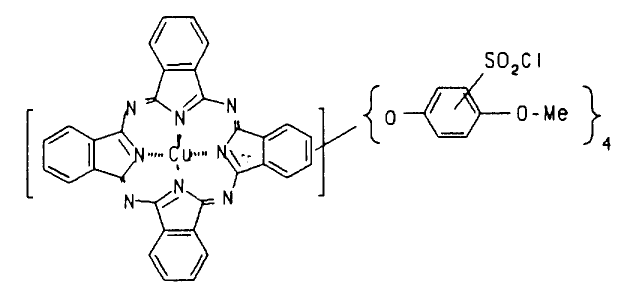

Thirty-five grams (0.03 mole) of copper tetra-p-methoxy-phenoxyphthalocyanine are dissolved at less than 0°C in 263 grams of chlorosulfuric acid. The cooling bath is removed and the solution is allowed to warm to room temperature over two hours. The solution is further heated to 30°C for about two hours after which the heat is removed and the solution is allowed to stir overnight at room temperature. The solution is then poured very gradually into a stirred mixture of water and ice. The dull blue supsenion is filtered and washed with ice water several times.

### Preparation of copper tetra-p-methoxyphenoxyphthalocyanine

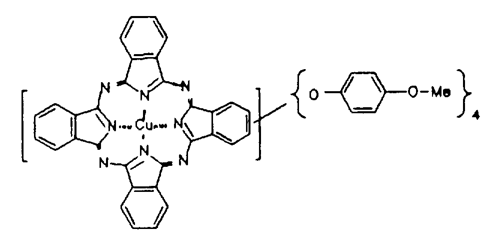

A mixture is prepared by adding of 164.5 grams (0.67 mole) of p-methoxyphenoxyphthalonitrile, 16.3 grams (0.166 mole) of cuprous chloride to 4000 ml of butyl Cellosolve. The mixture is heated at reflux. One hundred and two grams (0.67 mole) of DBU (1,8-diazabicyclo[5.4.0]-undec-7-ene) are added to the reaction mixture. This mixture is then heated at reflux for about six hours. During this time the reaction proceeds and the mixture turns blue and a solid precipitates. The precipitate is collected by filtration, washed with 3 percent hydrochloric acid solution, water, then ethanol. The copper tetra-p-methoxyphenoxy-pththalocyanine is obtained with maximum absorbance at 680nm.

### P-METHOXYPHENOXYPHTHALONITRILE

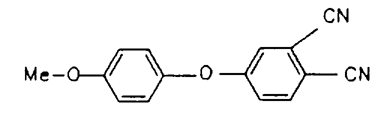

A mixture is prepared by adding 136.4 grams (1.1 moles) of p-methoxyphenol, 173 grams ( 1mole) of 4-nitrophthalonitrile, and 207 grams of potassium carbonate in 1667 ml of dimethylformamide. The mixture is heated to 70°C and mechanically stirred. Samples are taken of this reaction mixture periodically and analyzed by GLC. After five hours, the reaction is complete. The p-methoxy-phenoxyphthalonitrile is isolated by quenching the crude reaction mixture in ice water. The product is further purified by washing the crude precipitate with dilute sodium carbonate and then water. Finally the p-methoxyphenoxyphthalonitrile is vacuum dried at 60°C.

### EXAMPLE 9

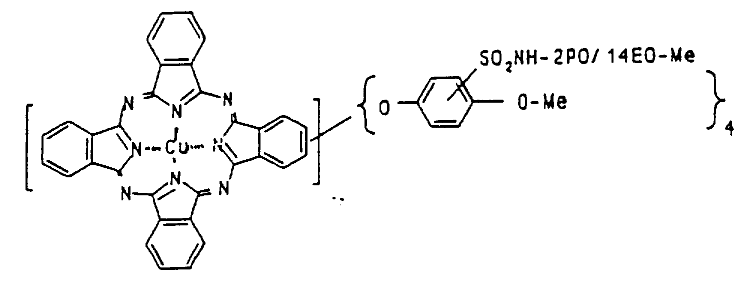

A mixture is prepared by adding 100.0 grams (0.135 mole) of a primary amine with an amine equivalent weight of 1.35 meq/g) to 31.8 grams sodium carbonate in 400 ml of water. The mixture is cooled to 10-15°C and 0.030 mole of an aqueous wet cake of freshly prepared tetra-p-methoxyphenoxy copper phthalocyanine sulfonyl chloride derivative from comparitive example 8 (containing an average of about four chlorosulfonyl groups per molecute) is added to the mixture. After the addition is complete, the mixture is warmed to 50°C for an additional two hours to insure complete reaction. Three hundred ml of methylene chloride is added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue liquid.

### COMPARITIVE EXAMPLE 9

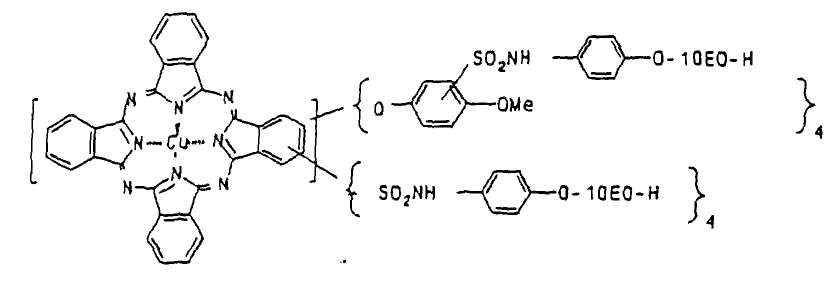

A mixture is prepared by adding 168 grams (0.306 mole) of an aromatic primary amine with an amine equivalent weight of 1.82 meq/g) to 72.1 grams sodium carbonate in 400 ml of THF. The mixture is cooled to 10-15°C and 0.034 mole of an aqueous wet cake of freshly prepared tetraphenoxy copper phthalocyanine sulfonyl chloride derivative (containing an average of about eight chlorosulfonyl groups per molecule) is added to the mixture. After the addition is complete, the mixture is warmed to 50°C for an additional two hours to insure complete reaction. Three hundred milliters of methylene chloride are added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue colorant.

### EXAMPLE 10

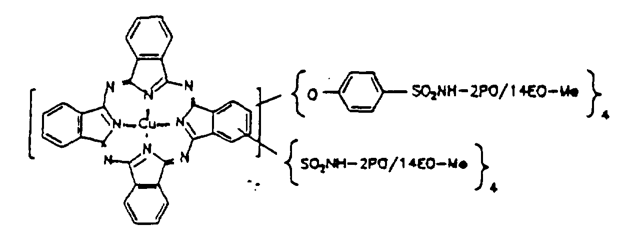

A mixture is prepared by adding 226.7 grams (0.306 mole) of a primary amine with an amine equivalent weight of 1.35 meq/g) to 72.1 grams sodium carbonate in 400 ml of THF. The mixture is cooled to 10-15°C and 0.034 mole of an aqueous wet cake of freshly prepared tetraphenoxy copper phthalocyaninesulfonyl chloride derivative from comparitive example 9 (containing an average of about eight chlorosulfonyl groups per molecule) is added to the mixture. After the addition is complete, the mixture is warmed to 50°C for an additional two hours to insure complete reaction. Three hundred ml of methylene chloride is added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to give a blue colorant.

### Chlorosulfonation of copper tetraphenoxyphthalocyanine

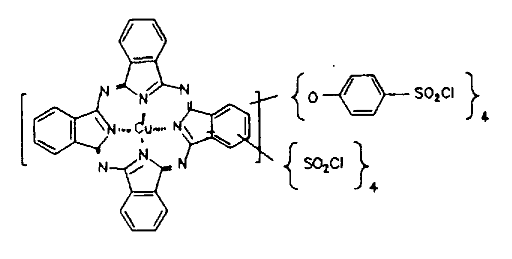

Thirty-one grams (0.03 mole) of copper tetraphenoxyphthalocyanine are dissolved at less than 0°C in 400 grams of chlorosulfuric acid. The cooling bath is removed and the solution is allowed to warm to room temperature over two hours. The solution is further heated to 70°C for about two hours then at 130°C for eight hours. The heat is removed and the solution is allowed to stir overnight at room temperature. The solution is then poured very gradually into a stirred mixture of water and ice. The dull blue supsenion is filtered and washed with ice water several times.

### EXAMPLE 11

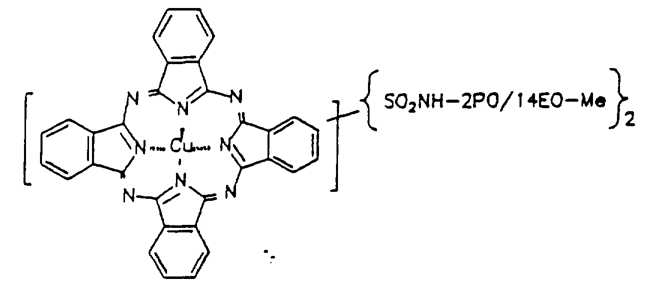

A mixture is prepared by adding 189.6 grams (0.26moles) of a primary amine with an amine equivalent weight of 1.35 meq/g) to 31.4 grams of sodium carbonate(0.30 moles) in 250 grams of water. The mixture is stirred mechanically and cooled to 10-15°C, and 259 grams (0.105 moles) of a 33% active aqueous wet cake of freshly prepared copper phthalocyaninesulfonylchloride derivative(containing an average of about 2 chlorosulfonyl groups per molecule) are added to the mixture over one and a half hours. After the addition is complete, the mixture is warmed to 50°C for an additional two hours to insure complete reaction. Afterwards, the mixture is cooled and the product is extracted into methylene chloride. The methylene chloride solution is separated from the salt water solution, washed several times with water to neutral pH, and dried over anhydrous magnesium sulfate. The dried methylene chloride solution is filtered and stripped under reduced pressure at 90°C to give a blue liquid with an absorbance at 667 nm.

### EXAMPLE 12

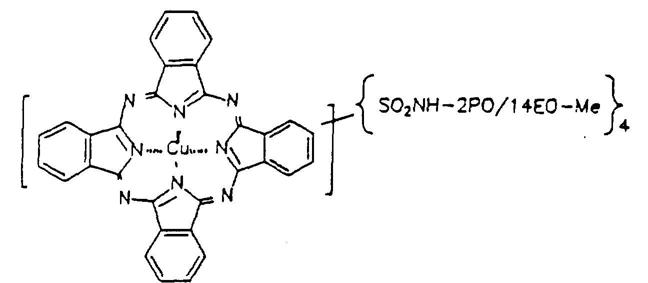

A mixture is prepared by adding 71.4 grams (0.10 moles) of a primary amine with an amine equivalent weight of 1.33 meq/g to 21.6 grams (0.20 moles) sodium carbonate in 500 ml of water. The mixture is cooled to 10-15°C and 0.026 moles of an aqueous wet cake of freshly prepared copper phthalocyaninesulfonyl chloride derivative (containing an average of about 4 chlorosulfonyl groups per molecule) is added to the mixture over one-half hour. After the addition is complete, the mixture is warmed to 50°C for an additional two hours to insure complete reaction. Afterwards, the mixture is cooled and the product is extracted into methylene chloride. The methylene chloride solution is separated from the salt water solution, washed several times with water to neutral pH, and dried over anhydrous magnesium sulfate. The dried methylene chloride solution is filtered and stripped under reduced pressure at 90°C to give a blue liquid with an absorbance at 667 nm.

### EXAMPLE 13

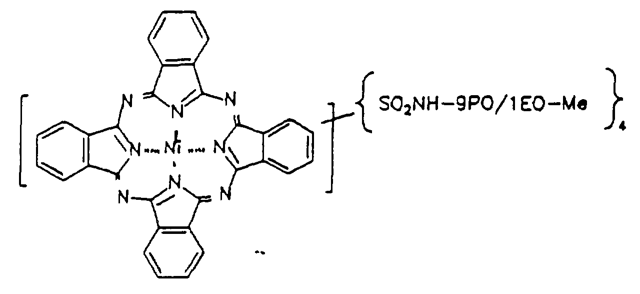

A mixture is prepared by adding 244.8 grams (0.41 moles) of Jeffamine M-600 primary amine with an amine equivalent weight of 1.66 meq/g to 173.0 grams (1.63 moles) sodium carbonate in 1000 ml of water. The mixture is cooled to 10-15°C and 0.10 moles of an aqueous wet cake of freshly prepared nickel phthalocyaninesulfonyl chloride derivative (containing an average of about 4 chlorosulfonyl groups per molecule) is added to the mixture about one hour. When the addition is complete, the mixture is warmed to 50°C to for an additional two hours to insure complete reaction. Afterwards, the mixture is cooled and the product is extracted into methylene chloride. The methylene chloride solution is separated from the salt water solution, washed several times with water to neutral pH, and dried over anhydrous magnesium sulfate. The dried methylene chloride solution is filtered and stripped under reduced pressure at 90°C to give a blue liquid with an absorbance at 660 nm.

### EXAMPLE 14

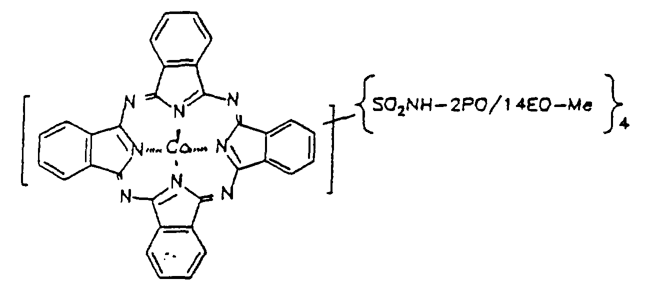

A mixture is prepared by adding 44.1 grams (0.062 moles) of a primary amine with an amine equivalent weight of 1.35 meq/g to 11.9 grams (0.11 moles) sodium carbonate in 250 ml of water. The mixture is cooled to 10-15°C and 0.014 moles an aqueous wet cake of freshly prepared cobalt phthalocyaninesulfonyl chloride derivative (containing an average of about 4 chlorosulfonyl groups per molecule) is added to the mixture over one and a half hours. When the addition is complete, the mixture is warmed to 50°C to for an additional two hours to insure complete reaction. Afterwards, the mixture is cooled and the product is extracted into methylene chloride. The methylene chloride solution is separated from the salt water solution, washed several times with water to neutral pH, and dried over anhydrous magnesium sulfate. The dried methylene chloride solution is filtered and stripped under reduced pressure at 90°C to give a blue liquid with an absorbance at 661 nm.

### EXAMPLE 15

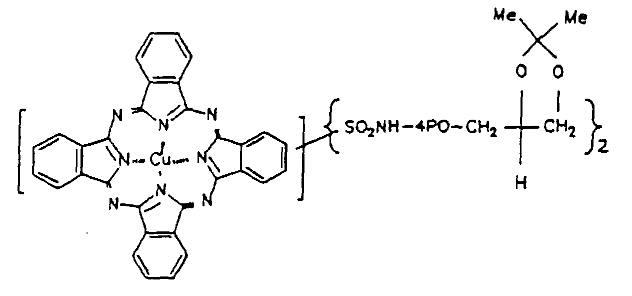

A mixture is prepared by adding 70.3 grams (0.19 moles) of a primary amine with an amine equivalent weight of 2.7 meq/g to 24.0 grams (0.23 moles) sodium carbonate in 400 ml of THF. The mixture is cooled to 10-15°C and 100 grams (0.061 moles) of a 50% active aqueous wet cake of freshly prepared copper phthalocyaninesulfonyl chloride derivative (containing an average of about 2 chlorosulfonyl groups per molecule) is added to the mixture over one and a half hours. After the addition is complete, the mixture is warmed to 50°C to for an additional two hours to insure complete reaction. Afterwards, the mixture is cooled and the product is extracted into methylene chloride. The corresponding methylene chloride/THF solution is separated from the salt water solution. The THF solution is allowed to evaporate in a fume hood, 300 ml of methylene chloride is added followed by 300 ml of water. The methylene chloride solution is separated from the salt water solution, further washed several times with water to neutral pH, and dried over anhydrous magnesium sulfate. The dried solution is filtered and stripped under reduced pressure at 90°C to a blue liquid with an absorbance at 667 nm.

### EXAMPLE 16

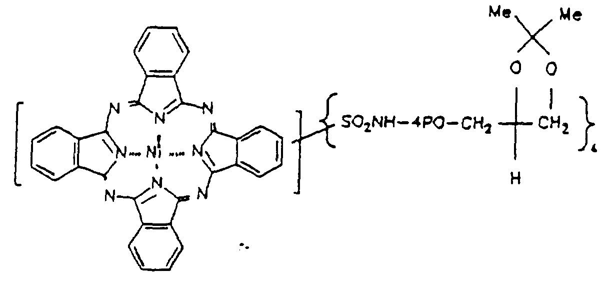

A mixture is prepared by adding 130.4 grams (0.352 moles) of a primary amine with an amine equivalent weight of 2.7 meq/g to 52.1 grams (0.081 moles) potassium carbonate in 500 ml of water. The mixture is cooled to 10-15°C and 0.88 moles of an aqueous wet cake of freshly prepared nickel phthalocyaninesulfonyl chloride derivative (containing an average of about 4 chlorosulfonyl groups per molecule) is added to the mixture over one-half hour. When the addition is complete, the mixture is warmed to 50°C to for an additional two hours to insure complete reaction. Afterwards, the mixture is cooled and the product is extracted into methylene chloride. The methylene chloride solution is separated from the salt water solution, washed several times with water to neutral pH, and dried over anhydrous magnesium sulfate The dried methylene chloride solution is filtered and stripped under reduced pressure at 90°C to give a blue liquid with an absorbance at 662 nm.

### COMPARITIVE EXAMPLE 16

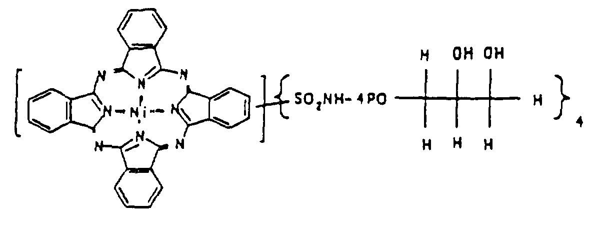

Fifty grams (0.22 moles) of the acetal prepared in Example #25 are added along with 100 ml of water to a three necked 250 ml flask equipped with overhead stirrer, heating mantle, and Dean Stark trap. The mixture is heated to 80°C and 2 grams of 70% sulfuric acid is added. This reaction mixture is maintained at 80°C until no more acetone could be detected overhead in the trap. The mixture is then cooled and the product is extracted into methylene chloride. The methylene chloride solution is separated, washed several times with water to neutral pH, and dried over anhydrous magnesium sulfate. The dried methylene chloride solution is filtered and stripped under reduced pressure at 90°C to give a blue product containing a hydroxyl band in the IR spectrum and an absorbance at 661 nm.

### COMPARITIVE EXAMPLE 11

This example illustrates the use of the present polymeric phthalocyanine colorants in polyolefin systems. The following formulations are preblended using a paddle type mixer and the colorant of comparitive Example 1

| *INGREDIENT | Formulation 1 |
|---|---|
| 4MF Polypropylene resin (Exxon 9142G) | 99.47% |
| Irganox 1010 (Ciba-Geigy) | 800 ppm |
| Millad 3940 | 2500 ppm |
| Calcium stearate | 1000 ppm |
| Polymeric colorant (Example#1) | 1000 ppm |
| | |

| *INGREDIENT | Formulation 2 |
|---|---|
| 4MF Polypropylene resin (Exxon 9142G) | 99.62% |
| Irganox 1010 (Ciba-Geigy) | 800 ppm |
| TiO₂ | 1000 ppm |
| Calcium stearate | 1000 ppm |
| Polymeric colorant comparitive Example 1 | 1000 ppm |

Calcium stearate functions as a stabilizer; Irganox 1010 is a registered trademark of Ciba-Geigy Corporation for a hindered phenol stabilizer; Millad 3940 is a clarifier for polyolefins; TiO₂ is a white pigment which serves as an opacifier; 4MF Polypropylene resin (Exxon 9142G) is a random copolymer of propylene and ethylene.

After mixing, the formulations shown above are melt compounded on a Brabender Twin Screw Mixer with a stock temperature of 245-250°C. The compounded samples are then injection molded on a small toggle clamp machine into two-step plaques with thicknesses of 1.27-2.16 mm (50 and 85 mils).

Formulation #1 has good clarity and a deep cyan shade. Formulation #2 is opaque and has a medium cyan shade. Both formulationa process well in addition to having properties such as excellent heat stability, non-nucleation, non-migration and ease of resin clean-up.

### COMPARITIVE EXAMPLE 12

This example illustrates the use of polymeric phthalocyanine colorants in polyurethane. A polyurethane foam is prepared using colorant of comparitive Example 3 in the formulation shown below:

| | |
|---|---|
| Niax 16-56 Polyol(Union Carbide Corp.) | 100 g |
| Water | 4.8 ml |
| Dabco 33 LV(Air Products) | 0.31 ml |
| T-9 Catalyst(M&T Chemical Co.) | 0.2 ml |
| L-520 Silicone(Union Carbide Corp.) | 1.5 ml |
| Methylene Chloride | 5.4 ml |
| Toluene Diisocyanate | 55 ml |
| Colorant comparitive Example 3 | 1.0 g |

This foam is cured for one hour at 160°F to give an even, bright, aqua blue shade. The polymeric colorant is not extractable with methanol, indicating that the colorant has copolymerized into the polyurethane structure.

### EXAMPLE 17

This example illustrates the use of the present polymeric phthalocyanine colorants in epoxy systems. The colorant prepared according to Example 1 is incorporated into a cured epoxy system according to the following procedure: To a beaker containing 100 grams of epoxy resin based on diglycidyl ether of bisphenol A(n=0.2, WPE=185-195) of the formula 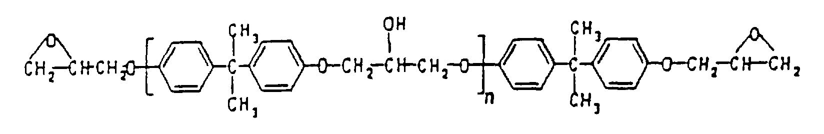 are added 0.1 grams of the colorant prepared according to Example 1 and 15.5 grams of 1,2-diaminocyclohexane. After mixing the contents of the beaker thoroughly for two minutes and centrifuging at a speed of 300 rpm, the resin mixture is placed in an aluminum mold and cured for two hours at 100°C.

The epoxy cured product has good clarity and a deep cyan shade. The resin system processes well in addition to having properties such as excellent heat stability, non-nucleation, non-migration and ease of resin clean up.

### EXAMPLE 18

This example illustrates the use of the present polymeric phthalocyanine colorants in polyolefin systems. The following formulations are preblended using a paddle type mixer and the colorant of Example 3

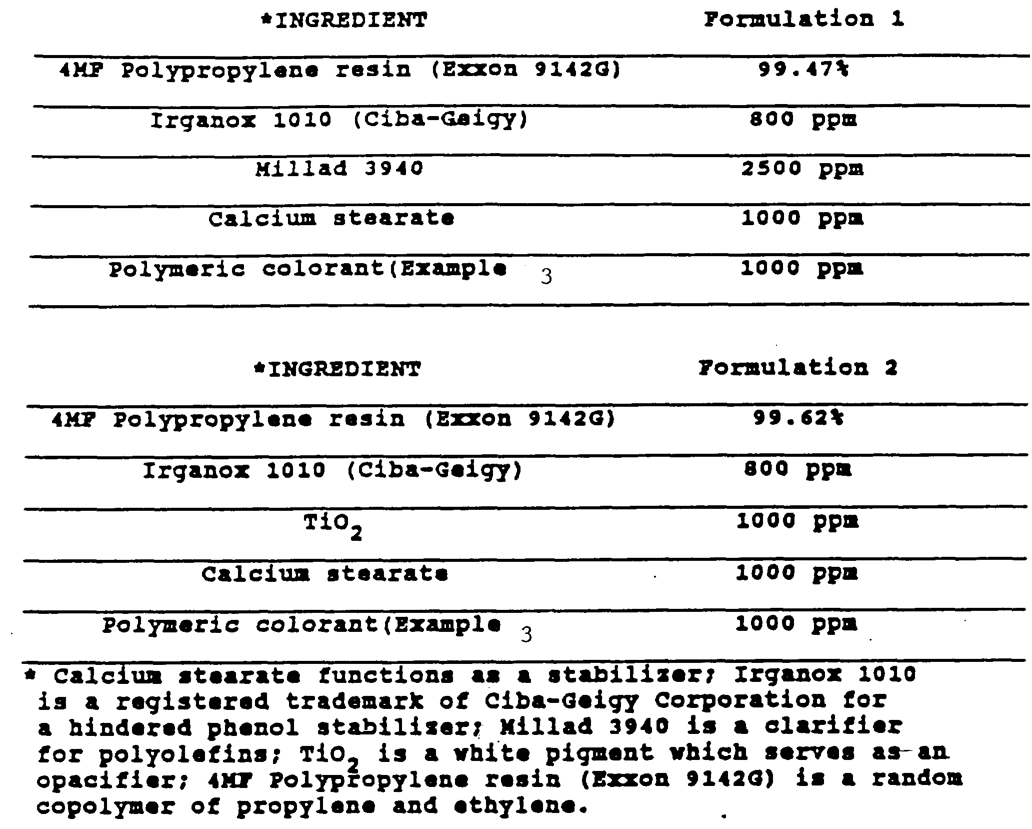

After mixing, the formulations shown above melt compounded on a Brabender Twin Screw Mixer with a stock temperature of 245-250°C. The compounded samples are then injection molded on a small toggle clamp machine into two-step plaques with thickness of 1.27-2.16 mm (50 and 85 mils).

Formulation #1 has good clarity and is a deep cyan shade. Formulation #2 is opaque and has a medium cyan shade. Both formulations processed well in addition to having properties such as excellent heat stability, non-nucleation, non-migration and ease of resin clean up.

### COMPARITIVE EXAMPLE 3

This example illustrates the use of polymeric phthalocyanine colorants of the present invention in polyurethane. A polyurethane foam is prepared using the colorant of comparitive Example 5 in the formulation shown below:

| | |
|---|---|
| Niax 16-56 Polyol(Union Carbide Corp.) | 100 g |
| Water | 4.8 ml |
| Dabco 33 LV(Air Products) | 0.31 ml |
| T-9 Catalyst(M&T Chemical Co.) | 0.2 ml |
| L-520 Silicone(Union Carbide Corp.) | 1.5 ml |
| Methylene Chloride | 5.4 ml |
| Toluene Diisocyanate | 55 ml |
| Colorant comparitive Example 5 | 1.0 g |

This foam is cured for one hour at 71.1°C (160°F) to give an even, bright, aqua blue shade. The polymeric colorant is not extractable with methanol, indicating that the colorant had copolymerized into the polyurethane structure.

### EXAMPLE 9

This example demonstrates the improved heat stability of a polymeric copper phthalocyanine over copper phthalocyanine pigment. The polymeric colorant of Example 11 and copper phthalocyanine blue pigment, C.I. Pigment Blue 15 (Sun Chemical company, 99% pure) are evaluated in the following formulations:

| INGREDIENT | Formulation A | Formulation B |
|---|---|---|
| 4MF Polypropylene resin (Exxon 9142G) | 5000g | 5000g |
| Irganox 1010 (Ciba-Geigy) | 5g | 5g |
| Irgaphos 168 (Ciba-Geigy) | 2.5g | 2.5g |
| Calcium stearate | 5g | 5g |
| Polymeric colorant (Example 11 | 12.5g | - |
| Copper phthalocyanine pigment (C.I. Pigment Blue 15) | - | 5g |

For comparison purposes, the colorant concentrations shown were used to obtain about the same depth of shade in each formation. Iragaphos 168 is a registered trademark of Ciba-Geigy Corporation for a mixed phosphite/phosphonite stabilizer.

The additives are mixed mechanically, melt compounded at 227°C (440°F) through a one inch extruder, and chopped into pellets. Injection molded step plaques (2x7.62 cm (2x3")) are prepared from each formulation. The resins are then re-extruded two more times at 575°F, and plaques are molded after each extrusion. Color changes (delta E) between the control plaques-B- (227°C (440°F extrusion)) and the plaques-A-(present invention) after re-extrusion are measured on a Hunter Colorimeter. The results shown in the table below indicate that the non-polymeric pigment showed significant change in shade during high temperature extrusion, while the polymeric colorant of Example 11 of the present invention is virtually unchanged.

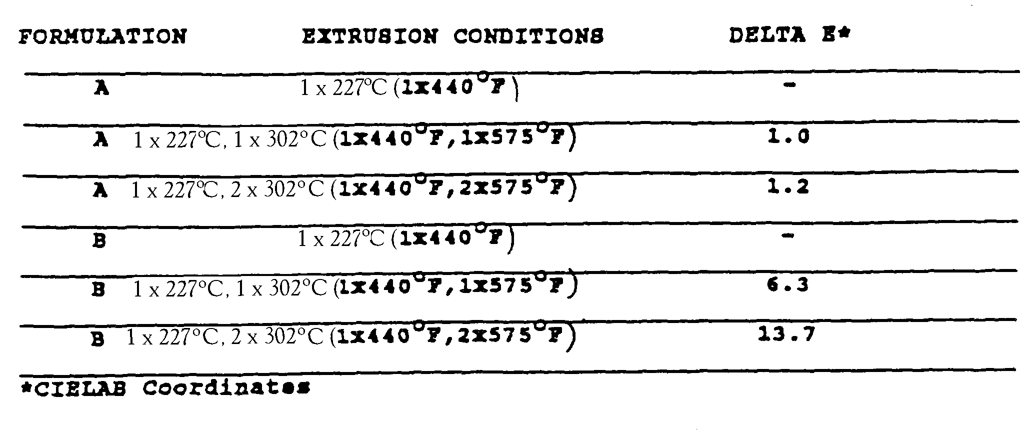

### EXAMPLE 20

This example demonstrates the ease with which the present invention polymeric colorants are purged from compounding equipment such as extruders. After completion of the heat stability experiments for each formulation of Example 19, the extruder is purged with one-pound shots of uncolored resin until the extrudate showed an insignificant amount of residual color. For formulation A (containing the polymeric colorant of Example 11), 3-4 pounds of purge resin are required to obtain a virtually colorless extrudate. In contrast, for formulation B (copper phthalocyanine pigment, C.I. Pigment Blue 15), blue color is still observed in the extrudate even after purging the extruder with twenty-five one-pound shots of purge resin.

### EXAMPLE 21

This example demonstrates the non-nucleation properties of polymeric phthalocyanine colorants of the present invention verses conventional phthalocyanine pigment in a polyolefin resin. Formulation A (contains polymeric colorant of Example 11) and formulation B (contains phthalocyanine pigment) from Example 19 are analyzed by Differential Scanning Calorimetry (Perkin-Elmer Series 7 Thermal Analysis system) to determine crystallization temperature. The base resin (uncolored) is also tested. The results shown in the table below indicate that the present invention polymeric colorant has no effect on crystallization properties, while in contrast, the conventional phthalocyanine pigment, C.I. Pigment Blue 15 has a significant effect.

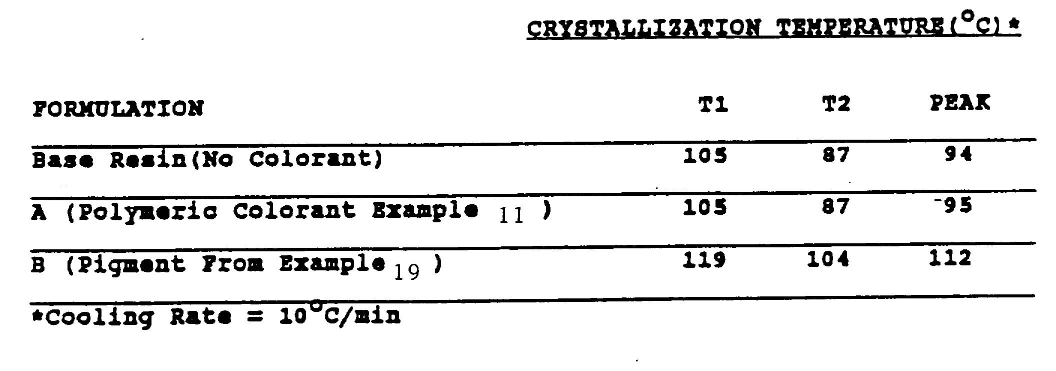

### COMPARITIVE EXAMPLE 14

This example illustrates the use of the present invention polymeric phthalocyanine colorants in polyurethane. A polyurethane foam is prepared using the colorant of Comparative Example 10 in the formulation shown below:

| | |
|---|---|
| Niax 16-56 Polyol(Union Carbide Corp.) | 100 g |
| Water | 4.8 ml |
| Dabco 33 LV (Air Products) | 0.31 ml |
| T-9 Catalyst (M&T Chemical Co.) | 0.2 ml |
| L-520 Silicone (Union Carbide Corp.) | 1.5 ml |
| Methylene Chloride | 5.4 ml |
| Toluene Diisocyanate | 55 ml |
| Colorant Of comparitive Example 10 | 1 g |

This foam is cured for one hour at 71.1°C (160°F) to give a product having an even, bright, aqua blue shade. The polymeric colorant is not extractable with methanol, indicating that the colorant had copolymerized into the polyurethane structure.

The following tables further illustrate specific colorants of the present invention, wherein the terminating group W of Y is separated out from Y column for purposes of clarity, and wherever A is used in the tables, it designates the metallophthalocyanine specified in that example.

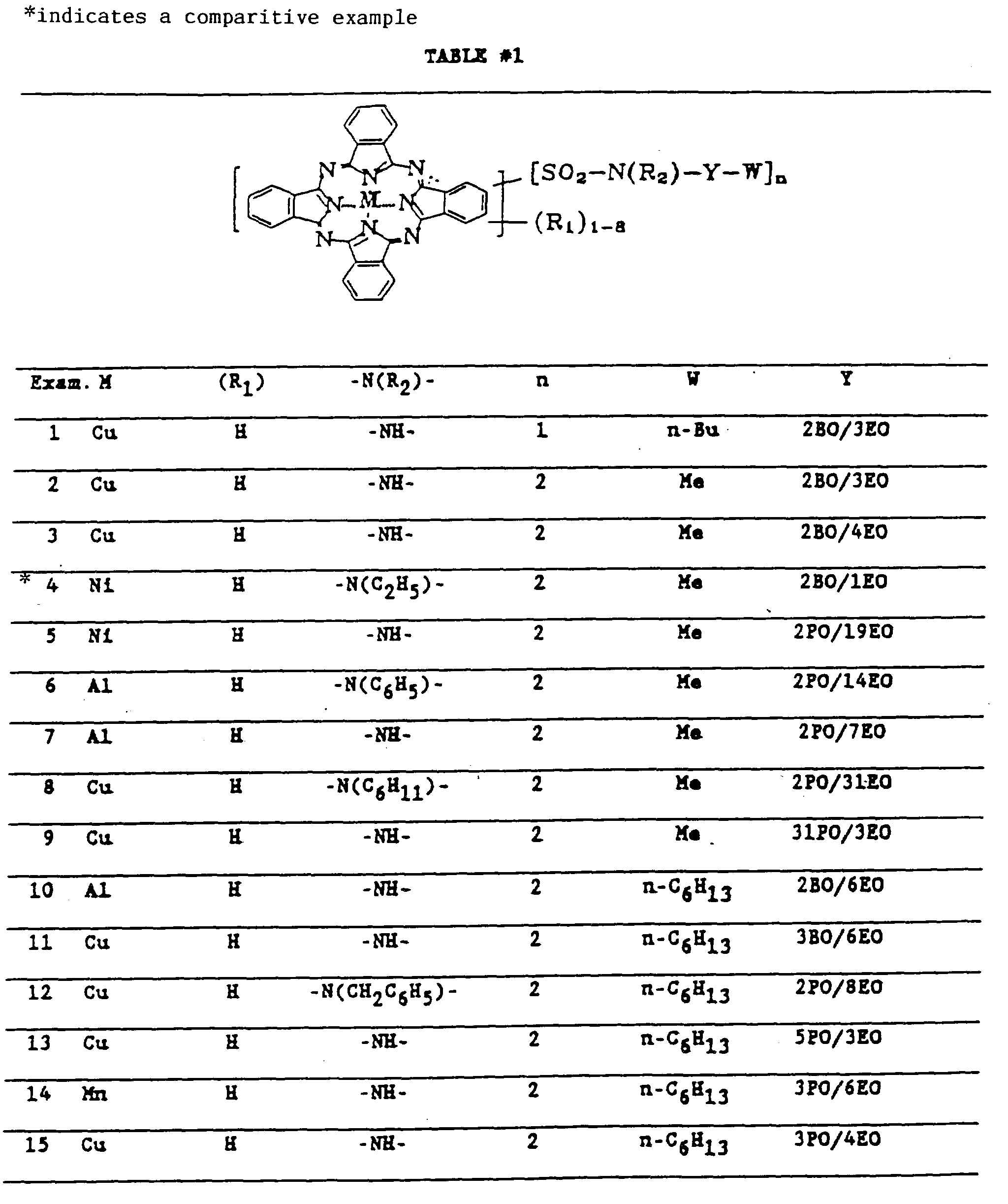

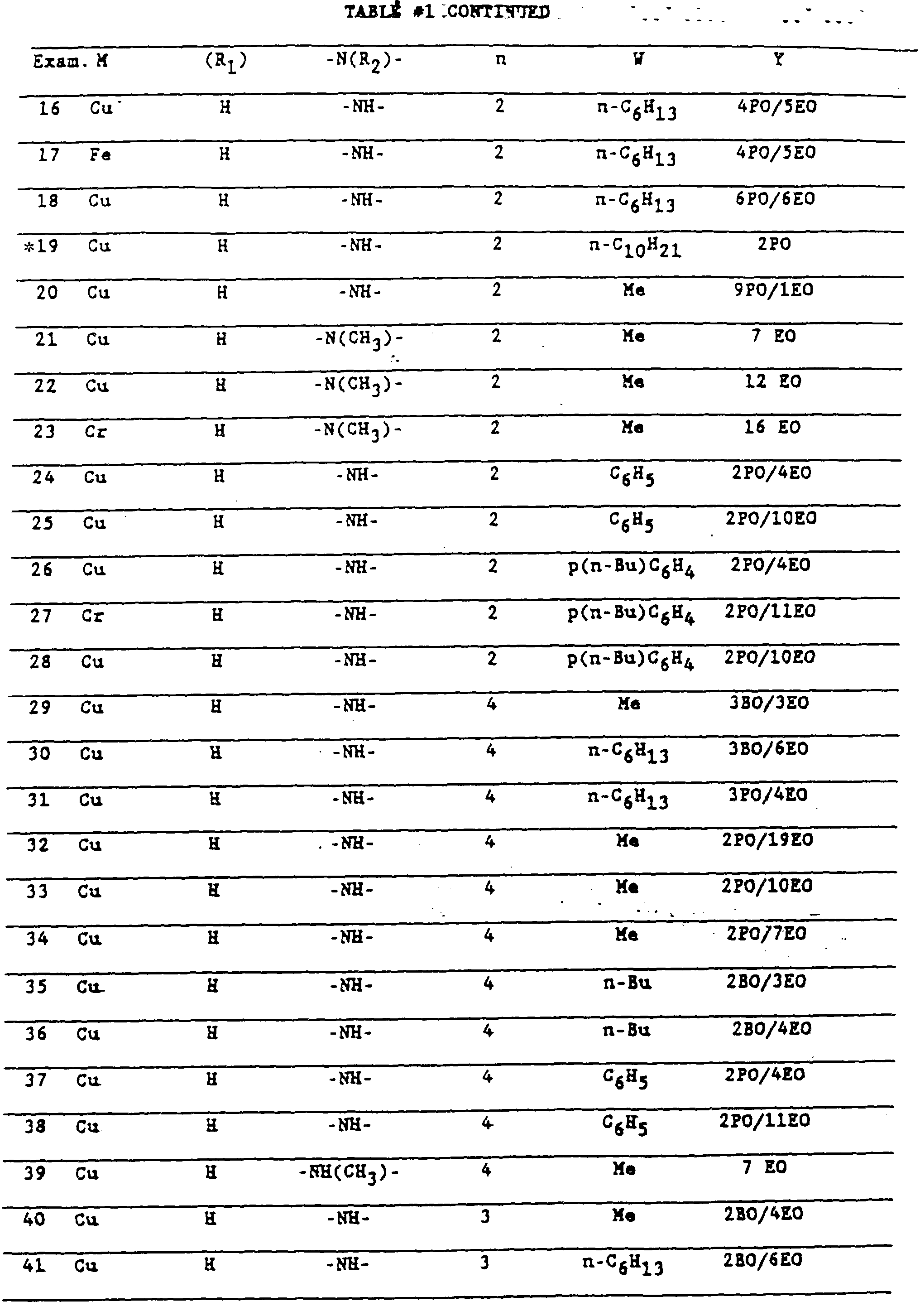

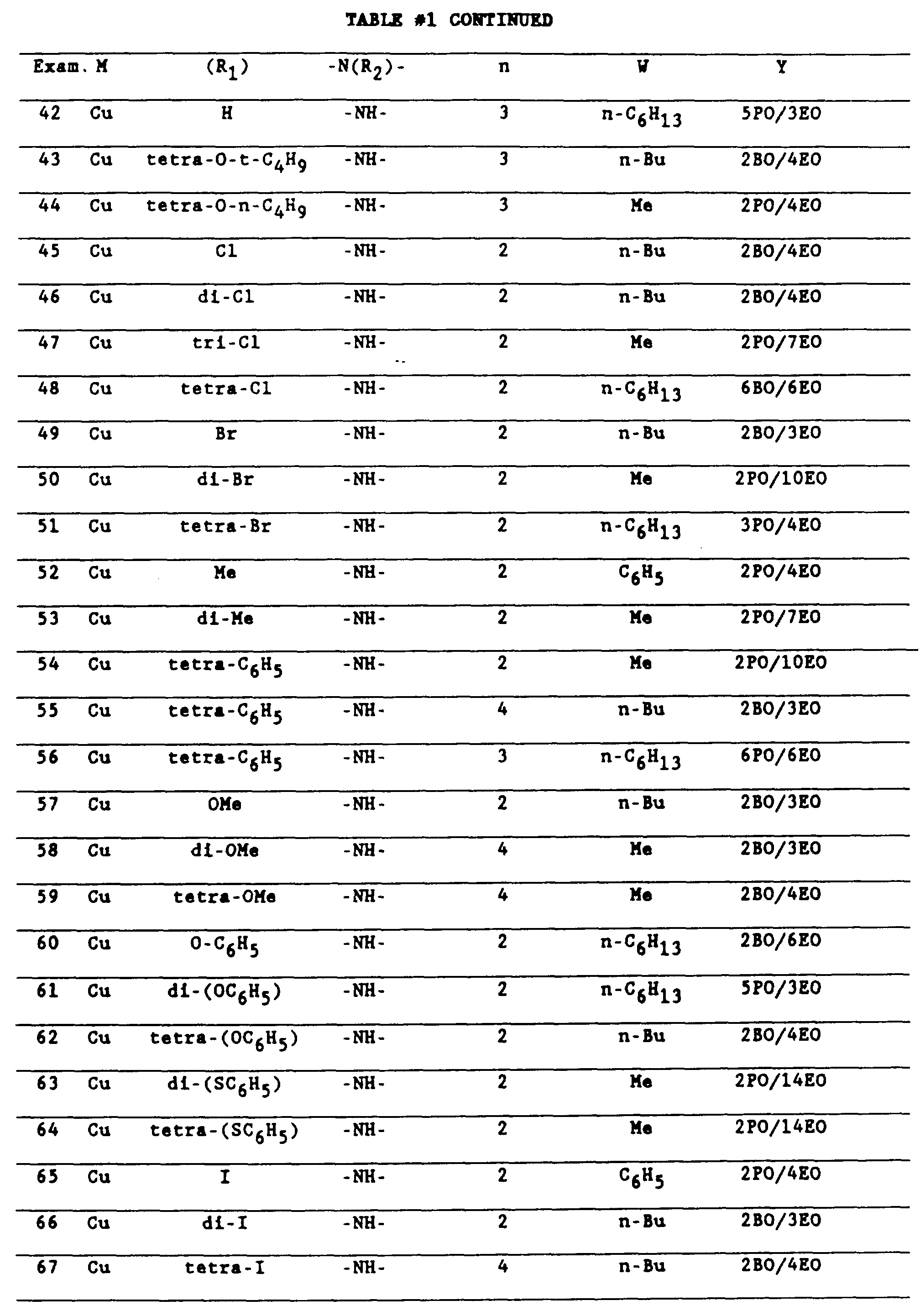

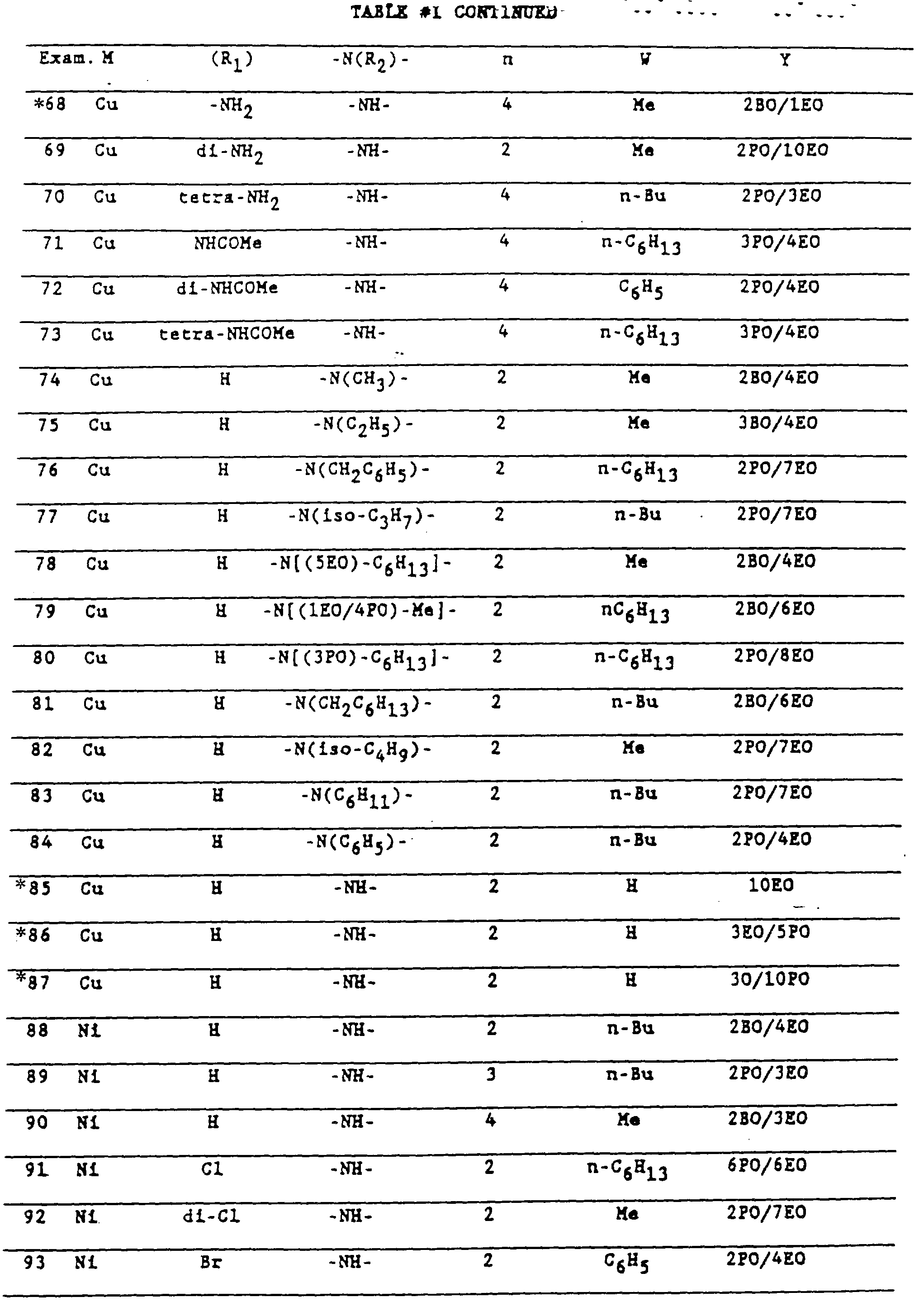

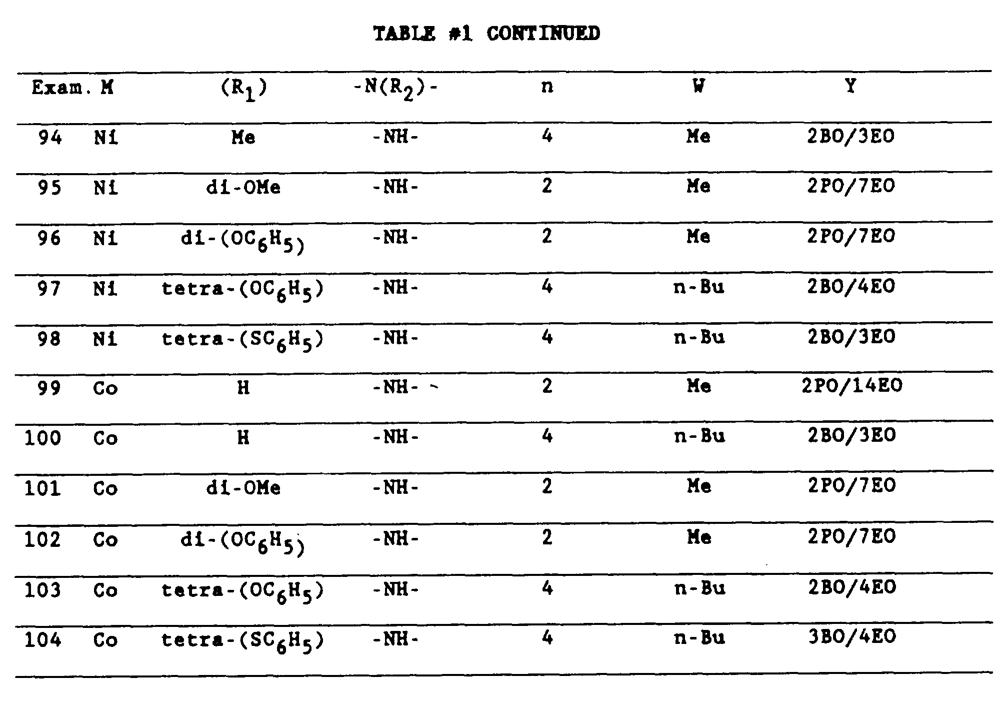

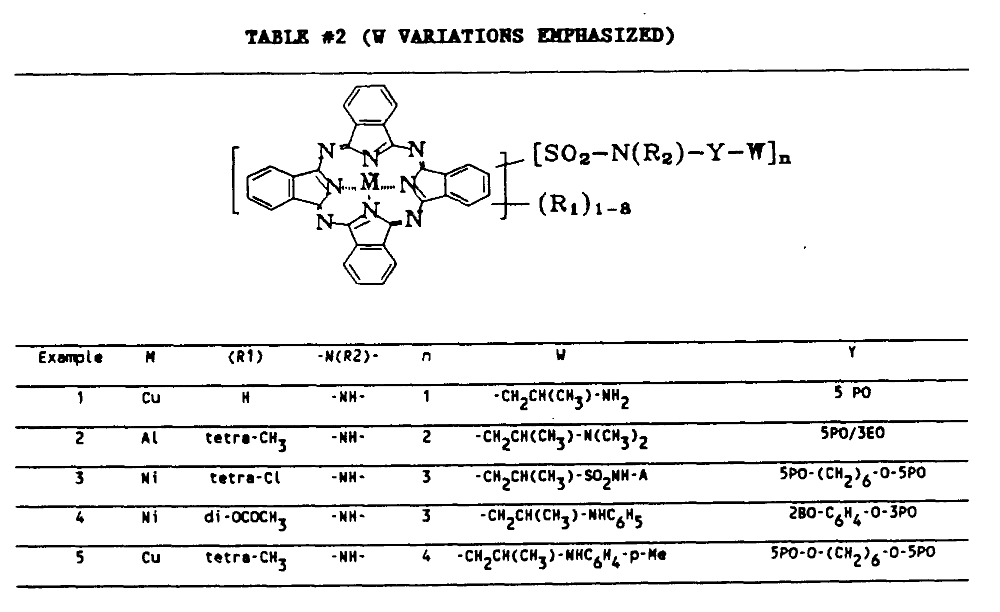

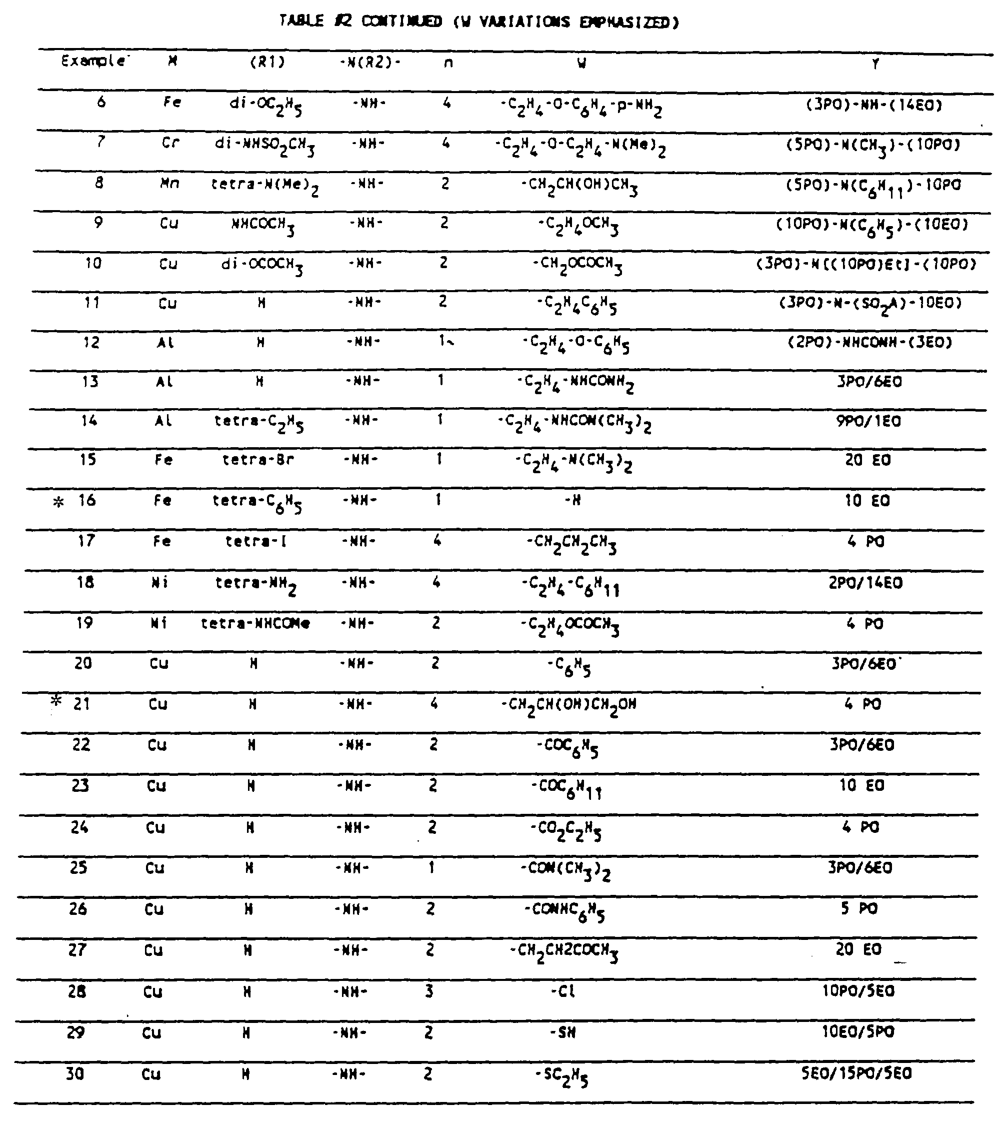

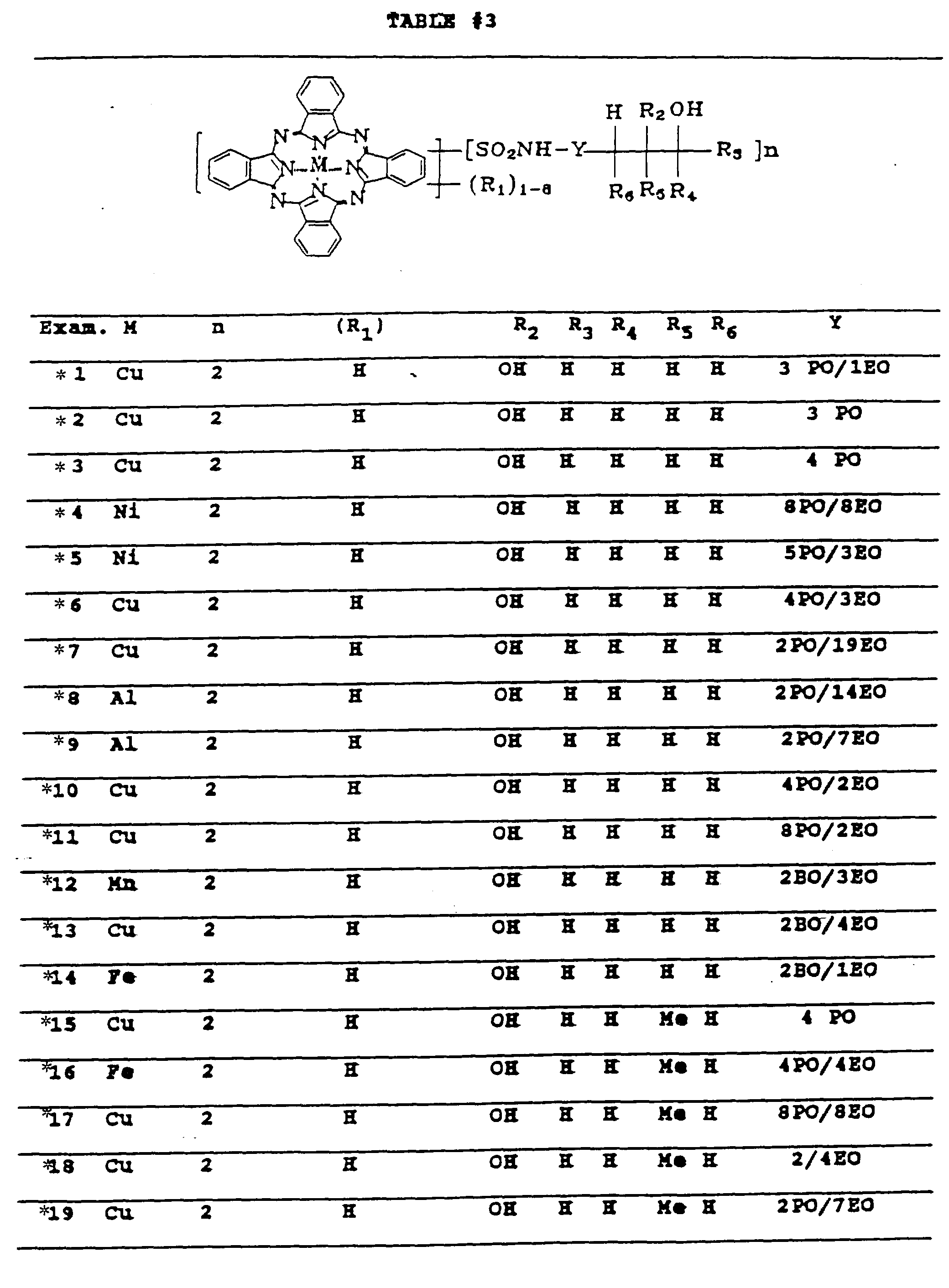

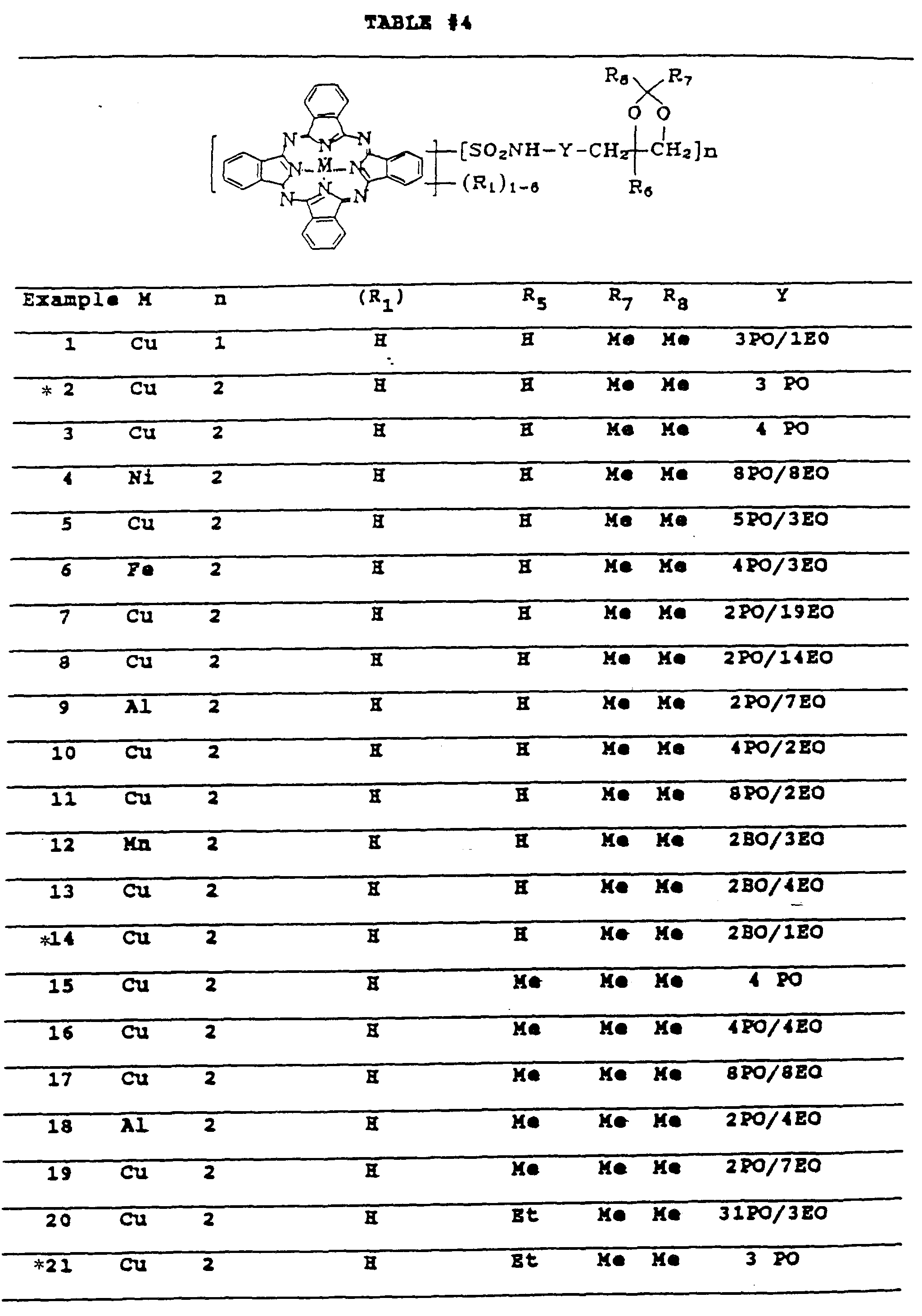

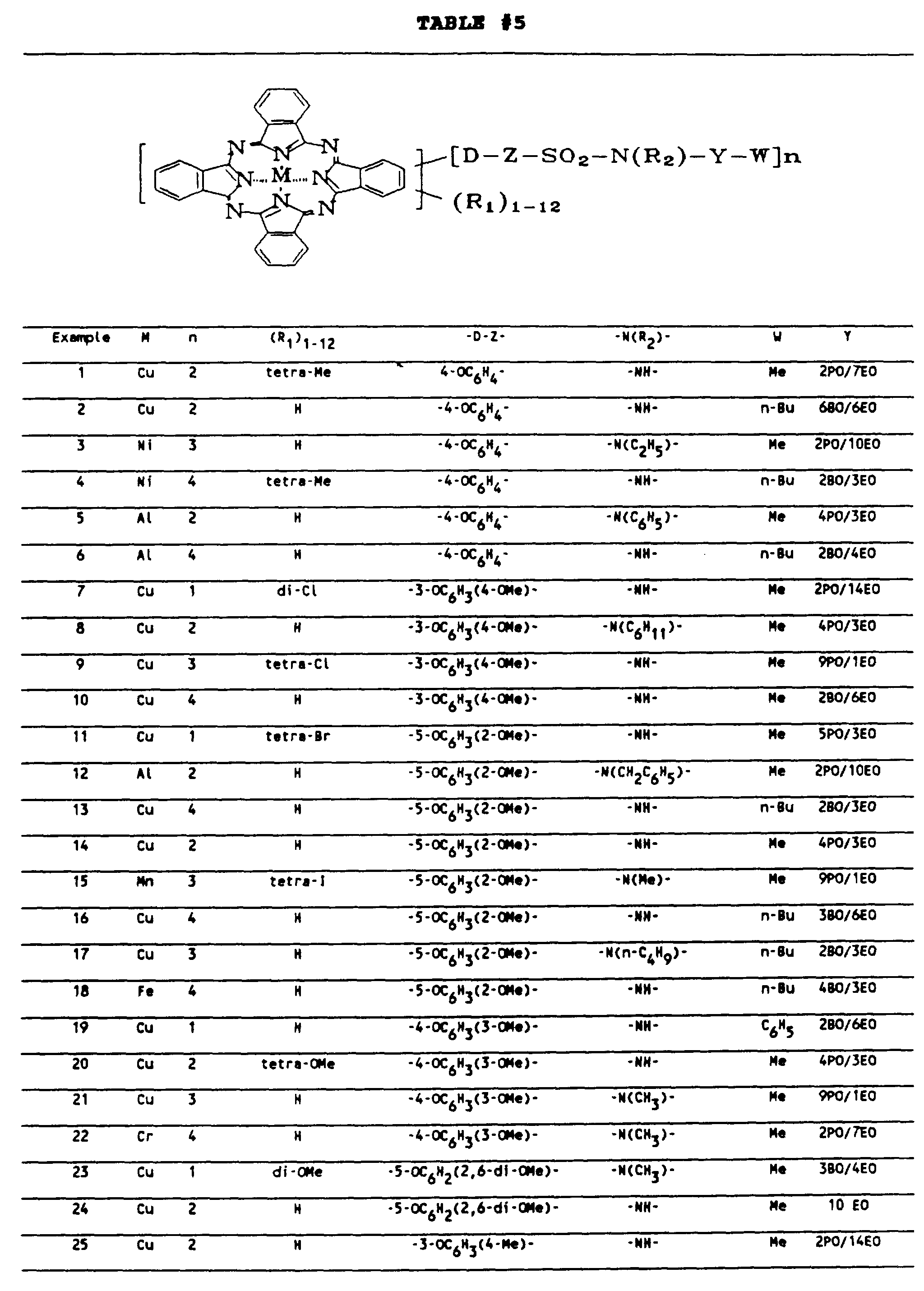

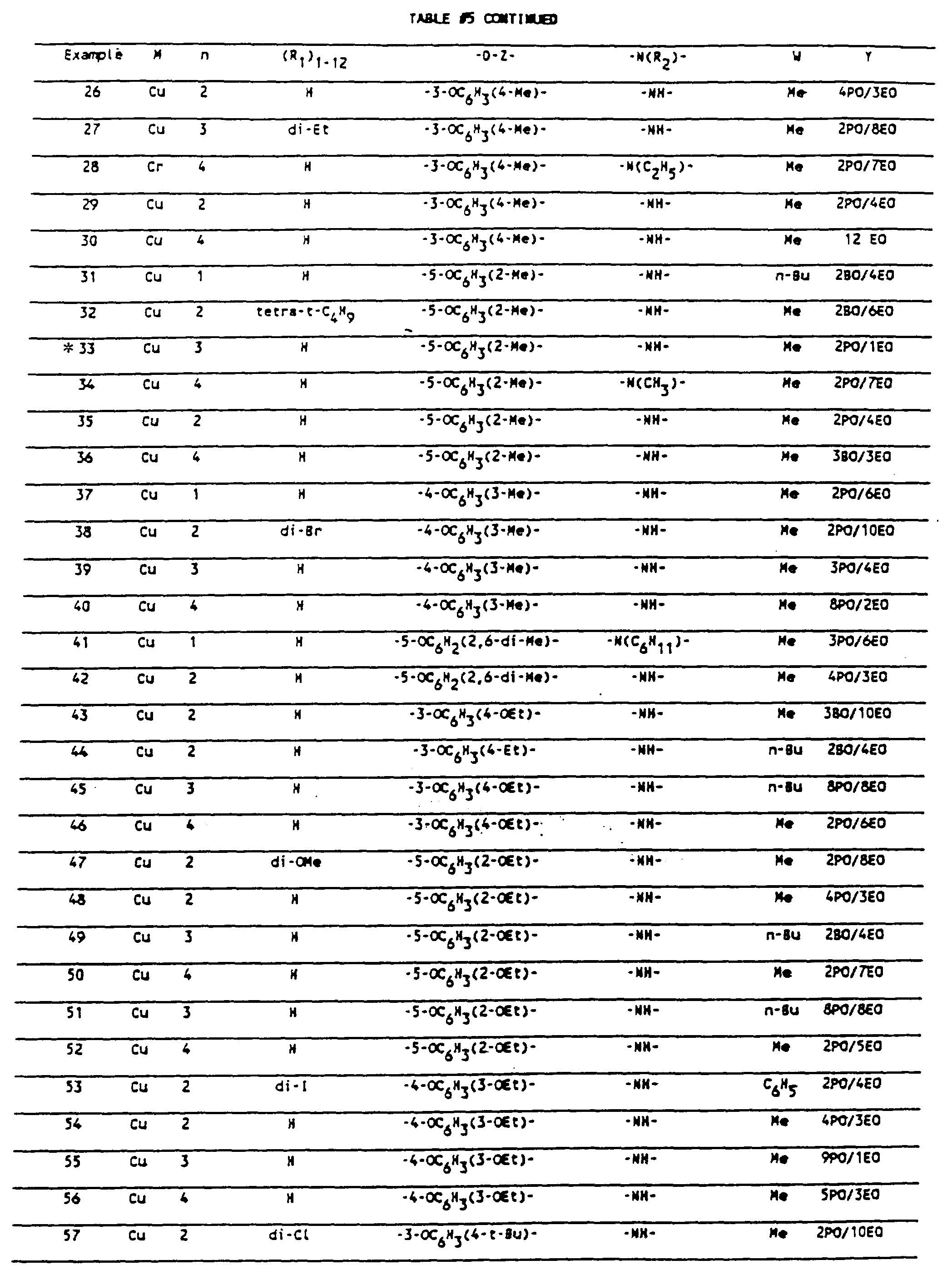

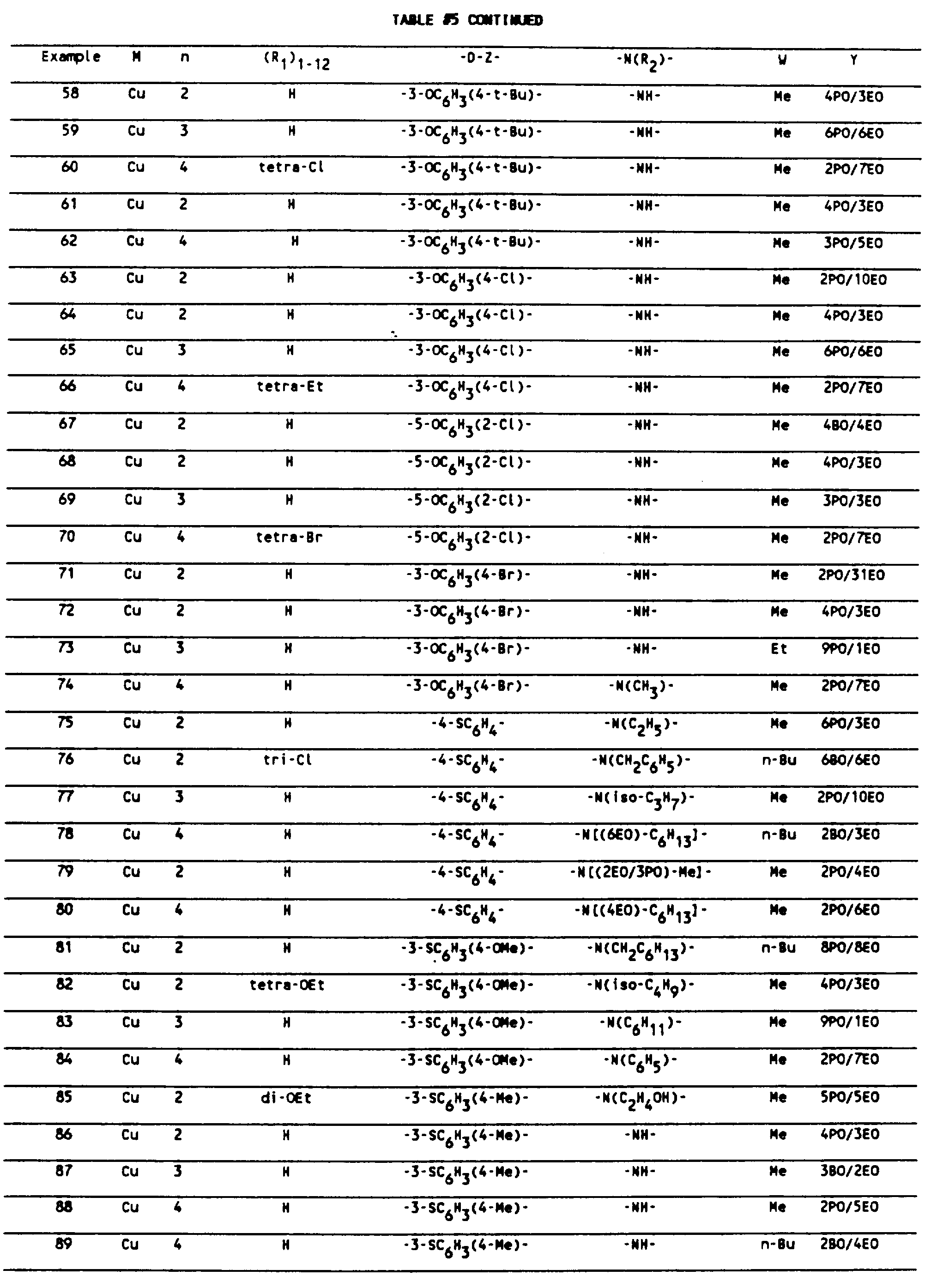

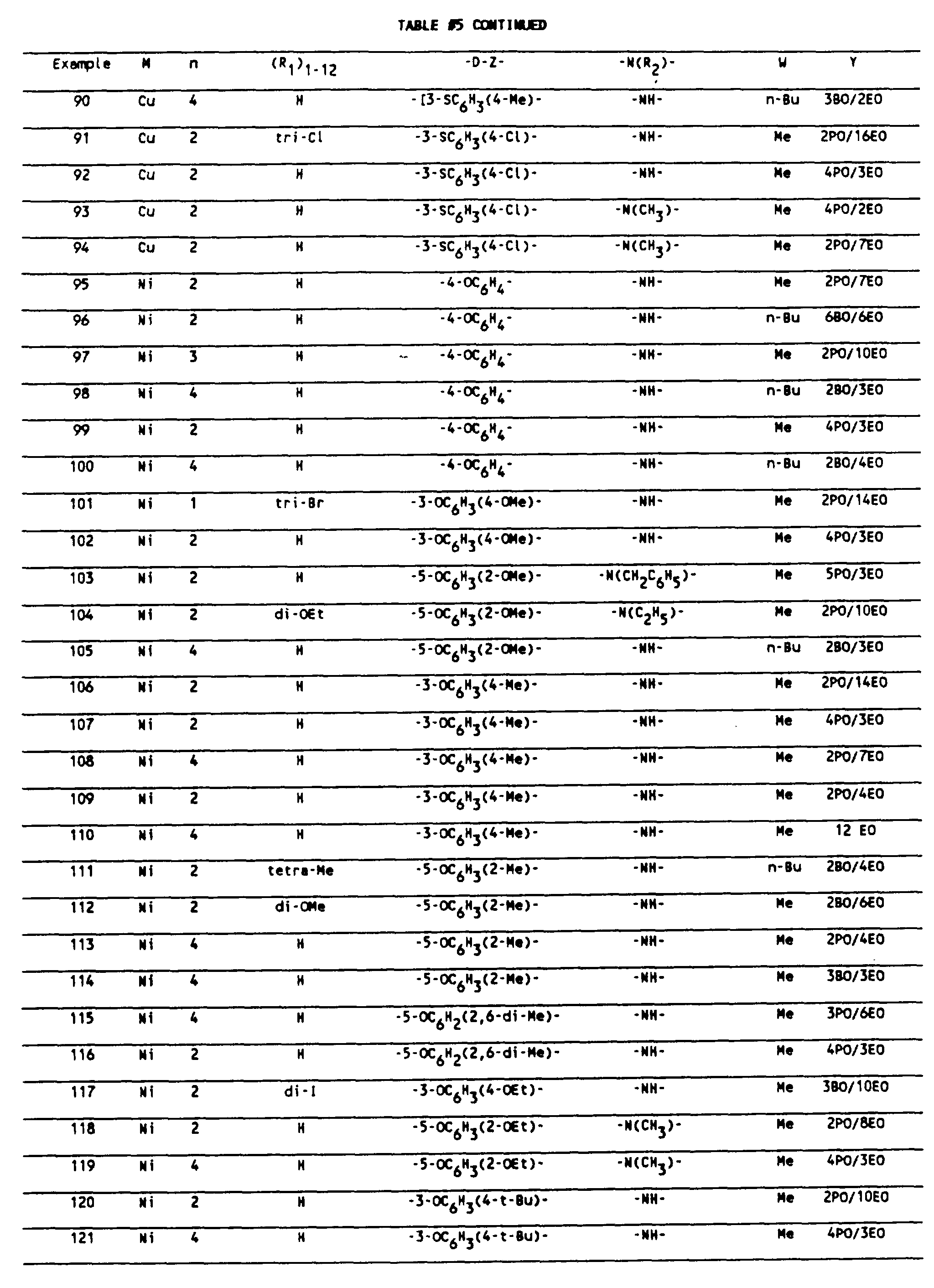

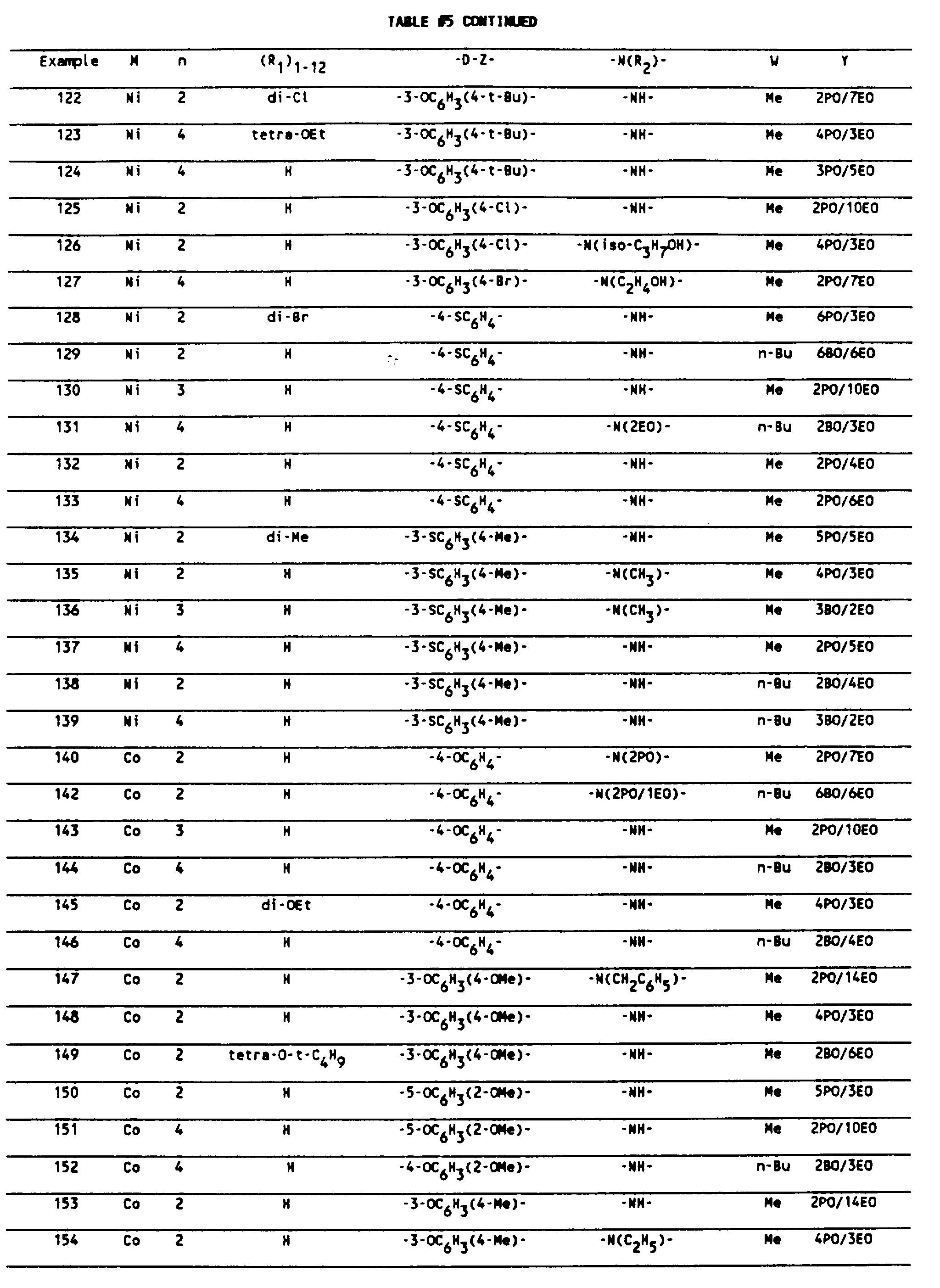

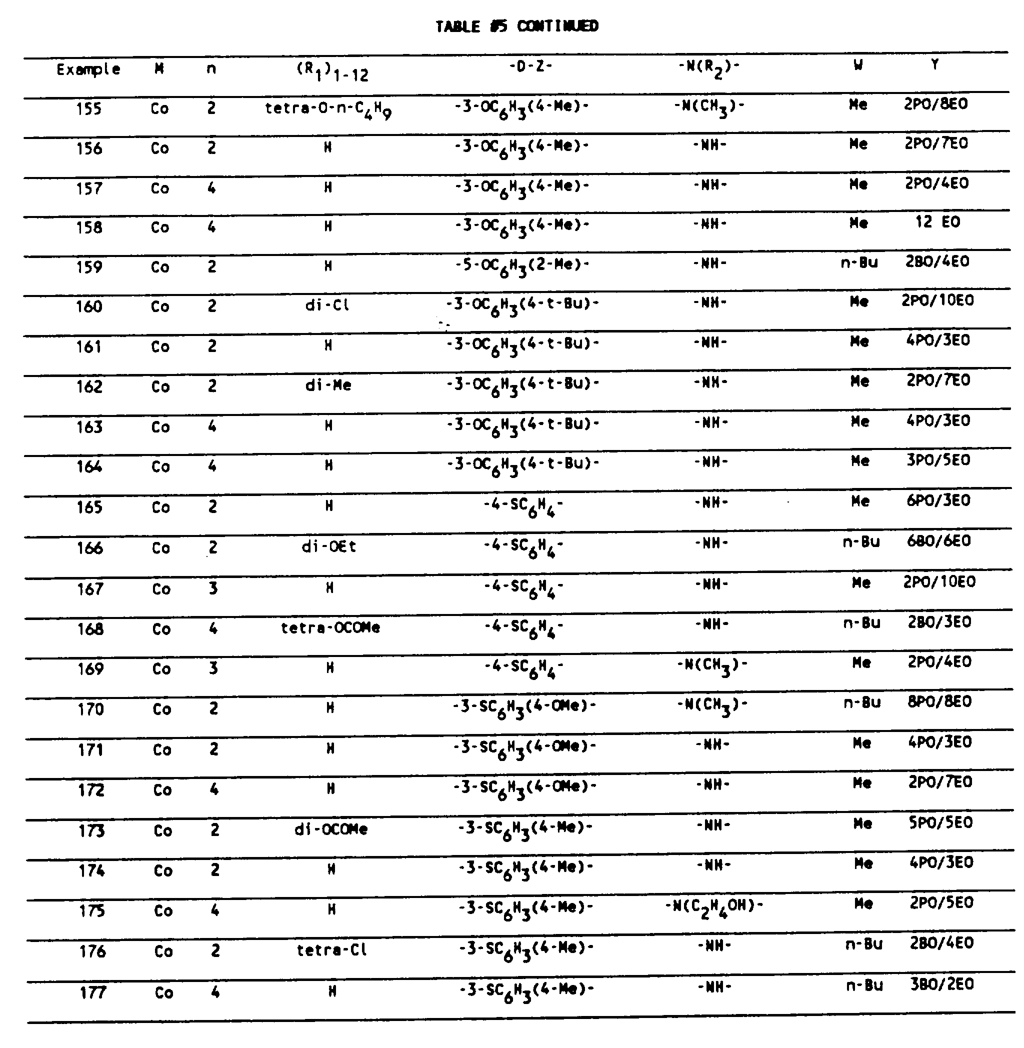

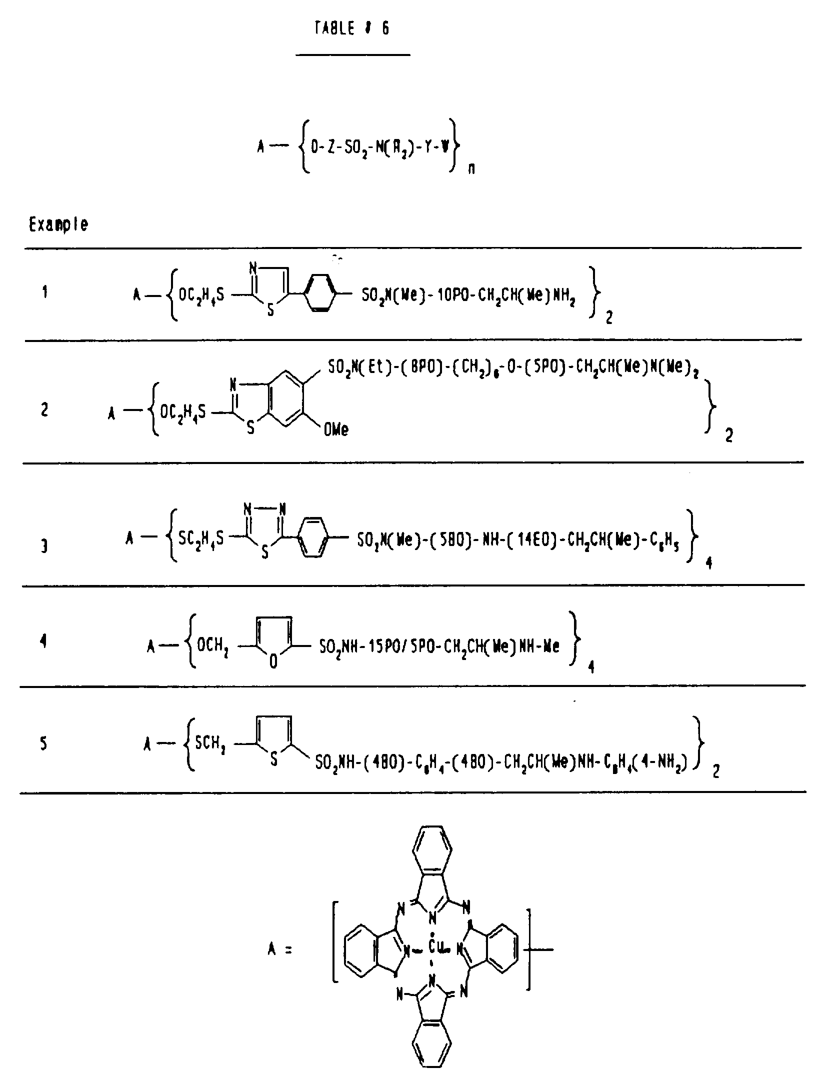

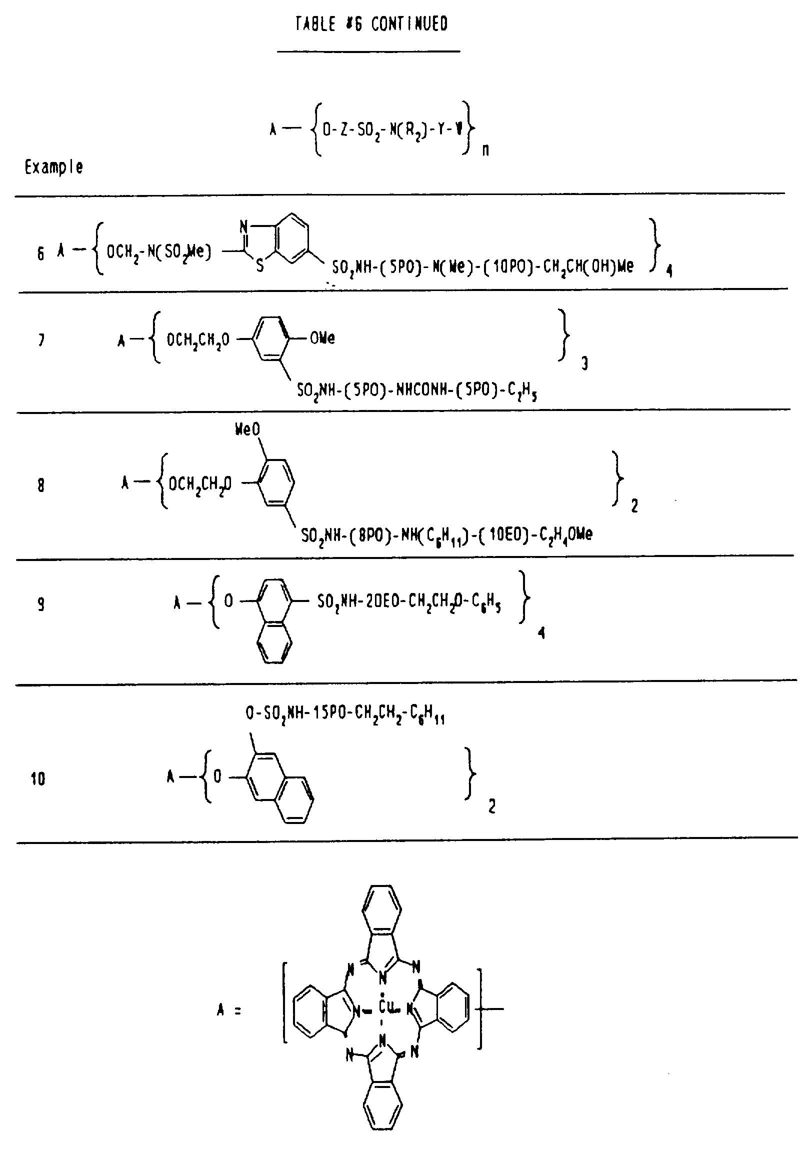

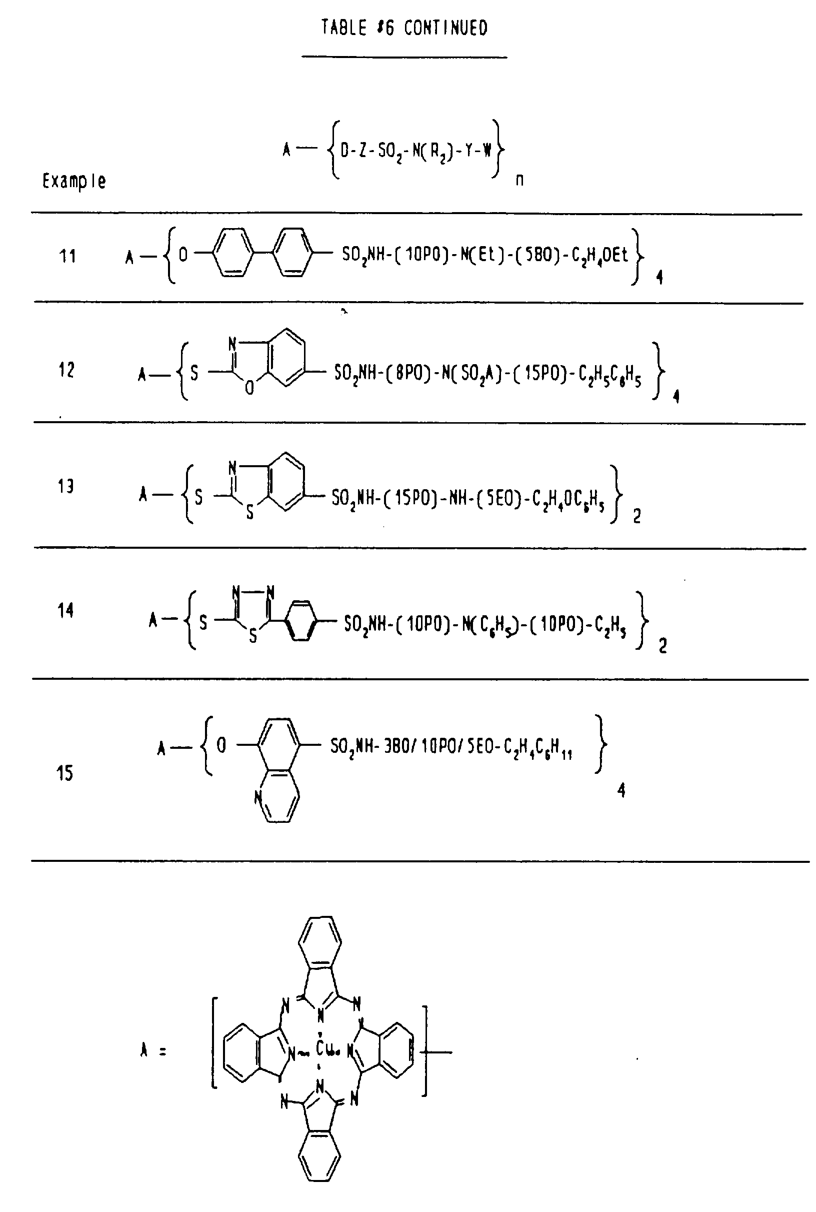

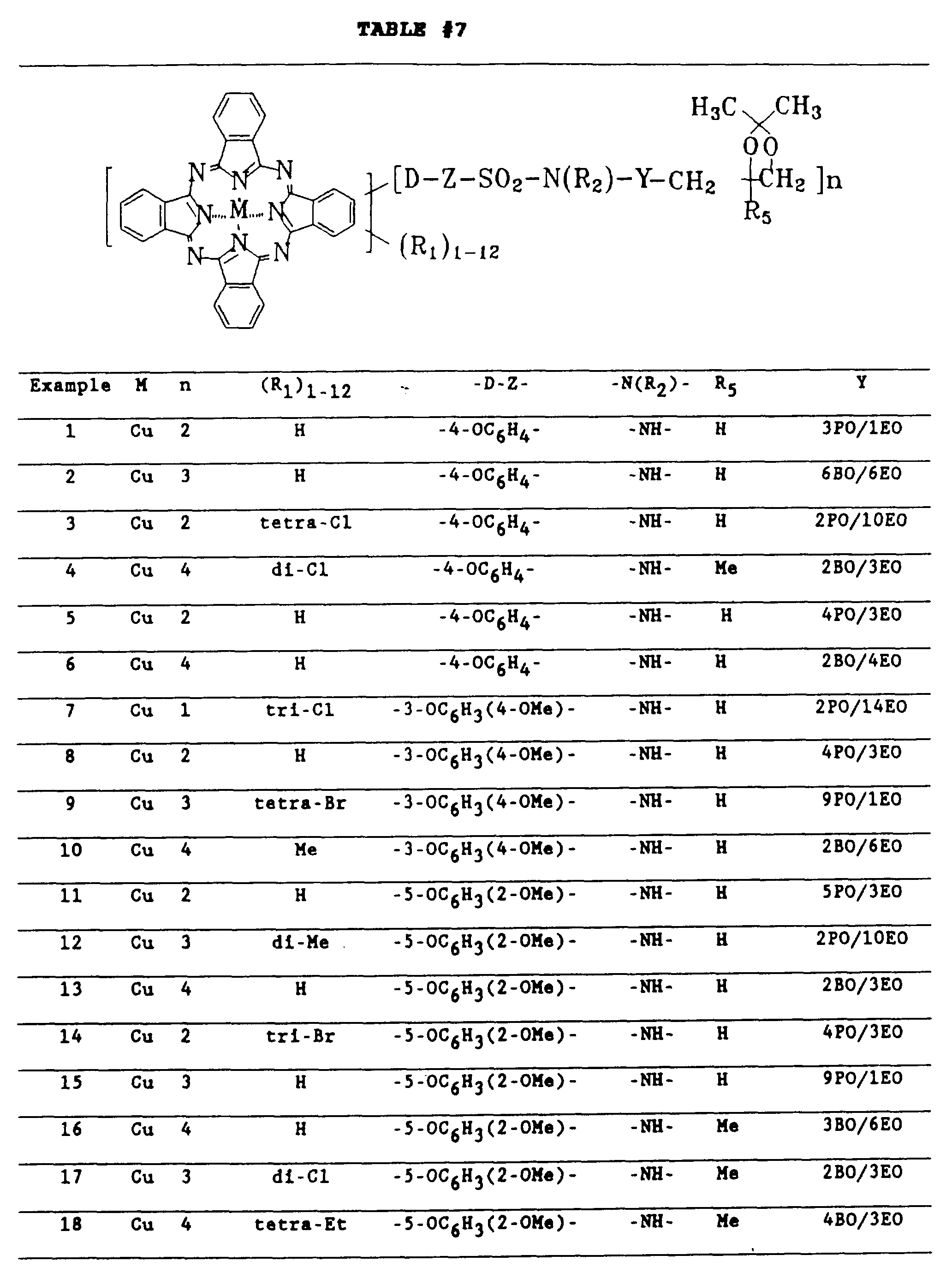

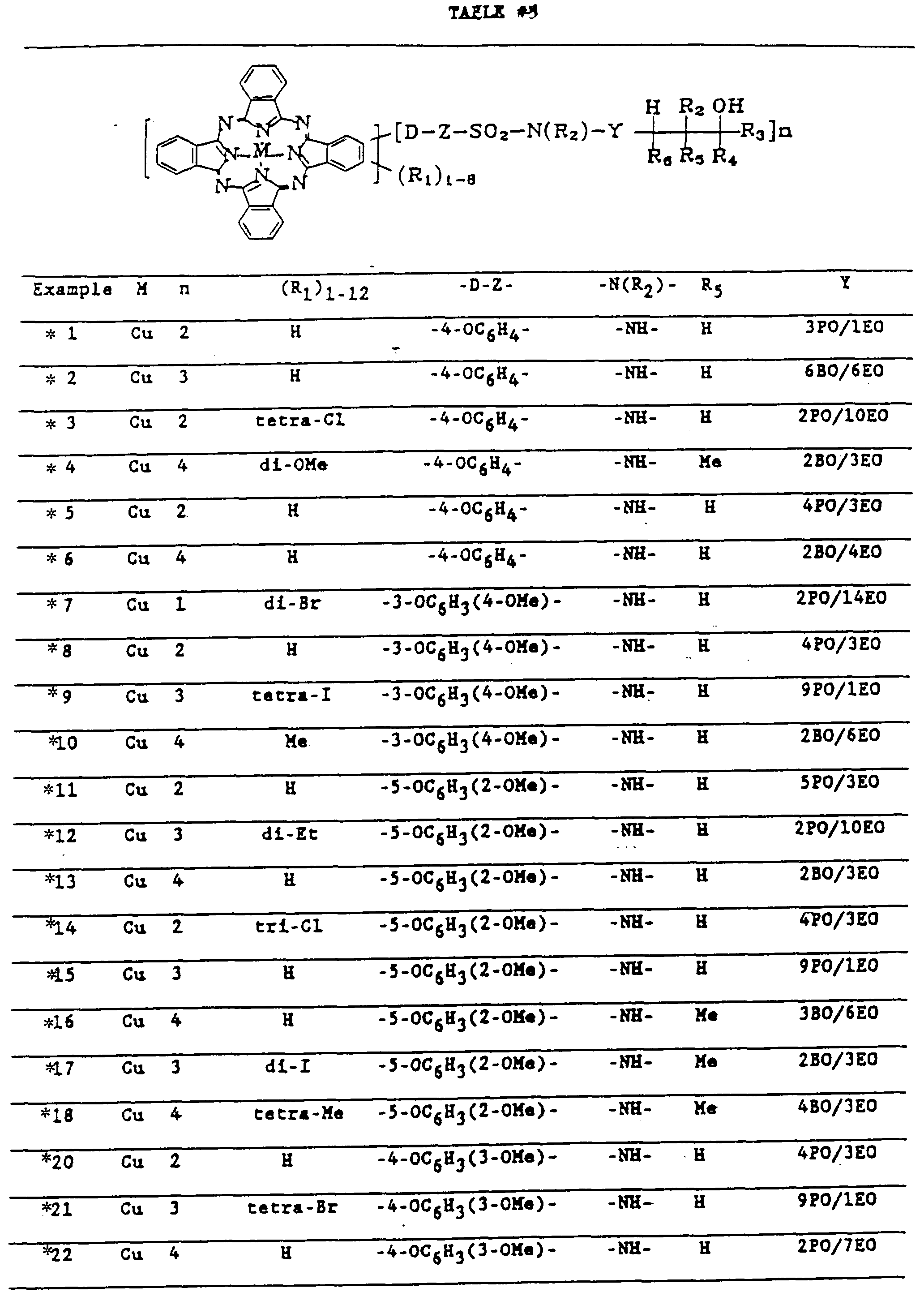

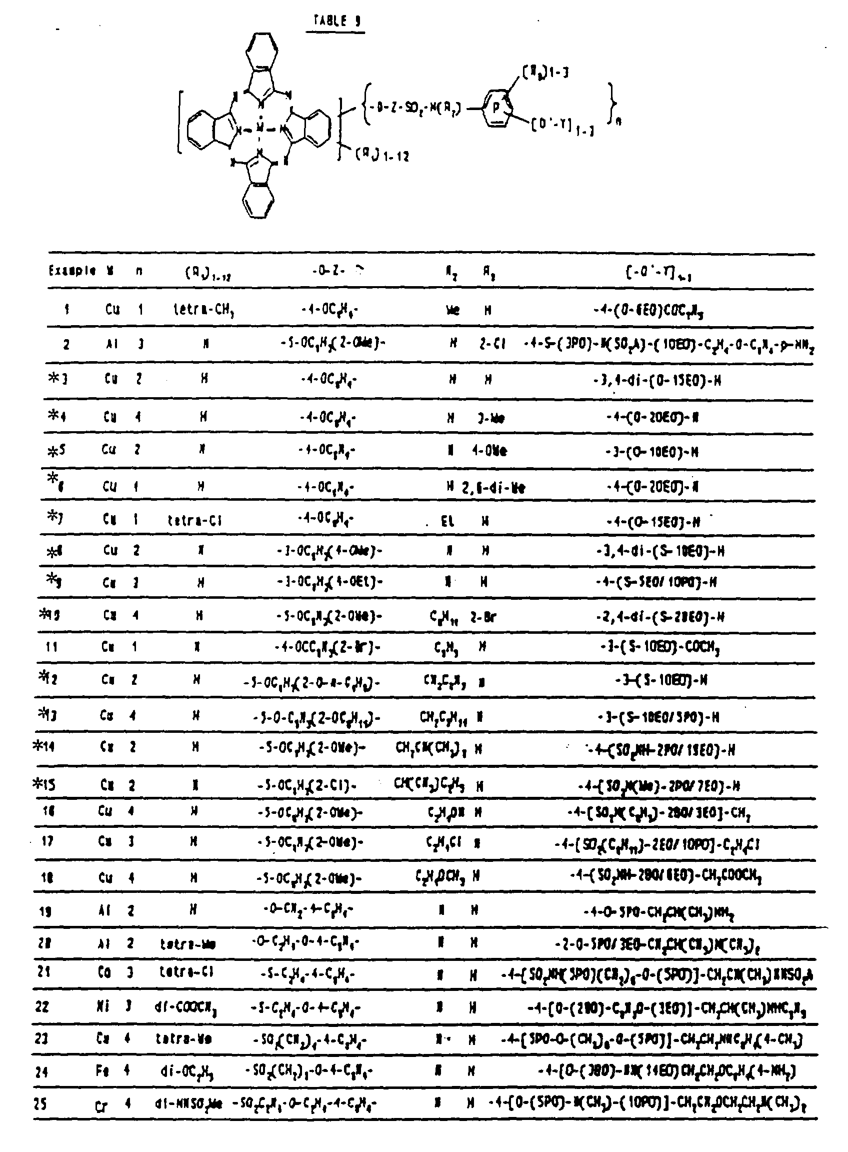

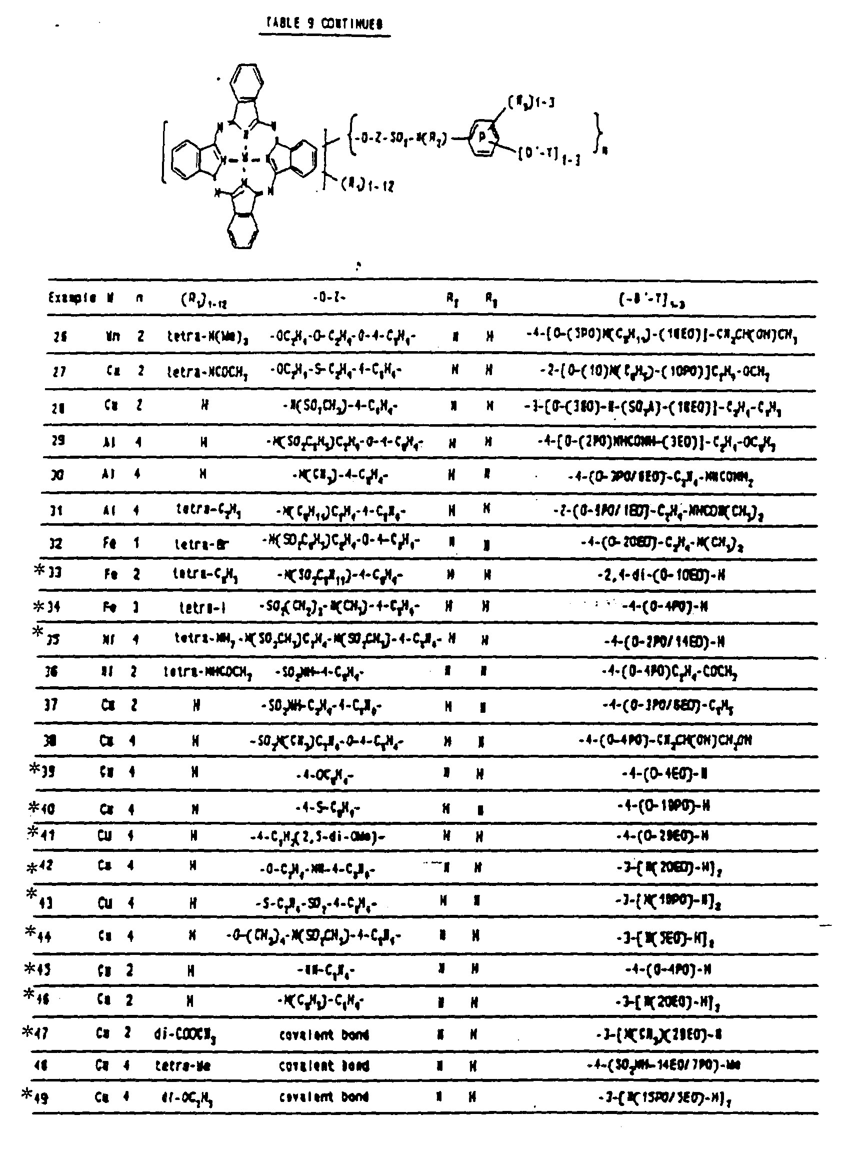

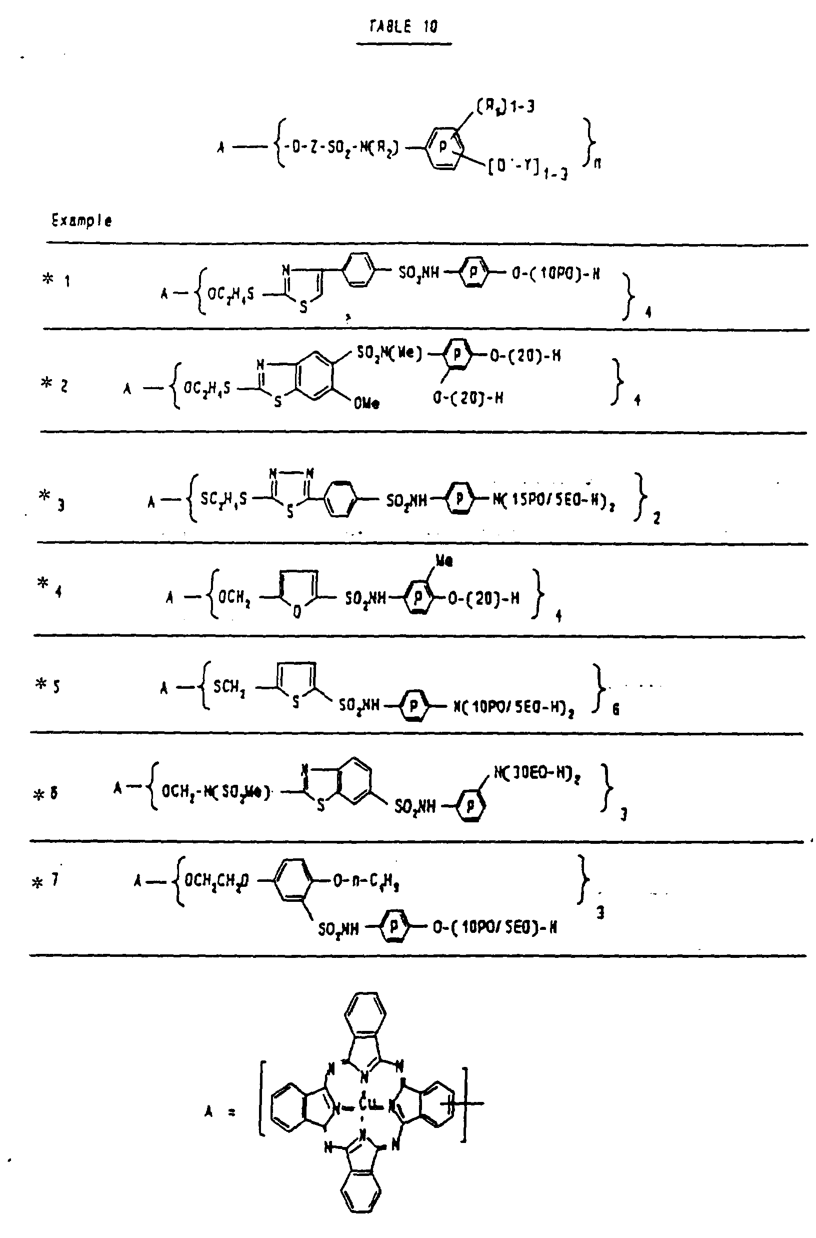

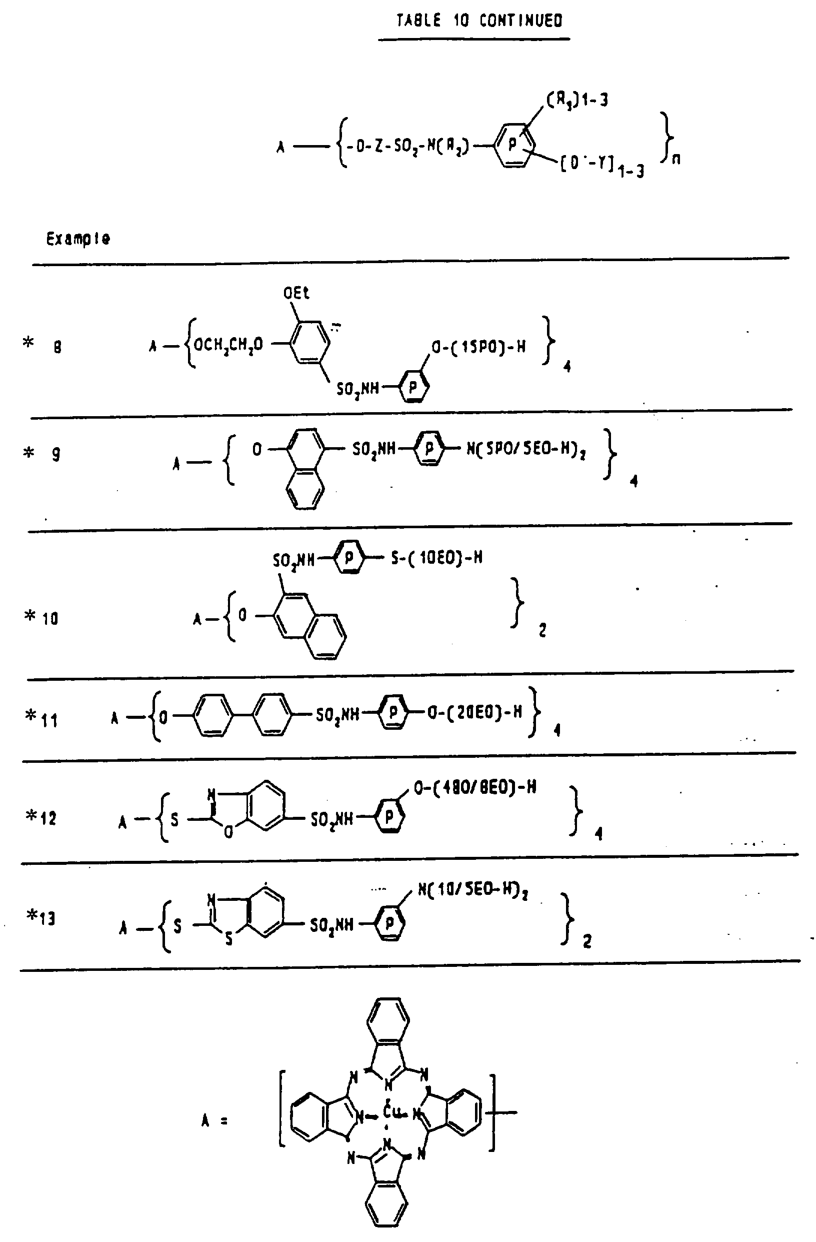

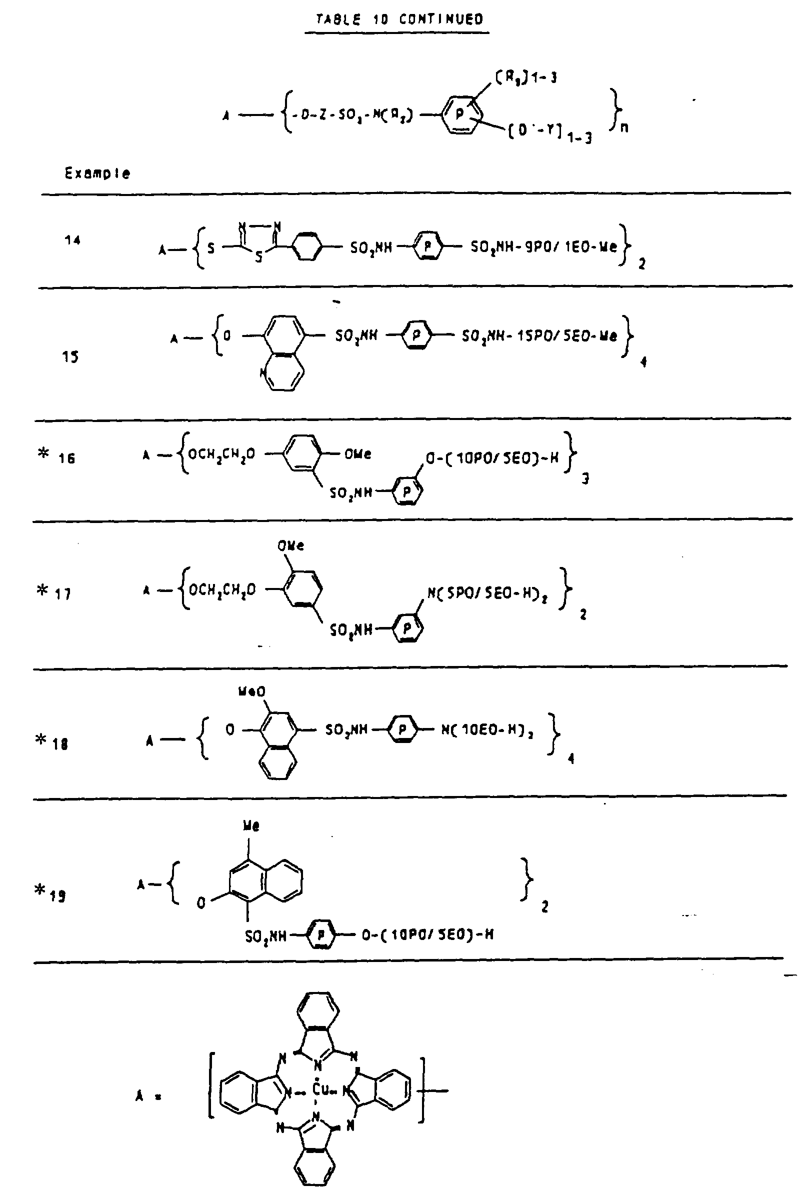

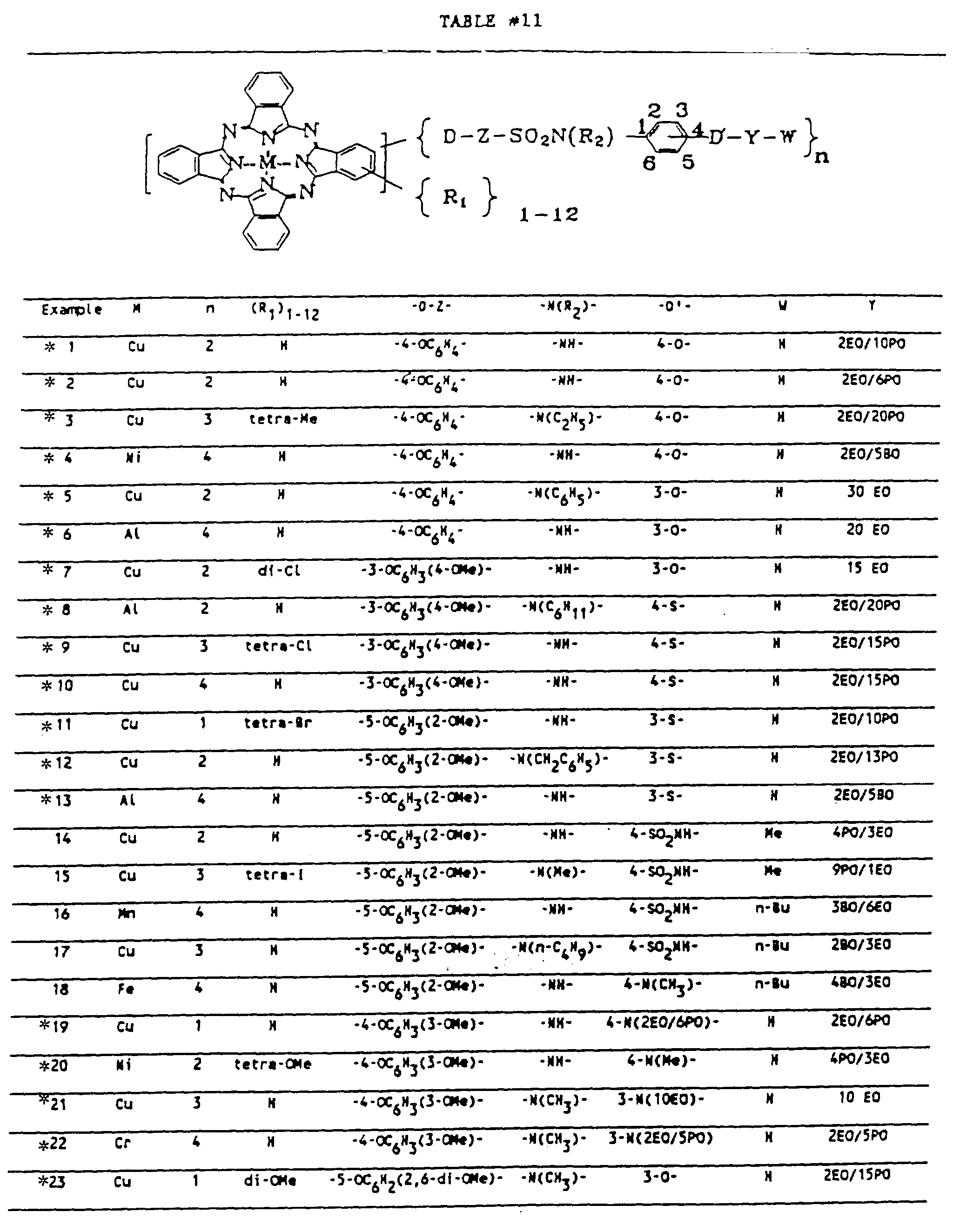

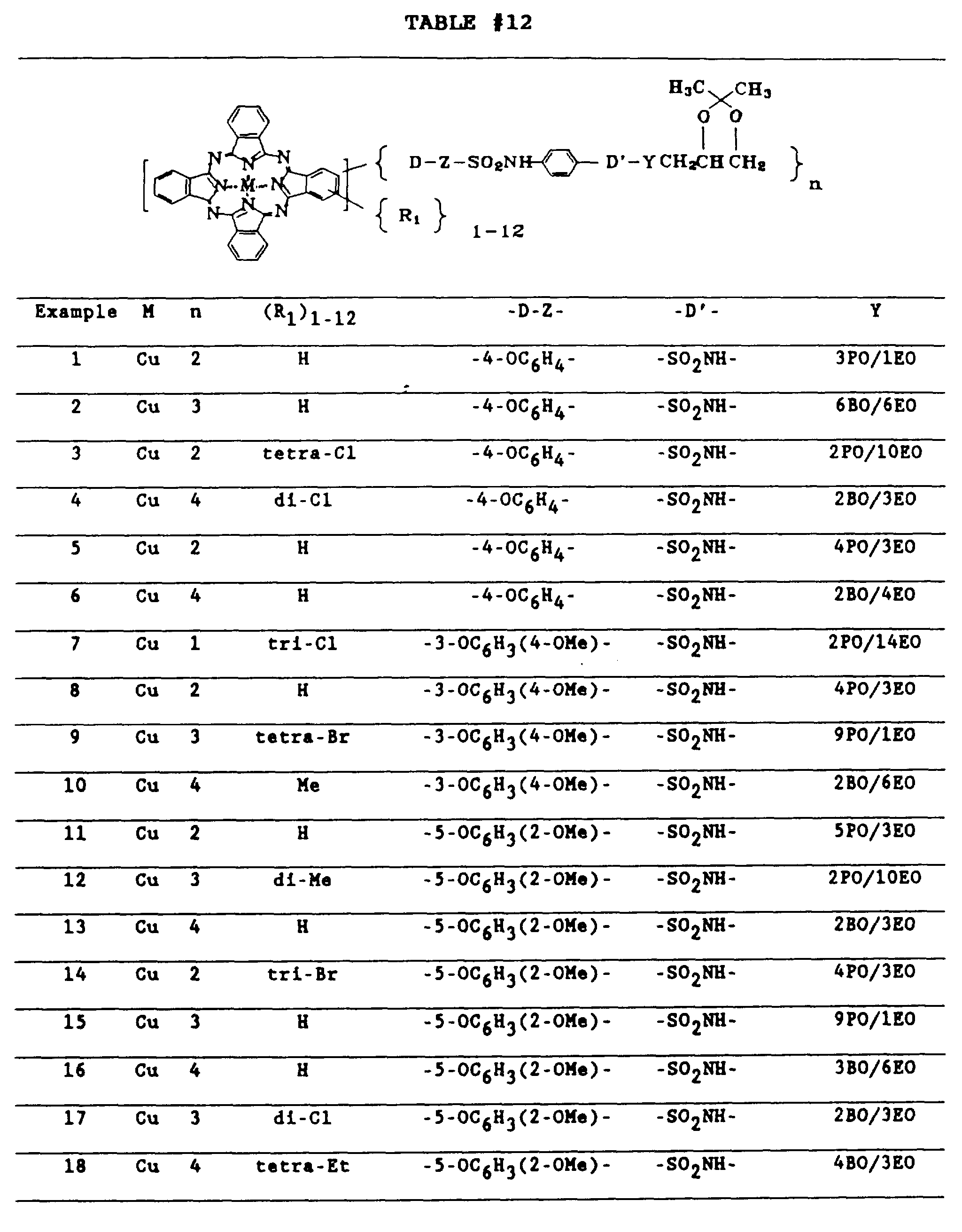

## Claims

1. A colorant having the formula: 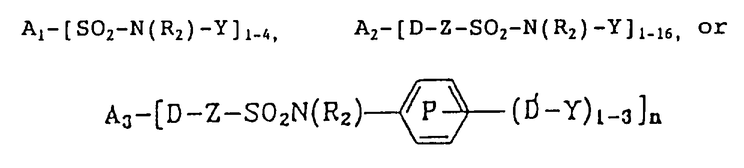 wherein R₂ is selected from H or unsubstituted or substituted alkyl, cycloalkyl, aryl or Y; A₁, A₂, and A₃ are each a nonionic metallophthalocyanine chromophore which can be substituted or unsubstituted; Z is an arylene moiety; each D or D' is selected from a covalent bond or a linking group consisting of or containing at least one of -O-, -S-, -N(R₃)-, or -N(SO₂R₄)- as the linking moiety, wherein R₄ is unsubstituted or substituted alkyl, cycloaliphatic or aryl, and R₃ is R₄ or hydrogen; or D in combination with Z can also be a covalent bond; ring P can be unsubstituted or substituted in addition to the -(D'-Y) moieties; Y is a poly(oxyalkylene) moiety having an average molecular weight of from about 150 to about 10,000 and comprised of at least about 50 mole percent of monomeric units or mixture thereof of the formula (-RO-) wherein each R is substituted or unsubstituted straight or branched alkylene of 2-4 carbons or mixtures thereof, and containing more than three -RO- units, at least one group Y terminating in a group selected from alkyl, aryl, acyl, alkoxyalkyl, acyloxyalkyl and 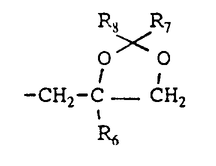 wherein each of groups R₆, R₇ and R₈ may independently be a hydrogen atom or an alkyl or aryl group and wherein each aliphatic hydrocarbon portion or moiety of the groups, moieties or substituents recited above contains from 1-20 carbons, and wherein n is 1-16, except that when -D-Z- is a covalent bond n is 1 to 4.

2. A colorant having the formula A₁-[SO₂-N(R₂)-Y]₁₋₄ wherein;
R is selected from hydrogen, alkyl, cycloalkyl, aryl or Y;
A₁ is a nonionic, metallophthalocyanine chromophore which can be substituted with 1-8 substituents selected from halogen, alkyl, alkoxy, alkylthio, or aryloxy;
Y is a poly(oxyalkylene) moiety comprised of more than three monomeric units or mixture thereof of the formula (-RO-) wherein each R is substituted or unsubstituted straight or branched alkylene of 2-4 carbons or mixtures thereof, up to about 20 mole percent of said monomeric units may be interconnected by one or more linking groups selected from alkyleneoxy, aryleneoxy, alkylenedioxy, alkylenetrioxy, -N(R₃)- or -N(R₂)CON(R₂)-, wherein each R₃ is selected from R₂ or -SO₂-A₁, and wherein Y can be terminated by or contain as branch substituents, 1-3 groups or moieties selected from alkyl, cycloalkyl, acyl, or aryl; and wherein any of the above recited hydrocarbon groups, moieties or substituents may themselves be substituted with up to four substituents selected from alkyl, halogen, mercapto, alkylthio, arylthio, aryl, cycloalkyl, alkoxycarbonyl, hydroxy, alkoxy, alkylenedioxy, -N(R₂)CO(R₂)(R₂), -N(R₂)SO₂-A, -N(R₂)-acyl, or acyloxy.

3. A colorant according to Claim 1 wherein A₂ is a nonionic metallophthalocyanine chromophore which can be substituted with 1-12 substitutents selected from halogen, alkyl, alkoxy, alkylthio, or aryloxy; Y is a poly(oxyalkylene) moiety comprised of more than three monomeric units of the formula (-RO-) wherein, each R is straight or branched alkylene of 2-4 carbons or mixtures thereof, up to about 20 mole percent of said monomeric units may be connected by one or more linking groups selected from alkyleneoxy, aryleneoxy, alkylenedioxy, alkylenetrioxy, -N(R₅)-, or -N(R₂)CON(R₂)-; wherein each R₅ is selected from R₂ or -SO₂-A₂, and wherein Y can be terminated by hydrogen, or by or contain as branch substituents, 1-3 groups or moieties selected from alkyl, cycloalkyl, acyl, or aryl; wherein any of the above recited hydrocarbon groups, moieties or substituents may themselves be substituted with up to four substitutents selected from alkyl, aryl, aryloxy, alkoxyalkyl, aryloxyalkyl, halogen, alkoxycarbonyl, hydroxy, alkoxy, alkylenedioxy, -CON(R₂)(R₂), -N(R₂)CON(R₂)(R₂), -N(R₂)(R₂), -N(R₂)SO₂-A₂, -N(R₂)-acyl, or acyloxy; and wherein each aliphatic hydrocarbon portion or moiety of the groups, moieties or substituents recited above contains from 1-12 carbons.

4. A colorant according to Claim 1 wherein A₃ is a nonionic metallophthalocyanine chromophore which can be substituted with 1-12 substitutents selected from halogen, alkyl, alkoxy, alkylthio, or aryloxy; Y is a poly(oxyalkylene) moiety comprised of more than three monomeric units of the formula (-RO-) wherein, each R is straight or branched alkylene of 2-4 carbons or mixtures thereof, up to about 20 mole percent of said monomeric units may be connected by one or more linking groups selected from alkyleneoxy, aryleneoxy, alkylenedioxy, alkylenetrioxy, -N(R₅)-, or -N(R₂)CON(R₂)-; wherein each R₅ is selected from R₂ or -SO₂-A₃, and wherein Y can be terminated by hydrogen, or by or contain as branch substitutes, 1-3 groups or moieties selected from alkyl, cycloalkyl, acyl, or aryl; wherein any of the above recited hydrocarbon groups, moieties or substituents may themselves be substituted with up to four substituents selected from alkyl, aryl, aryloxy, alkoxyalkyl, aryloxyalkyl, halogen, alkoxycarbonyl, hydroxy, alkoxy, alkylenedioxy, -CON(R₂)(R₂), -N(R₂)CON(R₂)(R₂), -N(R₂)(R₂), -N(R₂)SO₂-A₃, -N(R₂)-acyl, or acyloxy; and wherein each aliphatic hydrocarbon portion or moiety of the groups, moieties or substituents recited above contains from 1-12 carbons.

5. A colorant of Claim 1 wherein the metal is copper, each Y has an average molecular weight of from about 200 to about 1500 and each aliphatic hydrocarbon portion or moiety of the said groups, moieties or substituents contains from 1-12 carbons.

6. A colorant as claimed in any of Claims 1 to 5 wherein the chromophore nuclei are unsubstituted.

7. A colorant as claimed in any of Claims 1 to 6 wherein Y is terminated with a group of the formula: 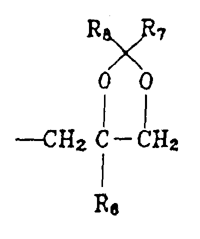 wherein each of R₆, R₇ and R₈ is selected from hydrogen, alkyl, or aryl.

8. A colorant as claimed in any of Claims 1 to 7 wherein the total mole percentage of all linking groups for the total -(RO)- units in Y is from zero to about 10 percent.

9. A colorant as claimed in any of Claims 1 to 8 wherein each of R₂ or R₃ is hydrogen.

10. A colorant as claimed in any of Claims 1 to 9 wherein R is -CH₂CH₂-, -CH(CH₃)CH₂-, -CH(C₂H₅)CH₂-, or mixtures thereof.

11. A colorant as claimed in any of Claims 1 to 6 or 8 to 10 wherein Y is selected from those of the formula: -2PO/14EO-Me; -2PO/7EO-Me; -2PO/1OED-Me; 2PO/14EO-Me; -3PO/6EO-CH(CH₃)CH₂C(OH)(CH₃)₂; -4PO-CH₂CH(OH)CH₂OH; and

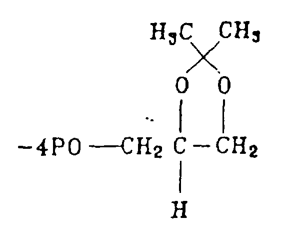

12. A colorant as claimed in any of Claims 1 to 11 wherein the chromophore is an unsubstituted phthalocyanine of Cu, Ni or Co; R₂ is hydrogen; and Y is terminated with a group selected from alkyl, mono- or dihydroxy alkyl, or cyclic dioxyalkylene.

13. A colorant as claimed in any of Claims 1 to 12 wherein -D-Z- is selected from -O-arylene-, -S-arylene-, -SO₂-arylene-, -N(R₃)-arylene-, -N(SO₂R₄)-arylene-, or -O-alkylene-O-arylene-.

14. A colorant according to any of Claims 1 to 12 wherein -D-Z- is a covalent bond.

15. A polymeric or resinous material composition containing from about 0.0001 to about 10.0 weight percent of one or a mixture of any of the colorants as defined in any of Claims 1 to 14.

16. The composition of Claim 15 wherein the colorant or mixtures of colorants comprises from about 0.001 to about 3.0 weight percent of the composition.

17. The composition as claimed in either of Claims 15 and 16 wherein said resinous material is thermoplastic.

18. The composition as claimed in either of Claims 15 and 16 wherein said resinous material is thermosetting.

19. The composition of any of Claims 15 to 18 wherein said polymeric or resinous material is polyurethane.

20. The composition of any of Claims 15 to 17 wherein said thermoplastic resin is selected from polyethylene, linear low density polyethylene, polypropylene, polybutylene, co-polymers made from ethylene, propylene and/or butylene, polyvinyl chloride, polyvinylidene chloride, cellulosic resins, cellulose acetate, cellulose acetate butyrate and cellulose acetate propionate, acrylic resins such as polymethyl methacrylate, styrene acrylonitrile, polystyrene, polycarbonate and acrylonitrile butadiene-styrene (therein ABS), polyamides such as nylon 6 and nylon 66 and polyesters such as polyethylene terephthalate, especially glycol modified polyethylene terephthalate and polybutylene terephthalate.

21. A composition as claimed in Claim 20 wherein said resin material comprises a polyester.

22. A formed structure comprised of a solid composition of any of Claims 15 to 21.

23. The process for preparing a colorant of Claim 2 comprising reacting at a temperature of from about 0°C to about 100°C, a metallophthalocyanine of the formula A₁-(SO₂X)₁₋₄ with at least a stoichiometric quantity of an amine of the formula HN(R₂)Y wherein X is selected from Cl, F, Br, I, or alkoxy of 1-4 carbons.

24. The process for preparing a colorant of Claim 3 comprising reacting at a temperature of from about 0°C to about 100°C, a metallophthalocyanine of the formula A₂-(D-Z-SO₂X)₁₋₁₆ with at least a stoichiometric quantity of an amine of the formula HN(R2)Y wherein X is selected from Cl, F, Br, I or alkoxy of 1-4 carbons.

## Patentansprüche

1. Färbende Verbindung mit der Formel 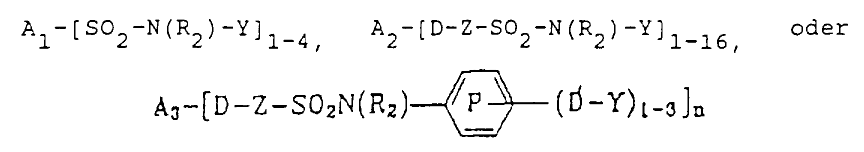 worin: R₂ ausgewählt ist aus Wasserstoff oder unsubstituiertem oder substituiertem Alkyl, Cycloalkyl, Aryl oder Y; A₁, A₂ und A₃ sind jeweils ein nichtionisches Metallphthalocyanin-chromophor, das substituiert oder unsubstituiert sein kann; Z ist ein Arylenrest; jeweils D oder D' ist ausgewählt aus einer kovalenten Bindung oder einer Verknüpfungsgruppe, die besteht aus oder wenigstens enthält wenigstens eine von -O-, -S-, -N(R₃)- oder -N(SO₂R₄)- als den verknüpfenden Rest, worin R₄ unsubstituiertes oder substituiertes Alkyl, Cycloaliphatisches oder Aryl ist und R₃ gleich R₄ oder Wasserstoff ist; oder D kann in Kombination mit Z auch eine kovalente Bindung sein; Ring P kann zusätzlich zu den -(D'-Y)-Resten unsubstituiert oder substituiert sein; Y ist ein Polyoxyalkylenrest mit einem durchschnittlichen Molekulargewicht von etwa 150 bis etwa 10 000 und umfaßt wenigstens etwa 50 mol% Monomereinheiten oder Mischungen davon der Formel (-RO-), worin R jeweils substituiertes oder unsubstituiertes, geradkettiges oder verzweigtkettiges Alkylen mit 2-4 Kohlenstoffatomen oder Mischungen davon ist, und mehr als drei -RO- Einheiten enthält, wobei mindestens eine Gruppe von Y in eine Gruppe endet, die aus Alkyl,Aryl, Acyl, Alkoxyalkyl, Acyloxyalkyl und 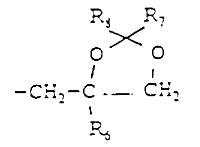 gewählt ist,
worin jede Gruppe von R₆, R₇ und R₈ unabhängig ein Wasserstoffatom oder eine Alkyl- oder Arylgruppe sein kann, und worin jeder aliphatische Kohlenwasserstoffteil oder Rest der Gruppen, Reste oder Substituenten, die zuvor genannt wurden, 1-20 Kohlenstoffatome enthält und worin n 1-16 ist, ausgenommen wenn -D-Z- eine kovalente Bindung ist, n gleich 1 bis 4 ist.

2. Färbende Verbindung mit der Formel
A₁-[SO₂-N(R₂)-Y]₁₋₄,
worin:
R₂ ausgewählt ist aus Wasserstoff, Alkyl, Cycloalkyl, Aryl oder Y;
A₁ ist ein nichtionisches Metallphthalocyanin-chromophor, das mit 1-8 Substituenten, ausgewählt aus Halogen, Alkyl, Alkoxy, Alkylthio oder Aryloxy, substituiert sein kann;
Y ist ein Polyoxyalkylenrest, der mehr als drei Monomereinheiten oder Mischungen davon der Formel (-RO-) enthält, worin R jeweils substituiertes oder unsubstituiertes geradkettiges oder verzweigtkettiges Alkylen mit 2-4 Kohlenstoffatomen oder Mischungen davon ist, wobei bis zu etwa 20 mol% der Monomereinheiten miteinander verknüpft sein können über eine oder mehrere Verknüpfungsgruppen, ausgewählt aus Alkylenoxy, Arylenoxy, Alkylendioxy, Alkylentrioxy, -N(R₃)- oder -N(R₂)CON(R₂)-; wobei R₃ jeweils ausgewählt ist aus R₂ oder -SO₂-A₁ und worin Y terminiert wird oder enthält als Verzweigungssubstituenten 1-3 Gruppen oder Reste, ausgewählt aus Alkyl, Cycloalkyl, Acyl oder Aryl; und worin irgendeine der oben genannten Kohlenwasserstoffgruppen, Reste oder Substituenten selber mit bis zu vier substituenten, ausgewählt aus Alkyl, Halogen, Mercapto, Alkylthio, Arylthio, Aryl, Cycloalkyl, Alkoxycarbonyl, Hydroxy, Alkoxy, Alkylendioxy, -N(R₂)CO(R₂)(R₂), -N(R₂)SO₂-A, -N(R₂)-Acyl oder Acyloxy, substituiert sein kann.

3. Färbende Verbindung gemäß Anspruch 1, worin A₂ ein nichtionisches Metallphthalocyanin-chromophor ist, das mit 1-12 Substituenten, ausgewählt aus Halogen, Alkyl, Alkoxy, Alkylthio oder Aryloxy, substituiert sein kann; Y ist ein Polyoxyalkylenrest, der mehr als drei Monomereinheiten der Formel (-RO-) umfaßt, worin R jeweils geradkettiges oder verzweigtkettiges Alkylen mit 2-4 Kohlenstoffatomen oder Mischungen davon ist, wobei bis zu etwa 20 mol% der Monomereinheiten durch eine oder mehrere Verknüpfungsgruppen, ausgewählt aus Alkylenoxy, Arylenoxy, Alkylendioxy, Alkylentrioxy, -N(R₅)- oder -N(R₂)CON(R₂)-, verknüpft sein können; wobei R₅ jeweils ausgewählt ist aus R₂ oder -SO₂-A₂ und worin Y durch Wasserstoff terminiert sein kann, oder durch 1-3 Gruppen oder Reste, ausgewählt aus Alkyl, Cycloalkyl, Acyl oder Aryl oder diese Gruppen oder Reste als Verzweigungssubstituenten enthält; worin irgendeine der zuvor genannten Kohlenwasserstoffgruppen, Reste oder Substituenten selber mit bis zu vier Substituenten, ausgewählt aus Alkyl, Aryl, Aryloxy, Alkoxyalkyl, Aryloxyalkyl, Halogen, Alkoxycarbonyl, Hydroxy, Alkoxy, Alkylendioxy, -CON(R₂)(R₂), -N(R₂)CON(R₂)(R₂), -N(R₂)(R₂), -N(R₂)SO₂-A₂, -N(R₂)-Acyl oder Acyloxy, substituiert sein kann; und worin die aliphatischen Kohlenwasserstoffteile oder Reste der Gruppen, Reste oder Substituenten, die zuvor genannt wurden, jeweils von 1-12 Kohlenstoffatome enthalten.

4. Färbende Verbindung gemäß Anspruch 1, worin A₃ ein nichtionisches Metallphthalocyanin-chromophor ist, das mit 1-12 substituenten, ausgewählt aus Halogen, Alkyl, Alkoxy, Alkylthio oder Aryloxy, substituiert sein kann; Y ist ein Polyoxyalkylenrest, der mehr als drei Monomereinheiten der Formel (-RO-) umfaßt, worin R jeweils geradkettiges oder verzweigtkettiges Alkylen mit 2-4 Kohlenstoffatomen oder Mischungen davon ist, wobei bis zu etwa 20 mol% der Monomereinheiten durch eine oder mehrere Verknüpfungsgruppen, ausgewählt aus Alkylenoxy, Arylenoxy, Alkylendioxy, Alkylentrioxy, -N(R₅)- oder -N(R₂)CON(R₂)-, verknüpft sein können; worin R₅ jeweils ausgewählt ist aus R₂ oder -SO₂-A₃, und worin Y durch Wasserstoff oder 1-3 Gruppen oder Reste, ausgewählt aus Alkyl, Cycloalkyl, Acyl oder Aryl, terminiert sein kann, oder diese Gruppen oder Reste als Verzweigungssubstituent enthält; worin irgendeine der zuvor genannten Kohlenwasserstoffgruppen, Reste oder Substituenten selber mit bis zu vier Substituenten, ausgewählt aus Alkyl, Aryl, Aryloxy, Alkoxyalkyl, Aryloxyalkyl, Halogen, Alkoxycarbonyl, Hydroxy, Alkoxy, Alkylendioxy, -CON(R₂)(R₂), -N(R₂)CON(R₂)(R₂), -N(R₂)(R₂), -N(R₂)SO₂-A₃, -N(R₂)-Acyl oder Acyloxy, substituiert sein kann, und worin jeder aliphatische Kohlenwasserstoffteil oder Rest der Gruppen, Reste oder Gruppen, die zuvor genannt wurden, von 1-12 Kohlenstoffatome enthalten.

5. Färbende Verbindung gemäß Anspruch 1, worin das Metall Kupfer ist, Y jeweils ein durchschnittliches Molekulargewicht von etwa 200 bis etwa 1500 hat und jeder aliphatische Kohlenwasserstoffteil oder -rest der Gruppen, Reste oder Substituenten von 1-12 Kohlenstoffatomen enthält.

6. Färbende Verbindung gemäß irgendeinem der Ansprüche 1 bis 5, worin die Chromophorkerne unsubstituiert sind.

7. Färbende Verbindung gemäß irgendeinem der Ansprüche 1 bis 6, worin Y terminiert wird durch die Gruppe der Formel: 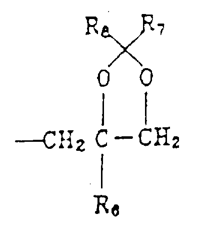 worin R₆, R₇ und R₈ jeweils ausgewählt sind aus Wasserstoff, Alkyl oder Aryl.

8. Färbende Verbindung gemäß irgendeinem der Ansprüche 1 bis 7, worin der gesamte Prozentanteil aller Verknüpfungsgruppen der gesamten -(RO)-Einheiten in Y von 0 bis etwa 10% ist.

9. Färbende Verbindung gemäß irgendeinem der Ansprüche 1 bis 8, worin R₂ oder R₃ jeweils Wasserstoff ist.

10. Färbende Verbindung gemäß irgendeinem der Ansprüche 1 bis 9, worin R gleich -CH₂CH₂-, -CH(CH₃)CH₂-, CH(C₂H₅)CH₂ oder Mischungen davon ist.

11. Färbende Verbindung gemäß irgendeinem der Ansprüche 1 bis 6 oder 8 bis 10, worin Y ausgewählt ist aus jenen der Formel: -2PO/14EO-Me; -2PO/7EO-Me; -2PO/10EO-Me; 2PO/14EO-Me; -3PO/6EO-CH(CH₃)CH₂C(OH)(CH₃)₂; -4PO-CH₂CH(OH)CH₂OH und

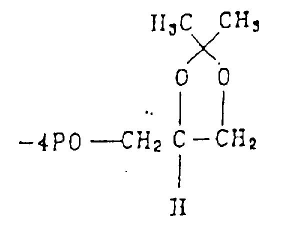

12. Färbende Verbindung gemäß irgendeinem der Ansprüche 1 bis 11, worin das Chromophor ein unsubstituiertes Phthalocyanin von Cu, Ni oder Co ist; R₂ ist Wasserstoff; und Y wird durch eine Gruppe, ausgewählt aus Alkyl, Mono- oder Dihydroxyalkyl oder cyclisches Dioxyalkylen, terminiert.

13. Färbende Verbindung gemäß irgendeinem der Ansprüche 1 bis 12, worin -D-Z- ausgewählt ist aus -O-Arylen-, -S-Arylen-, -SO₂-Arylen-, -N(R₃)-Arylen-, -N(SO₂R₄)-Arylen- oder -O-Alkylen-O-Arylen-.

14. Färbende Verbindung gemäß irgendeinem der Ansprüche 1 bis 12, worin -D-Z- eine kovalente Bindung ist.

15. Zusammensetzung aus polymerem oder harzartigem Material, enthaltend von etwa 0,0001 bis etwa 10,0 Gew.-% von einer oder einer Mischung beliebiger der färbenden Verbindungen, wie in irgendeinem der Ansprüche 1 bis 14 angegeben.

16. Zusammensetzung gemäß Anspruch 15, worin die färbende Verbindung oder die Mischung der färbenden Verbindungen von etwa 0,001 bis etwa 3,0 Gew.-% der Zusammensetzung umfaßt.

17. Zusammensetzung gemäß Anspruch 15 und 16, worin das harzartige Material thermoplastisch ist.

18. Zusammensetzung gemäß Anspruch 15 und 16, worin das harzartige Material wärmehärtbar ist.

19. Zusammensetzung nach irgendeinem der Ansprüche 15 bis 18, worin das Polymere oder harzartige Material Polyurethan ist.

20. Zusammensetzung nach irgendeinem der Ansprüche 15 bis 17, worin das thermoplastische Harz aus Polyethylen, linearem Polyethylen niedriger Dichte, Polypropylen, Polybutylen, Copolymeren aus Ethylen, Propylen und/oder Butylen, Polyvinylchlorid, Polyvinylidenchlorid, Celluloseharzen, Celluloseacetat, Celluloseacetatbutyrat und Celluloseacetatpropionat, Arylharzen wie Polymethylmethacrylat, Styrolacrylnitril, Polystyrol, Polycarbonat und Acrylnitril-Butadien-Styrol (mithin ABS), Polyamiden wie Nylon 6 und Nylon 66 und Polyestern wie Polyethylenterephthalat, insbesondere Glykol-modifiziertem Polyethylenterphthalat und Polybutylenterephthalat gewählt wird.

21. Zusammensetzung gemäß Anspruch 20, worin das Harzmaterial einen Polyester beinhaltet.

22. Geformte Struktur, umfassend eine feste Zusammensetzung gemäß irgendeinem der Ansprüche 15 bis 21.

23. Verfahren zur Herstellung einer färbenden Verbindung gemäß Anspruch 2, umfassend die Umsetzung eines Metallphthalocyanins der Formel A₁-(SO₂X)₁₋₄ bei einer Temperatur von etwa 0°C bis etwa 100°C mit einer wenigstens stöchiometrischen Menge eines Amins der Formel HN(R₂)Y, worin X ausgewählt ist aus Cl, F, Br, I oder Alkoxy mit 1-4 Kohlenstoffatomen.

24. Verfahren zur Herstellung einer färbenden Verbindung gemäß Anspruch 3, umfassend die Umsetzung eines Metallphthalocyanins der Formel A₂-(D-Z-SO₂X)₁₋₁₆ bei einer Temperatur von etwa 0°C bis etwa 100°C mit einer wenigstens stöchiometrischen Menge eines Amins der Formel HN(R₂)Y, worin X ausgewählt ist aus Cl, F, Br, I oder Alkoxy mit 1-4 Kohlenstoffatomen.

## Revendications

1. Colorant de formule: 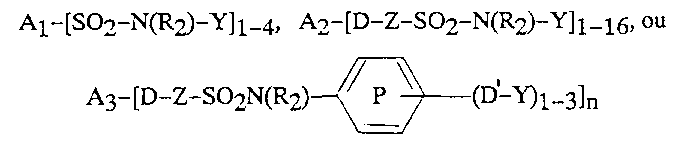 dans laquelle R₂ est choisi parmi H et les groupes alkyles, cycloalkyles, aryles et Y substitués ou non ; A₁, A₂ et A₃ sont chacun un chromophore métallophtalocyanine non ionique qui peut être substitué ou non ; Z est un fragment arylène ; chaque D ou D' est choisi parmi une liaison covalente ou un groupe de liaison consistant en ou contenant au moins un des restes -O-, -S-, -N(R₃)- ou -N(SO₂R₄)- comme fragment de liaison, où R₄ est un groupe alkyle, cycloaliphatique ou aryle substitué ou non,et R₃ est R₄ ou un atome d'hydrogène ; ou D, combiné avec Z, peut aussi être une liaison covalente ; le cycle P peut comporter ou non des substituants en plus des fragments -(D'-Y); Y est un fragment poly(oxyalkylène) ayant un poids moléculaire moyen d'environ 150 à environ 10 000 et constitué d'au moins environ 50 mol % de motifs monomères ou d'un mélange de ceux-ci de formule (-RO-) dans laquelle chaque R est un groupe alkylène à chaîne droite ou ramifiée en C₂-C₄ substitué ou non, ou des mélanges de ceux-ci, et contenant plus de trois motifs -RO-, au moins un groupe Y étant terminé par un groupe choisi parmi les groupes alkyles, aryles, acyles, alcoxyalkyles, acyloxyalkyles et 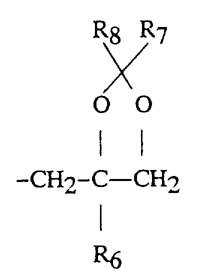 où chacun des groupes R₆, R₇ et R₈ peut être indépendamment un atome d'hydrogène ou un groupe alkyle ou aryle ; et où chaque fragment ou portion hydrocarboné aliphatique des groupes, fragments ou substituants cités ci-dessus contient de 1 à 20 atomes de carbone et où n est un nombre de 1 à 16, sauf que lorsque -D-Z- est une liaison covalente, n est un nombre de 1 à 4.

2. Colorant répondant à la formule A₁-[SO₂-N(R₂)-Y]₁₋₄ dans laquelle :
R₂ est choisi parmi un atome d'hydrogène et les groupes alkyles, cycloalkyles, aryles et Y ;
A₁ est un chromophore métallophtalocyanine non ionique qui peut être substitué par 1 à 8 substituants choisis parmi les atomes d'halogènes et les groupes alkyles, alcoxy, alkylthio et aryloxy;
Y est un fragment poly(oxyalkylène) constitué de plus de 3 motifs monomères ou d'un mélange de ceux-ci, de formule (-RO-) dans laquelle chaque R est un groupe alkylène à chaîne droite ou ramifiée en C₂-C₄, substitué ou non ou des mélanges de ceux-ci, jusqu'à environ 20 mol % desdits motifs monomères pouvant être reliés par un ou plusieurs groupes de liaison choisis parmi les groupes alkylèneoxy, arylèneoxy, alkylènedioxy, alkylènetrioxy, -N(R₃)- et -N(R₂)CON(R₂)-; où chaque R₃ est choisi parmi R₂ et -SO₂-A₁ et où Y peut comporter comme terminaison ou comme substituants en chaîne latérale 1 à 3 groupes ou fragments choisis parmi les groupes alkyles, cycloalkyles, acyles et aryles ; et où l'un quelconque des groupes, fragments ou substituants hydrocarbonés cités ci-dessus peut lui-même avoir jusqu'à 4 substituants choisis parmi les atomes d'halogènes et les groupes alkyles, mercapto, alkylthio, arylthio, aryles, cycloalkyles, alcoxycarbonyles, hydroxyles, alcoxy, alkylènedioxy, -N(R₂)CO(R₂)(R₂), -N(R₂)SO₂-A, -N(R₂)-acyles et acyloxy.

3. Colorant selon la revendication 1, dans lequel A₂ est un chromophore métallophtalocyanine non ionique qui peut être substitué par 1 à 12 substituants choisis parmi les atomes d'halogènes et les groupes alkyles, alcoxy, alkylthio et aryloxy ; Y est un fragment poly(oxyalkylène) constitué de plus de trois motifs monomères de formule (-RO-) dans laquelle chaque R est un groupe alkylène à chaîne droite ou ramifiée en C₂-C₄ ou des mélanges de ceux-ci, jusqu'à environ 20 mol % desdits motifs monomères pouvant être reliés par un ou plusieurs groupes de liaison choisis parmi les groupes alkylèneoxy, arylèneoxy, alkylènedioxy, alkylènetrioxy, -N(R₅)- et -N(R₂)CON(R₂)- ; où chaque R₅ est choisi parmi R₂ et un groupe -SO₂-A₂ et où Y peut être terminé par l'hydrogène ou comporter comme terminaison ou comme substituants en chaîne latérale 1 à 3 groupes ou fragments choisis parmi les groupes alkyles, cycloalkyles, acyles et aryles ; où l'un quelconque des groupes, fragments ou substituants hydrocarbonés cités ci-dessus peut avoir jusqu'à 4 substituants choisis parmi les atomes d'halogènes et les groupes alkyles, aryles, aryloxy, alcoxyalkyles, aryloxyalkyles, alcoxycarbonyles, hydroxyles, alcoxy, alkylènedioxy, -CON(R₂)(R₂), -N(R₂)CON(R₂)(R₂) -N(R₂)(R₂), -N(R₂)SO₂-A₂, -N(R₂)-acyles et acyloxy ; et où chaque portion ou fragment hydrocarboné aliphatique des groupes, fragments ou substituants cités ci-dessus contient de 1 à 12 atomes de carbone.

4. Colorant selon la revendication 1, dans lequel A₃ est un chromophore métallophtalocyanine non ionique qui peut être substitué par 1 à 12 substituants choisis parmi les atomes d'halogène et les groupes alkyles, alcoxy, alkylthio et aryloxy ; Y est un fragment poly(oxyalkylène) constitué de plus de trois motifs monomères de formule (-RO-) dans laquelle chaque R est un groupe alkylène à chaîne droite ou ramifiée en C₂-C₄ ou des mélanges de ceux-ci, jusqu'à environ 20 mol % desdits motifs monomères pouvant être reliés par un ou plusieurs groupes de liaison choisis parmi les groupes alkylèneoxy, arylèneoxy, alkylènedioxy, alkylènetrioxy, -N(R₅)- ou -N(R₂)CON(R₂); où chaque R₅ est choisi parmi R₂ et -SO₂A₃ et où Y peut être terminé par l'hydrogène ou comporter comme terminaison ou comme substituants à chaîne latérale 1 à 3 groupes ou fragments choisis parmi les groupes alkyles, cycloalkyles, acyles et aryles ; ou l'un quelconque des groupes, fragments ou substituants hydrocarbonés cités ci-dessus peut lui-même avoir jusqu'à 4 substituants choisis parmi les atomes d'halogènes et les groupes alkyles, aryles, aryloxy, alcoxyalkyles, aryloxyalkyles, alcoxycarbonyles, hydroxyles, alcoxy, alkylènedioxy, -CON(R₂)(R₂), -N(R₂)CON(R₂)(R₂), -N(R₂)(R₂), -N(R₂)SO₂-A₃, -N(R₂)-acyles et acyloxy ; et où chaque portion ou fragment hydrocarboné aliphatique des groupes, fragments ou substituants cités ci-dessus contient de 1 à 12 atomes de carbone.

5. Colorant selon la revendication 1, dans lequel le métal est le cuivre, chaque Y a un poids moléculaire moyen d'environ 200 à environ 1 500 et chaque portion ou fragment hydrocarboné aliphatique desdits groupes, fragments ou substituants contient de 1 à 12 atomes de carbone.

6. Colorant selon l'une quelconque des revendications 1 à 5, dans lequel les noyaux chromophores ne sont pas substitués.

7. Colorant selon l'une quelconque des revendications 1 à 6, dans lequel Y est terminé par un groupe de formule : 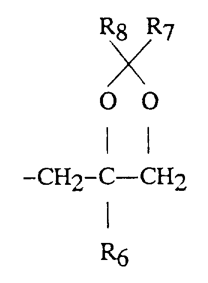 dans laquelle R₆, R₇ et R₈ sont choisis chacun parmi un atome d'hydrogène, un groupe alkyle et un groupe aryle.

8. Colorant selon l'une quelconque des revendications 1 à 7, dans lequel le pourcentage molaire total de tous les groupes de liaison pour la totalité des motifs -(RO)- dans Y est de 0 à environ 10 %.

9. Colorant selon l'une quelconque des revendications 1 à 8, dans lequel R₂ et R₃ sont chacun un atome d'hydrogène.

10. Colorant selon l'une quelconque des revendications 1 à 9, dans lequel R est -CH₂CH₂-, -CH(CH₃)CH₂-, -CH(C₂H₅)CH₂- ou des mélanges de ceux-ci.

11. Colorant selon l'une quelconque des revendications 1 à 6 ou 8 à 10, dans lequel Y est choisi parmi les groupes de formules : -2PO/14EO-Me ; -2PO/7EO-Me ; -2PO/10EO-Me ; 2PO/14EO-Me ; -3PO/6EO-CH(CH₃)CH₂C(OH)(CH₃)₂; -4PO-CH₂CH(OH)CH₂OH; et

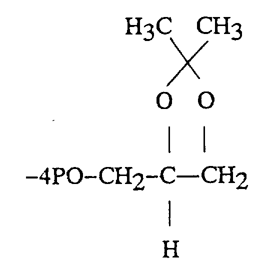

12. Colorant selon l'une quelconque des revendications 1 à 11, dans lequel le chromophore est une phtalocyanine non substituée de Cu, Ni ou Co; R₂ est un atome d'hydrogène ; et Y possède une terminaison choisie parmi les groupes alkyles, les groupes mono- ou dihydroxyalkyles et les groupes dioxyalkylènes cycliques.

13. Colorant selon l'une quelconque des revendications 1 à 12, dans lequel -D-Z-est choisi parmi les groupes -O-arylène-, -S-arylène-, -SO₂-arylène, -N(R₃)-arylène-, -N(SO₂R₄)-arylène- et -O-alkylène-O-arylène-.

14. Colorant selon l'une quelconque des revendications 1 à 12, dans lequel -D-Z- est une liaison covalente.

15. Composition de produit polymère ou résineux contenant d'environ 0,0001 à environ 10,0 % en poids d'un colorant ou mélange de l'un quelconque des colorants tels que définis dans l'une quelconque des revendications 1 à 14.

16. Composition selon la revendication 15, dans laquelle le colorant ou mélange de colorants représente d'environ 0,001 à environ 3,0 % en poids de la composition.

17. Composition selon la revendication 15 ou 16, dans laquelle ledit produit résineux est thermoplastique.

18. Composition selon la revendication 15 ou 16, dans laquelle ledit produit résineux est thermodurcissable.

19. Composition selon l'une quelconque des revendications 15 à 18, dans laquelle ledit polymère ou produit résineux est du polyuréthanne.

20. Composition selon l'une quelconque des revendications 15 à 17, dans laquelle ladite résine thermoplastique est choisie parmi le polyéthylène, le polyéthylène basse densité linéaire, le polypropylène, le polybutylène, les copolymères d'éthylène, de propylène et/ou de butylène, le chlorure de polyvinyle, le chlorure de polyvinylidène, les résines cellulosiques, l'acétate de cellulose, l'acétate butyrate de cellulose, l'acétate propionate de cellulose, les résines acryliques telles que le poly(méthacrylate de méthyle), le styrène acrylonitrile, le polystyrène, les polycarbonates et l'acrylonitrile butadiène-styrène (dénommé ici ABS), les polyamides tels que Nylon 6 et Nylon 66 et les polyesters tels que le poly(téréphtalate d'éthylène), spécialement le poly(téréphtalate d'éthylène) et le poly(téréphtalate de butylène) modifiés par le glycol.

21. Composition selon la revendication 20, dans lequel ladite résine comprend un polyester.

22. Structure constituée d'une composition solide selon l'une quelconque des revendications 15 à 21.

23. Procédé de préparation d'un colorant selon la revendication 2, comprenant la réaction, à une température d'environ 0°C à environ 100°C, d'une métallophtalocyanine de formule A₁-(SO₂X)₁₋₄ avec au moins une quantité stoechiométrique d'une amine de formule HN(R₂)Y, où X est choisi parmi Cl, F, Br, I et les groupes alcoxy en C₁-C₄.

24. Procédé de préparation d'un colorant selon la revendication 3, comprenant la réaction, à une température d'environ 0°C à environ 100°C, d'une métallophtalocyanine de formule A₂-(D-Z-SO₂X)₁₋₁₆ avec au moins une quantité stoechiométrique d'une amine de formule HN(R₂)Y, où X est choisi parmi Cl, F, Br, I et les groupes alcoxy en C₁-C₄.
